# EUROPEAN PATENT APPLICATION

(11) **EP 4 838 936 A1**
(43) Date of publication of application: **11.11.2026**
(21) Application number: 26176670.3
(22) Date of filing: 05.05.2026
(51) Int. Cl.: H04W 24/02, H04W 84/12

(54) **SWITCHING OPERATION IN NON-PRIMARY CHANNEL ACCESS (NPCA)**

(30) Priority: 05.05.2025 US 202563799954 P
(71) Applicant: Comcast Cable Communications, LLC, Philadelphia, PA 19103 (US)
(72) Inventor: KIM, Jeongki, Philadelphia, 19103 (US); LANANTE, Leonardo Alisasis, Philadelphia, 19103 (US); DINAN, Esmael Hejazi, Philadelphia, 19103 (US); ERKUCUK, Serhat, Philadelphia, 19103 (US); ZHANG, Jiayi, Philadelphia, 19103 (US); PEREZ-RAMIREZ, Javier, Philadelphia, 19103 (US)
(74) Representative: V.O.

(57) **Abstract**

A station may communicate with access points using data units. A station may be configured to recognize activity on a primary channel and to switch channels in response. If activity on a primary channel originates from another basic service set, for example, the station may be configured to redirect reception of the data to a non-primary channel access of the primary channel. If the station identifies data originating from an associated access point and on a channel including the primary channel, for example, the station may be configured to switch from the non-primary channel access of the primary channel to the channel including the primary channel.

## Description

### CROSS-REFERENCE TO RELATED APPLICATIONS

This application claims the benefit of U.S. Provisional Application No. 63/799,954, filed on May 5, 2025. The above-referenced application is hereby incorporated by reference in its entirety.

### BACKGROUND

Access points and stations are configured to communicate with each other. Data units are shared between the access points and stations. The data units include structures containing a preamble and a payload.

### SUMMARY

The following summary presents a simplified summary of certain features. The summary is not an extensive overview and is not intended to identify key or critical elements.

A data unit may be received by a station via a primary channel. The station may be configured to support a primary channel access mode and a non-primary channel access mode and to switch between them. The station may monitor the data unit to determine a service set of the data unit, where the data unit may originate from, and on what channel the data unit is being sent. The station may use this information as an indication to switch between the primary channel access mode and the non-primary channel access mode. The station may determine, for example, that a physical layer protocol data unit being received via the primary channel is an inter-basic service set and switch to the non-primary channel access mode in response. Similarly, the station may switch from the non-primary channel access mode to the primary channel access mode. The station may switch modes, for example, if the station determines that a second data unit is from an associated access point and on a channel comprising the primary channel.

These and other features and advantages are described in greater detail below.

### BRIEF DESCRIPTION OF THE DRAWINGS

Examples of several of the various embodiments of the present disclosure are described herein with reference to the drawings.
FIG. 1 shows example wireless communication networks.
FIG. 2 shows a block diagram showing example implementations of a station (STA) and an access point (AP).
FIG. 3 shows examples of a Physical Layer Protocol Data Unit (PPDU), such as a non-High Throughput (non-HT) PPDU.
FIG. 4 shows examples of a PPDU, such as a High Efficiency (HE) Single User (SU) PPDU.
FIG. 5 shows an example of a PPDU, such as an Extremely High Throughput (EHT) Multi-user (MU) PPDU.
FIG. 6 shows an example of an Ultra-High Reliability (UHR) Multi-user (MU) PPDU.
FIG. 7 shows an example universal signal (U-SIG) field.
FIG. 8 shows an example of a Medium Access Control (MAC) frame format.
FIG. 9 shows an example trigger frame.
FIG. 10 shows an example multi-user request to send a (MU-RTS) trigger frame.
FIG. 11 shows an example Common Info field.
FIG. 12 shows an example of a Request-to-Send (RTS)/Clear-to-Send (CTS) procedure.
FIG. 13 shows an example of an MU-RTS/CTS procedure.
FIG. 14 shows an example non-high throughput (non-HT) physical layer protocol data unit (PPDU) format.
FIG. 15 shows an example of non-primary channel access (NPCA) operation.
FIG. 16 shows an example of virtual and physical carrier sense (CS) functions associated with primary and secondary channels for NPCA operation and non-NPCA operation.
FIG. 17 shows an example of NPCA operation.
FIG. 18 shows an example of an issue that may arise in NPCA operation.
FIG. 19 shows an example of NPCA operation.
FIG. 20 shows an example of NPCA operation.
FIG. 21 shows an example of NPCA operation according to an embodiment.
FIG. 22 shows an example of NPCA operation.
FIG. 23 shows an example of NPCA operation.
FIG. 24 shows an example for a STA to switch channels.
FIG. 25 shows an example for an AP to switch channels.
FIG. 26 shows an example for a STA to switch channels.
FIG. 27 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

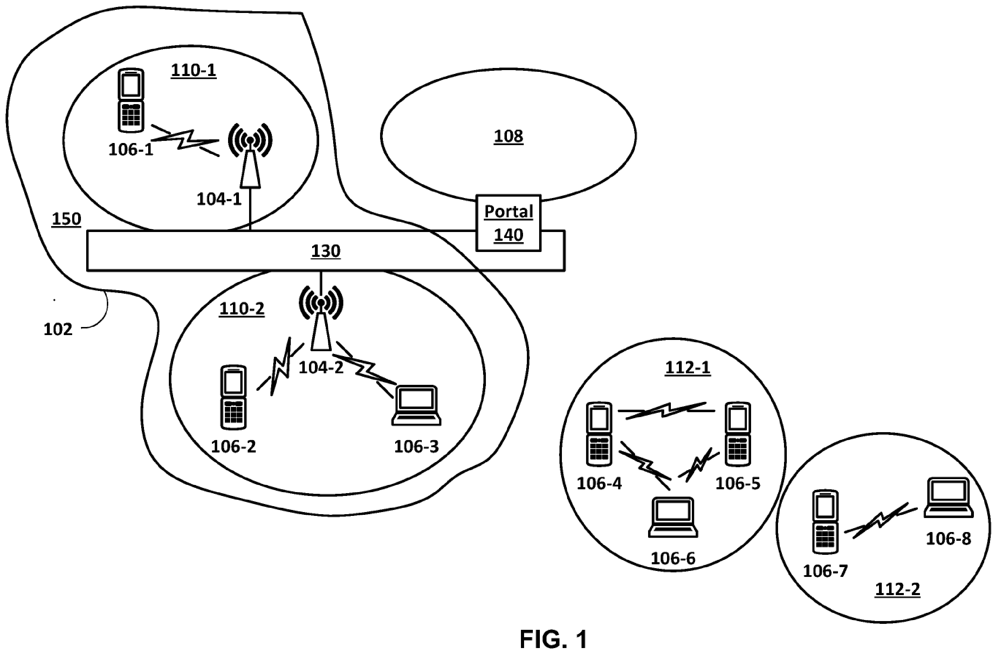

FIG. 1 shows example wireless communication network 100. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station (STA)) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The Aps included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks shown in FIG. 1 may further include one or more ad-hoc networks or independent BSSs (IBSSs). An ad-hoc network or IBSS may be a network that includes a plurality of STAs that are within communication range of each other. The plurality of STAs may be configured so that the plurality of STAs may communicate with each other using direct peer-to-peer communication (e.g., not via an AP).

For example, STAs 106-4, 106-5, and 106-6, in FIG. 1, may be configured to form a first IBSS 112-1. STAs 106-7 and 106-8 may be configured to form a second IBSS 112-2. An IBSS may not include a centralized management entity. The IBSS may not include a centralized management entity, for example, if an IBSS does not include an AP. STAs within an IBSS may be managed in a distributed manner. STAs forming an IBSS may be fixed or mobile.

A STA as a predetermined functional medium may include a medium access control (MAC) layer that complies with an IEEE 802.11 standard. A physical layer interface for a radio medium may be used among the Aps and the non-AP stations (STAs). The STA may also be referred to using various other terms, including mobile terminal, wireless device, wireless transmit/receive unit (WTRU), user equipment (UE), mobile station (MS), mobile subscriber unit, or user. For example, the term "user" may be used to denote a STA participating in uplink Multi-user Multiple Input, Multiple Output (MU MIMO) and/or uplink Orthogonal Frequency Division Multiple Access (OFDMA) transmission.

A physical layer (PHY) protocol data unit (PPDU) may be a composite structure that includes a PHY preamble and a payload in the form of a PLCP service data unit (PSDU). For example, the PSDU may include a PHY Convergence Protocol (PLCP) preamble and header and/or one or more MAC protocol data units (MPDUs). The information provided in the PHY preamble may be used by a receiving device to decode the subsequent data in the PSDU. The preamble fields may be duplicated and sent (e.g., transmitted) in each of the multiple component channels, in instances in which PPDUs are sent (e.g., transmitted) over a bonded channel (channel formed through channel bonding). The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The information provided in, and the format and coding of the non-legacy portion of the preamble may be based on the particular IEEE 802.11 protocol to be used to send (e.g., transmit) the payload.

A frequency band may include one or more sub-bands or frequency channels. For example, PPDUs conforming to the IEEE 802.11n, 802.11ac, 802.11ax and/or 802.11be standard amendments may be sent (e.g., transmitted) over the 2.4 GHz, 5 GHz, and/or 6 GHz bands, each of which may be divided into multiple 20 MHz channels. The PPDUs may be sent (e.g., transmitted) over a physical channel having a minimum bandwidth of 20 MHz. Larger channels may be formed through channel bonding. PPDUs may be sent (e.g., transmitted) over physical channels having bandwidths of 40 MHz, 80 MHz, 160 MHz, or 520 MHz by bonding together multiple 20 MHz channels.

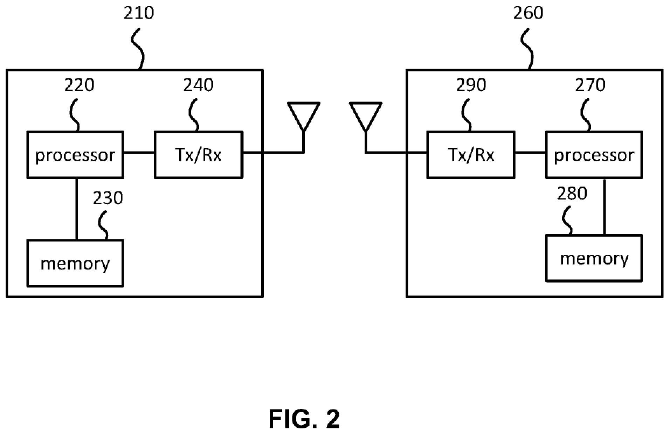

FIG. 2 is a block diagram 200 showing example implementations of a STA 210 and an AP 260. STA 210, as shown in FIG. 2, may include at least one processor 220, a memory 230, and at least one transceiver 240. AP 260 may include at least one processor 270, a memory 280, and at least one transceiver 290. Processor 220/270 may be operatively connected to memory 230/280 and/or to transceiver 240/290.

Processor 220/270 may implement functions of the PHY layer, the MAC layer, and/or the logical link control (LLC) layer of the corresponding device (STA 210 or AP 260). Processor 220/270 may include one or more processors and/or one or more controllers. The one or more processors and/or one or more controllers may comprise, for example, a general-purpose processor, a digital signal processor (DSP), a microcontroller, an application specific integrated circuit (ASIC), a field programmable gate array (FPGA), a logic circuit, or a chipset.

Memory 230/280 may include a read-only memory (ROM), a random-access memory (RAM), a flash memory, a memory card, a storage medium, and/or other storage unit. Memory 230/280 may comprise one or more non-transitory computer readable mediums. Memory 230/280 may store computer program instructions or code that may be executed by processor 220/270 to carry out one or more of the operations discussed in the present application. Memory 230/280 may be implemented (or positioned) within processor 220/270 or external to processor 220/270. Memory 230/280 may be operatively connected to processor 220/270 via various means known in the art.

Transceiver 240/290 may be configured to send/transmit/receive radio signals. The transceiver 240/290 may implement a PHY layer of the corresponding device (STA 210 or AP 260). STA 210 and/or AP 260 may be a multi-link device (MLD), that is a device capable of operating over multiple links as defined by the IEEE 802.11 standard. STA 210 and/or AP 260 may each implement multiple PHY layers. The multiple PHY layers may be implemented using one or more of transceivers 240/290.

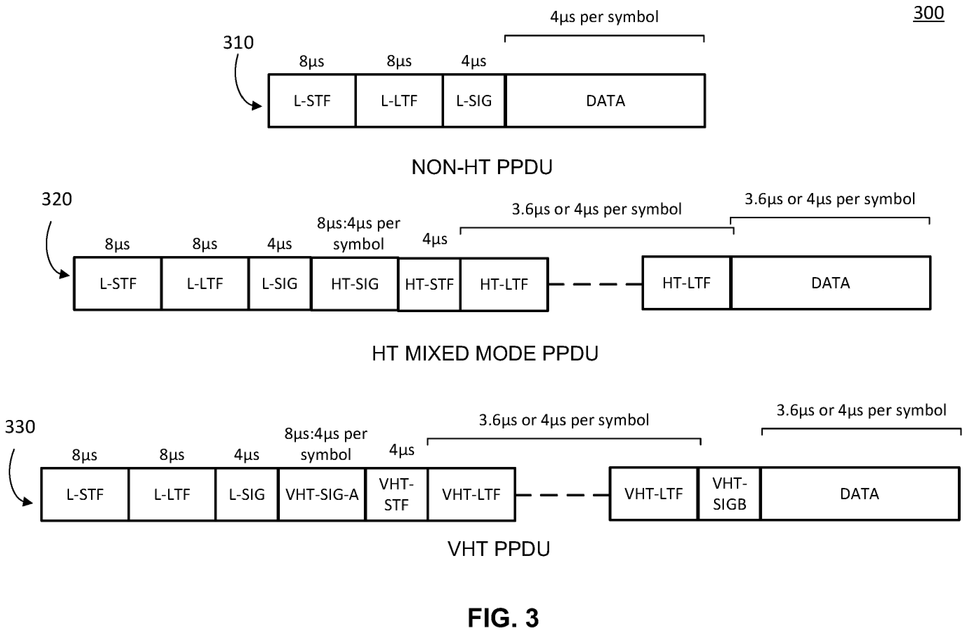

FIG. 3 shows examples of a PPDU, such as a non-High Throughput (non-HT) PPDU 310, a High Throughput (HT) mixed (mode) PPDU 320, and a Very High Throughput (VHT) PPDU 330.

Non-HT PPDU 310 may be used by STAs conforming to one or more standards (e.g., the IEEE 802.11a standard amendment). As shown in FIG. 3, non-HT PPDU 310 may include a non-HT Short Training field (L-STF), a non-HT Long Training field (L-LTF), a non-HT Signal field (L-SIG), and a Data field. The L-STF, L-LTF, and L-SIG fields may form a preamble (e.g., a 20 µs preamble) of non-HT PPDU 310.

The L-STF may be used by a receiver of non-HT PPDU 310 to synchronize with the carrier frequency and frame timing of a transmitter of non-HT PPDU 310 and to adjust the receiver signal gain. The L-LTF may be used by the receiver of non-HT PPDU 310 to determine (e.g., estimate) channel coefficients, for example, to equalize the channel response (e.g., amplitude and phase distortion) in both the L-SIG field and the Data field of non-HT PPDU 310.

The L-SIG may contain parameters needed to demodulate the Data field. The Data field may contain a payload of non-HT PPDU 310. The L-SIG may be processed to generate demodulation parameters of the Data field. For example, the L-SIG may be equalized using the channel coefficients determined/estimated using the L-LTF and/or demodulated to obtain the demodulation parameters of the Data field. The Data field may comprise one or more symbols each having a duration of 4 µs (or any other value). A part of the duration may carry symbol information and a remaining part of the duration may carry a Guard Interval (GI). For example, 3.2 µs may carry symbol information and 0.8 µs may carry a GI, for example, if the duration is 4 µs.

For non-HT PPDUs, the supported (e.g., only supported) bandwidth may be 20 MHz, which may be divided into 64 subcarriers. As such, non-HT PPDU 310 may be encoded using a subcarrier spacing of 20MHz/64 or 312.5kHz.

HT mixed mode PPDU 320 may be used by STAs conforming to one or more standards (e.g., the IEEE 802.11n standard amendment). HT mixed mode PPDU 320 may support MIMO and enhance spectral efficiency. For example, HT mixed mode PPDU 320 may support MIMO to up to 4 spatial streams, which may enhance spectral efficiency four folds. HT mixed mode PPDU 320 may have a minimum preamble duration. The minimum preamble duration may increase, for example, based on the number/quantity of spatial streams carried by the PPDU. For example, HT mixed mode PPDU 320 may have a minimum preamble duration of 35.6 µs (or any other value), which may increase depending on the number/quantity of spatial streams carried by the PPDU.

As shown in FIG. 3, HT mixed mode PPDU 320 may include an L-STF, an L-LTF, an L-SIG, an HT Signal field (HT-SIG), an HT Short Training field (HT-STF), one or more HT Long Training field (HT-LTF), and a Data field. The HT-LTF field and the Data field may comprise one or more symbols each having a duration of 3.6 µs or 4 µs (or any other values). A fixed length of duration may be used for carrying symbol information, for example, under different lengths of durations. The remaining length of duration may be used for carrying a GI. For example, for each symbol having a duration of 3.6 µs or 4 µs as described herein, 3.2 µs may carry symbol information while the remaining 0.4 µs or 0.8 µs may carry a GI. The 0.4 µs long GI may be called short GI while the 0.8 µs long GI may be called regular or normal GI.

For HT mixed mode PPDUs, two bandwidths, 20 MHz and 40 MHz, may be supported. A band may be divided into 64 subcarriers, for example, if/when the PPDU bandwidth is 20MHz. A band may be divided into 128 subcarriers, for example, if/when the PPDU bandwidth is 40 MHz. In both cases, a subcarrier spacing of 312.5 kHz may be maintained.

VHT PPDU 330 may be used by STAs conforming to the IEEE 802.11ac standard amendment. VHT PPDU 330 may support MIMO transmission and enhance spectral efficiency. For example, VHT PPDU 330 may support MIMO transmission to up to 8 spatial streams, which may enhance spectral efficiency eight folds. VHT PPDU 330 may have a minimum preamble duration. The minimum preamble duration may increase, for example, based on the number/quantity of spatial streams carried by VHT PPDU 330. For example, VHT PPDU 330 may have a minimum preamble duration of 39.6 µs, which may increase depending on the number/quantity of spatial streams carried by VHT PPDU 330.

As shown in FIG. 3, VHT PPDU 330 may include an L-STF, an L-LTF, an L-SIG, a VHT Signal A field (VHT-SIG-A), a VHT Short Training field (VHT-STF), one or more VHT Long Training field (VHT-LTF), a VHT Signal B field (VHT-SIG-B), and a Data field. The VHT-LTF field and the Data field of VHT PPDU 330 may comprise one or more symbols each having a duration of 3.6 µs or 4 µs (or any other value). Similar to HT mixed mode PPDU 320, for each symbol having a duration of 3.6 µs or 4 µs as described herein, 3.2 µs may carry symbol information while the remaining 0.4 µs or 0.8 µs may carry a GI. The 0.4 µs long GI may be called short GI while the 0.8µs long GI may be called regular or normal GI.

For VHT PPDUs, four bandwidths, 20 MHz, 40 MHz, 80 MHz, and 160 MHz, may be supported. The band may be divided into 64 subcarriers, for example, if/when the PPDU bandwidth is 20MHz. The band may be divided into 128 subcarriers, for example, if/when the PPDU bandwidth is 40 MHz. The band may be divided into 256 subcarriers, for example, if/when the PPDU bandwidth is 80MHz. The band may be divided into two 256-subcarrier 80MHz bands, for example, if/when the PPDU bandwidth is 160 MHz. In all cases, a subcarrier spacing of 312.5 kHz may be maintained.

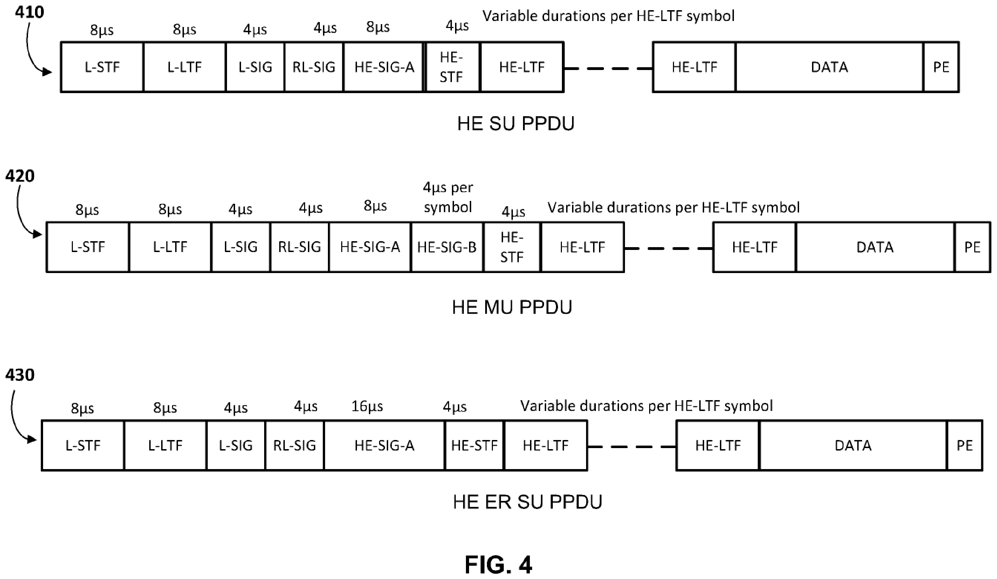

FIG. 4 shows examples of PPDU, such as a High Efficiency (HE) Single User (SU) PPDU 410, an HE Multi-User (MU) PPDU 420, and an HE Extended Range (ER) SU PPDU 430. HE SU PPDU 410, HE MU PPDU 420, and HE ER SU PPDU 430 may be used by STAs conforming to the IEEE 802.11ax standard amendment.

HE SU PPDU 410 may support higher spectral efficiency compared to VHT PPDU 330, for example, due to increased subcarrier spacing and/or higher order modulation support. HE SU PPDU 410 may have a minimum preamble duration of 44 µs (or any other value). As shown in FIG. 4, HE SU PPDU 410 may include an L-STF, an L-LTF, an L-SIG, a Repeated L-SIG field (RL-SIG), an HE Signal A field (HE-SIG-A), an HE Short Training field (HE-STF), one or more HE Long Training fields (HE-LTF), a Data field, and a Packet Extension (PE) field.

Similar to HE SU PPDU 410, HE MU PPDU 420 may support higher spectral efficiency compared to VHT PPDU 330. HE MU PPDU 420 may also support OFDMA. HE MU PPDU 420 may allow for payloads of multiple users to be multiplexed in the frequency domain in the Data field, for example, due to denser subcarrier spacing (as in HE SU PPDU 410). HE MU PPDU 420 may support multiplexing the payload of a plurality of (e.g., up to 9) users in a single band (e.g., 20 MHz band). HE MU PPDU 420 may have a minimum preamble duration of 47.2 µs (or any other value), which may increase depending on the number/quantity of spatial streams carried by HE MU PPDU 420.

As shown in FIG. 4, HE MU PPDU 420 may include an L-STF, an L-LTF, an L-SIG, an RL-SIG, an HE-SIG-A field, an HE Signal B field (HE-SIG-B), an HE-STF field, one or more HE-LTF fields, a Data field, and a PE field. HE MU PPDU 420 may further include HE-SIG-B compared to HE SU PPDU 410. HE-SIG-B may contain indications per STA of RU allocations. A STA may use the indications in HE-SIG-B to locate its payload in HE MU PPDU 420.

For HE SU PPDU 410 and/or HE MU PPDU 420, the GI portion (e.g., duration) of the HE-LTF field and the Data field may be one of 0.8 µs, 1.6 µs, and 3.2 µs. An AP or STA may use a suitable GI duration depending on the channel conditions or capability of the target STA or AP.

For both HE SU PPDU 410 and HE MU PPDU 420, the information portion of the HE-LTF may be one of 3.2 µs, 6.4 µs, or 12.8 µs. A subcarrier spacing of the HE-LTF may depend on the information portion (e.g., duration) of the HE-LTF. For example, a subcarrier spacing of the HE-LTF may be 312.5 kHz, for example, if the information potion is 3.2 µs. A subcarrier spacing of the HE-LTF may be 156.25 kHz, for example, if the information portion is 6.4 µs. A subcarrier spacing of the HE-LTF may be 78.125 kHz, for example, if the information portion is 12.8 µs. Unlike the HE-LTF, the information portion of the Data field for both HE SU PPDU 410 and HE MU PPDU 420 may be a fixed value (e.g., is always 12.8 µs). A subcarrier spacing of the Data field may be a fixed value corresponding to the information portion (e.g., duration thereof). For example, a subcarrier spacing of the Data field is always 78.125 kHz corresponding to the duration of the information portion being 12.8 µs. When/if a/an (e.g., 3.2 µs or 6.4 µs long) HE-LTF is used by a transmitting STA to transmit/send HE SU PPDU 410 or HE MU PPDU 420, a receiving STA may be required to interpolate the channel estimates to a subcarrier spacing (e.g., a resolution of 78.125 kHz) to match the subcarrier spacing of the Data field.

As shown in FIG. 4, HE ER SU PPDU 430 may include an L-STF, an L-LTF, an L-SIG, an RL-SIG, an HE-SIG-A field, an HE-STF field, one or more HE-LTF fields, a Data field, and a PE field. HE ER SU PPDU 430 may have an HE-SIG-A field that is duplicated in the time domain, for example, compared to HE SU PPDU 410. For example, the HE-SIG-A field of the HE ER SU PPDU 430 may be 16 µs long instead of 8 µs long as in HE SU PPDU 410. As such, both L-SIG (duplicated using RL-SIG) and HE-SIG-A may be sent in duplicates, which may allow a receiving STA to combine the two copies to increase the energy of the received signal. This increased energy may result in an extended range of reception and may increase transmission reliability between the transmitting STA and the receiving STA.

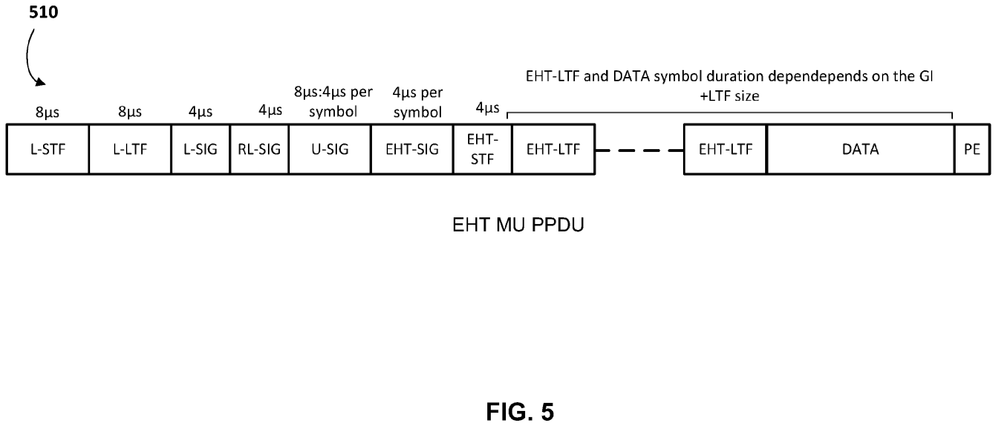

FIG. 5 shows an example of PPDU. More specifically, FIG. 5 shows an Extremely High Throughput (EHT) MU PPDU. EHT MU PPDU 510 may support OFDMA. For example, EHT MU PPDU 510 may support OFDMA up to a bandwidth of 320 MHz. EHT MU PPDU 510 may improve spectral efficiency, for example, due to support of a higher order modulation compared to other PPDUs (e.g., HE SU PPDU 410 and HE MU PPDU 420) while supporting the same number/quantity of spatial streams. EHT MU PPDU 510 may have a minimum preamble duration of 47.2 µs (or any other value), which may increase depending on the number/quantity of spatial streams carried by EHT MU PPDU 510.

As shown in FIG. 5, EHT MU PPDU 510 may include an L-STF, an L-LTF, an L-SIG, an RL-SIG, a Universal Signal field (U-SIG), an EHT Signal field (EHT-SIG), an EHT Short Training field (EHT-STF), one or more EHT Long Training fields (EHT-LTF), a Data field, and a PE field. EHT MU PPDU 510 may be used by a transmitting STA for both SU and MU transmissions, according to one or more standards, such as the IEEE 802.11be standard amendment and/or any earlier or later release and/or version.

The U-SIG may allow (e.g., ensure) forward compatibility of EHT MU PPDU 510. This may mean that any future PPDUs that are backward compatible to a standard such as IEEE 802.11be may contain the same U-SIG field and interpretation. For example, IEEE 802.11be STAs may be able to understand at least in part a PPDU developed in a future amendment. The EHT-SIG may contain indications per STA of resource unit (RU) allocations. A STA may use the indications in the EHT-SIG to locate payload in EHT MU PPDU 510.

The GI portion of the EHT-LTF and Data fields of EHT MU PPDU 510 may be one of: 0.8 µs, 1.6 µs, or 3.2 µs. An AP or STA may use a suitable GI duration depending on the channel conditions or capability of the target STA or AP.

The information portion of the EHT-LTF may be one of 3.2 µs, 6.4 µs, or 12.8 µs. Depending on the information portion duration, a subcarrier spacing of the EHT-LTF may be one of: 312.5 kHz if the information potion is 3.2 µs, 156.25 kHz if the information portion is 6.4 µs, or 78.125 kHz if the information portion is 12.8 µs. The information portion of the Data field of EHT MU PPDU 510 may be always 12.8 µs. A subcarrier spacing of the Data field may be always 78.125 kHz corresponding to the duration of the information portion being 12.8 µs. When/if a 3.2 µs long or a 6.4 µs long EHT-LTF is used by a transmitting STA to send (e.g., transmit) EHT MU PPDU 510, a receiving STA may be required to interpolate the channel estimates to a subcarrier spacing resolution of 78.125 kHz to match the Data field subcarrier spacing.

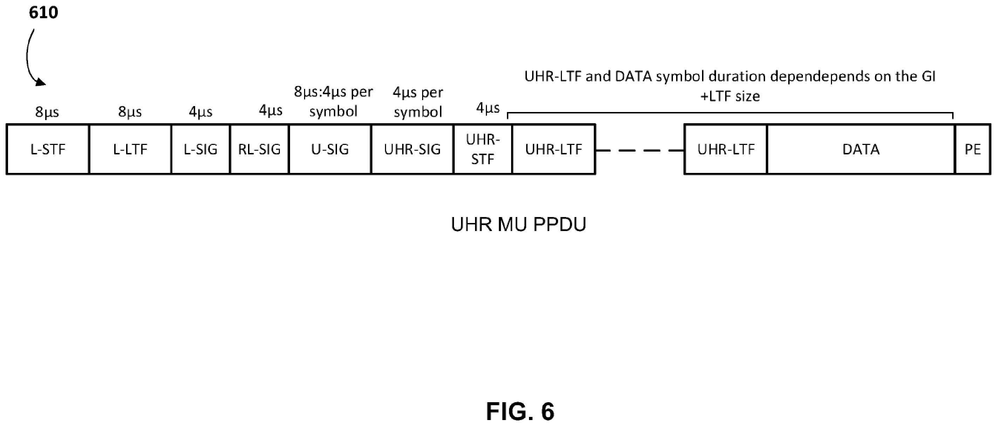

FIG. 6 shows an example of an Ultra-High Reliability (UHR) Multi-user (MU) PPDU. UHR MU PPDU 610 shares many similarities with EHT MU PPDU 510 as shown herein in FIG. 5. UHR MU PPDU 610 may support OFDMA up to a bandwidth of 320MHz. This may improve spectral efficiency, support the same number of spatial streams, and have a minimum preamble duration of 47.2 µs, which may increase depending on the number of spatial streams carried by UHR MU PPDU 610 due to the support of a higher order modulation compared to other PPDUs (e.g., HE SU PPDU 410 and HE MU PPDU 420).

As described herein with respect to FIG. 6, and again similar to EHT MU PPDU 510, shown herein in FIG. 5, UHR MU PPDU 610 may include an L-STF, an L-LTF, an L-SIG, an RL-SIG, and a U-SIG field. UHR MU PPDU 610 may include, for example, a UHR Signal field (UHR -SIG), a UHR Short Training Field (UHR -STF), one or more UHR Long Training fields (UHR -LTF), a Data field, and/or a PE field. An UHR MU PPDU 610 may be used by a sending (e.g., transmitting) STA, for example, for both SU and MU transmissions.

U-SIG is intended to ensure forward and backward compatibility with UHR MU PPDU 610. This means that any future PPDUs that are backward compatible to IEEE 802.11bn will contain the same U-SIG field and interpretation. Because of this, IEEE 802.11bn STAs will be able to understand, at least in part, a PPDU developed in a future amendment. Likewise, STAs developed prior to IEEE 802.11bn that are capable of sending (e.g., transmitting) and receiving PPDUs (e.g., EHT MU PPDUs) with a U-SIG field will be able to understand at least in part a UHR MU PPDU. The UHR-SIG may contain indications per STA of RU allocations. A STA may use the indications in the UHR-SIG to locate its payload in UHR MU PPDU 610.

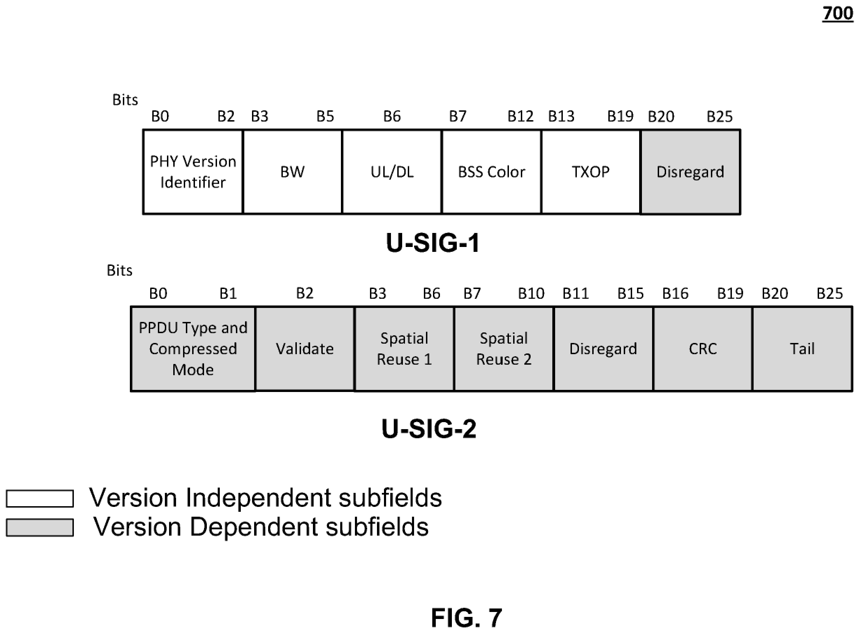

FIG. 7 shows an example universal signal (U-SIG) field. More specifically, FIG. 7 shows an example U-SIG field 700 which may be used in EHT trigger based (TB) PPDUs. The U-SIG field 700 may comprise two symbols (e.g., or any other number of symbols), for example, two symbols U-SIG-1 and U-SIG-2 as shown in FIG. 7. A symbol (e.g., each symbol, U-SIG-1 and/or U-SIG-2) may comprise (e.g., contain) 26 bits (e.g., or any other quantity of bits).

The U-SIG field 700 may enable (e.g., bring) forward compatibility to the EHT preamble. The U-SIG field 700 may be designed to enable (e.g., bring) forward compatibility to the EHT preamble, for example, via use (e.g., introduction) of version independent subfields. The version independent subfields may be located in the U-SIG-1 (e.g., only located in the U-SIG-1), for example, for the EHT PHY. The version independent subfields may be (e.g., comprise) subfields that are consistent in location and interpretation across various IEEE 802.11 PHY layers (e.g., version independent subfields). The version independent subfields may, for example, achieve improved (e.g., better) coexistence among IEEE 802.11 PHYs that are defined for 2.4, 5, and 6 GHz spectrum from the EHT PHY specification onwards.

The U-SIG field 700 may comprise version independent subfields and version dependent subfields, for example, as shown in FIG. 7. The version dependent subfields may follow the version independent subfields. The version independent subfields may be located from bit B0 to bit B19 of the first symbol U-SIG-1, for example, as shown in FIG. 7. The version dependent subfields may be located from bit B20 to bit B25 of the first symbol U-SIG-1 and over all the bits (e.g., from bit B0 to bit B25) of the second symbol U-SIG-2, for example, as shown in FIG. 7.

A PHY Version Identifier subfield may be (e.g., comprise) a subfield (e.g., one) of the version independent subfields in the U-SIG field 700. The PHY Version Identifier subfield may be located from bit B0 to bit B2 of the first symbol U-SIG-1, for example, as shown in FIG. 7. The PHY Version Identifier may, for example, enable (e.g., facilitate) autodetection for IEEE 802.11 PHY layers that are defined for the 2.4, 5, and 6 GHz spectrum from the EHT PHY specification onwards. The value of the PHY Version Identifier subfield may be used to identify the PHY version (e.g., the exact PHY version) of the EHT PPDU.

The version independent subfields may comprise one or more other version independent subfields. The one or more other version independent subfields may comprise a Bandwidth (BW) subfield indicating the PPDU bandwidth (e.g., located from bit B3 to bit B5 of U-SIG-1 in the U-SIG field 700). The one or more other version independent subfields may comprise an Uplink/Downlink (UL/DL) subfield indicating if (e.g., whether) the PPDU is an uplink or a downlink PPDU (e.g., located at bit B6 of U-SIG-1 in the U-SIG field 700). The one or more other version independent subfields may comprise a BSS Color subfield indicating the BSS Color of the PPDU (e.g., located from bit B7 to bit B12 of U-SIG-1 in the U-SIG field 700). The one or more other version independent subfields may comprise a TXOP subfield indicating a duration of a send (e.g., transmit) opportunity (TXOP) in which the PPDU is sent (e.g., transmitted) (e.g., located from bit B13 to bit B19 of U-SIG-1 in the U-SIG field 700).

The version dependent subfields in the U-SIG field 700 may be (e.g., comprise) subfields specific to an IEEE 802.11 PHY. The version dependent subfields may comprise a Disregard subfield, for example, in the U-SIG-1 (e.g., as shown from bit B20 to bit B25 of U-SIG-1 in FIG.7) and in the U-SIG-2 (e.g., as shown from bit B11 to bit B15 of U-SIG-2 in FIG. 7). The second symbol U-SIG-2 may comprise one or more other version dependent subfields, for example, a PPDU Type and Compressed Mode subfield (e.g., as shown from bit B0 to bit B1 of U-SIG-2 in FIG. 7), a Validate subfield (e.g., as shown at bit B2 of U-SIG-2 in FIG. 7), a Spatial Reuse 1 subfield (e.g., as shown from bit B3 to bit B6 of U-SIG-2 in FIG. 7), a Spatial Reuse 2 subfield (e.g., as shown from bit B7 to bit B10 of U-SIG-2 in FIG. 7), a Disregard subfield (e.g., as shown from bit B11 to bit B15 of U-SIG-2 in FIG. 7), a CRC subfield (e.g., as shown from bit B16 to bit B19 of U-SIG-2 in FIG. 7), and/or a Tail subfield (e.g., as shown from bit B20 to bit B25 of U-SIG-2 in FIG. 7).

Disregard subfields (e.g., the disregard subfield shown at bits B20 to B25 of U-SIG-1 and the disregard subfield shown at bits B11 to B15 of U-SIG-2 in the U-SIG field 700) may be used by a PHY version (e.g., a future PHY version). The disregard subfields may be intended for use by a future PHY Version, for example, that may not be supported by a receiving STA. A receiving STA may ignore (e.g., skip, disregard, etc.) the disregard subfields, for example, without impacting continued reception, by the receiving STA, of the PPDU. The reception at the STA may continue (e.g., continue as usual), for example, after or in response to skipping the disregard fields.

The PPDU Type and Compressed Mode subfield (e.g., bits B0 to B1 of U-SIG-2 shown in FIG. 7) may indicate a type of PPDU. The PPDU Type and Compressed Mode subfield may indicate the type of PPDU, for example, among a number of (e.g., quantity of) PPDU types (e.g., EHT MU PPDU or EHT TB PPDU) supported by a (e.g., particular) PHY version.

The Validate subfield (e.g., bit B2 of U-SIG-2 shown in FIG. 7) may indicate whether to continue or terminate the reception of a PPDU at a STA. A STA may terminate the reception of a PPDU, for example, if the STA encounters a PPDU where at least one field in the preamble that is identified as Validate for the STA is not set to the value specified for the field in that PHY version. The STA may wait, for example, until the PPDU's estimated duration expires. The STA may report information from the version independent subfields to the MAC layer, for example, based on the expiration of the PPDU's estimated duration. The STA may terminate the reception of the PPDU, for example, if at least one field in the preamble equals a value that is identified as Validate for the STA.

The Spatial Reuse 1 subfield (e.g., bits B3 to B6 of U-SIG-2 shown in FIG. 7) and the Spatial Reuse 2 subfield (e.g., bits B7 to B10 of U-SIG-2 shown in FIG. 7) may comprise (e.g., contain) parameters to support spatial reuse features defined in a PHY version (e.g., a specific PHY version). The Spatial Reuse subfields 1 and 2 may be version dependent subfields. The Spatial Reuse subfields 1 and 2 may be understood (e.g., only understood) by STAs supporting a specific PHY version (i.e., only STAs supporting a specific PHY version may be able to understand the bits comprised by the Spatial Reuse subfields 1 and 2).

The CRC subfield (e.g., bits B16 to B19 of U-SIG-2 shown in FIG. 7) may comprise (e.g., contain) a frame check sum. The CRC subfield may comprise a frame check sum, for example, to validate the correctness of U-SIG field contents.

The Tail subfield (e.g., bits B20 to B25 of U-SIG-2 shown in FIG. 7) may be set to 0. The Tail subfield may be used to terminate the trellis of a convolutional encoder used to encode U-SIG fields, for example, based on the Tail subfield being set to 0.

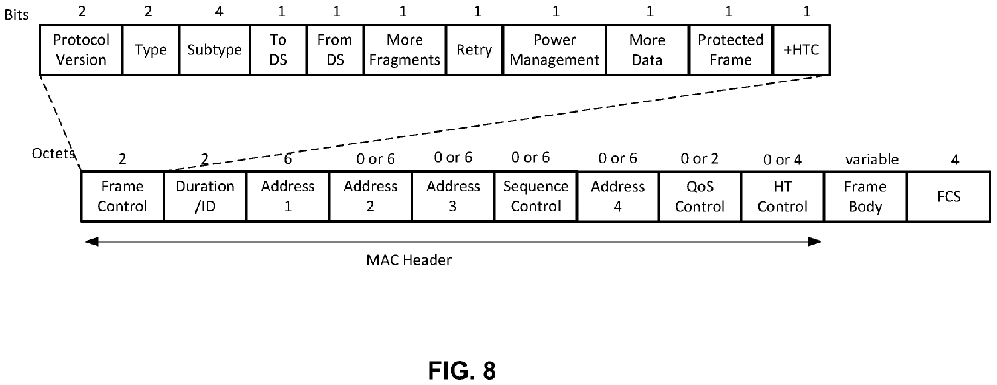

FIG. 8 shows an example format of a MAC frame. A STA in operation may construct a subset of MAC frames for transmission and may decode a subset of received MAC frames upon validation. The particular subsets of frames that a STA may construct and/or decode may be determined by the functions supported by the STA. A STA may validate a received MAC frame using the frame check sequence (FCS) contained in the frame and may interpret certain fields from the MAC headers of all frames.

As shown in FIG. 8, a MAC frame may include a MAC header, a variable length frame body, and a frame check sequence (FCS). The MAC header may include a frame control field, an optional duration/ID field, address fields, an optional sequence control field, an optional QoS control field, and an optional HT control field. The frame control field may include the following subfields: protocol version, type, subtype, "To DS", "From DS", "More Fragments", retry, power management, "More Data", protected frame, and +HTC (high throughput control). The protocol version subfield may be invariant in size and placement across all revisions of the IEEE 802.11 standard. The value of the protocol version subfield may be 0 for MAC frames.

The type and subtype subfields together may identify the function of the MAC frame. There may be three frame types: control, data, and management. Each of the frame types may have several defined subtypes. Bits within the subtype subfield may be used to indicate a specific modification of the basic data frame (subtype 0). For example, in data frames, the most significant bit (MSB) of the subtype subfield, bit 7 (B7) of the frame control field, may be defined as the QoS subfield. A QoS data frame may be indicated, which is a data frame that contains a QoS control field in its MAC header, if the QoS subfield is set to 1. The second MSB of the subtype field, bit 6 (B6) of the frame control field, if set to 1 in data subtypes, indicates a data frame that contain no frame body field.

The "To DS" subfield may indicate whether a data frame is destined to the distribution system (DS). The "From DS" subfield may indicate whether a data frame originates from the DS.

The "More Fragments" subfield may be set to 1 in all data or management frames that have another fragment to follow the MAC service data unit (MSDU) or MAC management protocol data unit (MMPDU) carried by the MAC frame. The "More Fragments" subfield may be set to 0 in all other frames in which the "More Fragments" subfield is present.

The retry subfield may be set to 1 in any data or management frame that is a retransmission of an earlier frame. It may be set to 0 in all other frames in which the retry subfield is present. A receiving STA may use this indication to aid it in the process of eliminating duplicate frames. These rules may not apply for frames sent by a STA under a block agreement. The power management subfield may be used to indicate the power management mode of a STA.

The "More Data" subfield may indicate to a STA in power save (PS) mode that bufferable units (BUs) are buffered for that STA at the AP. The "More Data" subfield may be valid in individually addressed data or management frames sent (e.g., transmitted) by an AP to a STA in PS mode. The "More Data" subfield may be set to 1 to indicate that at least one additional buffered BU is present for the STA.

The protected frame subfield may be set to 1 if the frame body field contains information that has been processed by a cryptographic encapsulation algorithm. The +HTC subfield may indicate that the MAC frame contains an HT control field.

The duration/ID field of the MAC header may indicate various contents depending on the frame type and subtype and the QoS capabilities of the sending STA. For example, the duration/ID field, in control frames of the power save poll (PS-Poll) subtype, may carry an association identifier (AID) of the STA that sent (e.g., transmitted) the frame in the 14 least significant bits (LSB), with the 2 most significant bits (MSB) set to 1. The duration/ID field, in other frames sent by STAs, may contain a duration value (in microseconds) which is used by a recipient to update a network allocation vector (NAV). The NAV may be a counter that indicates to a STA an amount of time during which the STA must defer from accessing the shared medium.

Up to four address fields may be present in the MAC frame format. The address fields may be used to indicate the basic service set identifier (BSSID), source address (SA), destination address (DA), transmitting address (TA), and receiving address (RA). Certain frames may not contain some of the address fields. Certain address field usage may be specified by the relative position of the address field (1-4) within the MAC header, independent of the type of address present in that field. The address 1 field may identify the intended receiver(s) of the frame, and the address 2 field, where present, may identify the transmitter of the frame.

The sequence control field may include two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information may vary by frame type, frame subtype, and type of transmitting STA. The QoS control field may be present in all data frames in which the QoS subfield of the subtype subfield is equal to 1.

The HT control field may be present in QoS data, QoS null, and management frames as determined by the +HTC subfield of the frame control field. The frame body field may be a variable length field that contains information specific to individual frame types and subtypes. The frame body may include one or more MSDUs or MMPDUs. The minimum length of the frame body may be 0 octets.

The FCS field may contain a 32-bit Cyclic Redundancy Check (CRC) code. The FCS field value may be calculated over all of the fields of the MAC header and the frame body field.

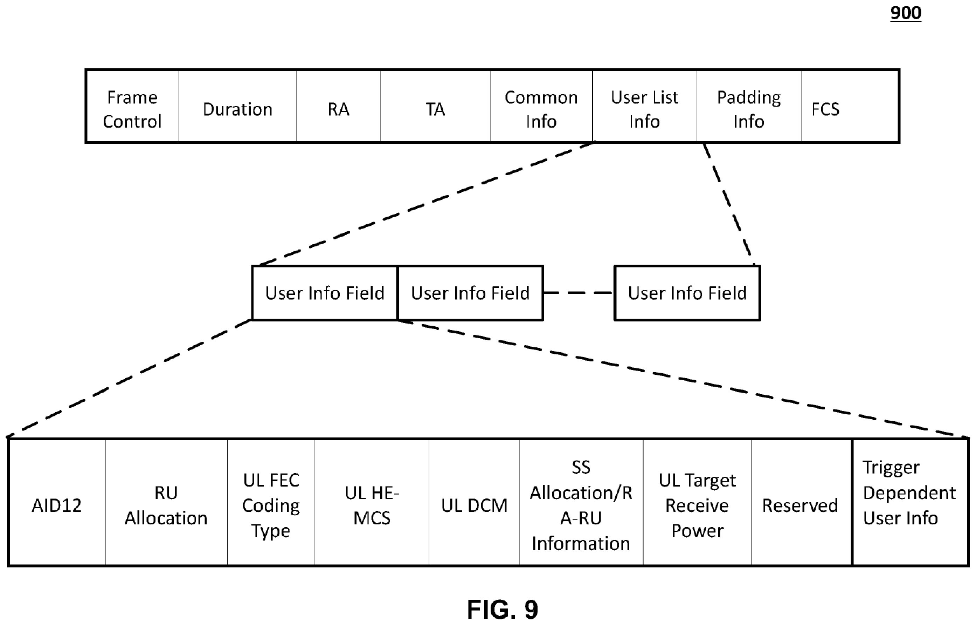

FIG. 9 shows an example trigger frame 900. Trigger frame 900 may correspond to a basic trigger frame as defined in the at least some IEEE 802.11ax standard amendment. Trigger frame 900 may be used by an AP to allocate resources for and solicit one or more trigger-based (TB) PPDU transmissions from one or more STAs. Trigger frame 900 may also carry other information required by a responding STA to send (e.g., transmit) a TB PPDU to the AP.

Trigger frame 900, as shown in FIG. 9, may include a Frame Control field, a Duration field, a receiver address (RA) field, a transmitter address (TA) field, a Common Info field, a User Info List field, a Padding field, and an FCS field. The Frame Control field may include the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, the Duration field, in control frames of the power save poll (PS-Poll) subtype, may carry an association identifier (AID) of the STA that sent (e.g., transmitted) the frame in the 16 least significant bits (LSB), and the 2 most significant bits (MSB) are both set to 1. The Duration field, in other frames sent by STAs, may contain a duration value (in microseconds) which is used by a recipient to update a network allocation vector (NAV).

The RA field may be the address of the STA that is intended to receive the incoming transmission from the transmitting station. The TA field may be the address of the STA sending (e.g., transmitting) trigger frame 900 if trigger frame 900 is addressed to STAs that belong to a single BSS. The TA field may be the sent (e.g., transmitted) BSSID if the trigger frame 900 is addressed to STAs from at least two different BSSs of the multiple BSSID set.

The Common Info field may have a format as shown by common info field 1000 described further below. The common info field may specify a trigger frame type of trigger frame 900, a transmit power of trigger frame 900 in dBm, and several key parameters of a TB PPDU that is sent (e.g., transmitted) by a STA in response to trigger frame 900. The trigger frame type of a trigger frame used by an AP to receive QoS data using UL MU operation may be referred to as a basic trigger frame.

The User List Info field may contain a User Info field per STA addressed in trigger frame 900. The per STA User Info field may include, among others, an AID subfield, an RU Allocation subfield, a Spatial Stream (SS) Allocation subfield, a modulation and coding scheme (MCS) subfield to be used by a STA in a TB PPDU, and a Trigger Dependent User Info subfield. The TB PPDU may be sent (e.g., transmitted), for example, based on (e.g., in response to) trigger frame 900. The Trigger Dependent User Info subfield may be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA.

The Padding field may be optionally present in trigger frame 900 to extend the frame length to give recipient STAs enough time to prepare a response for transmission one SIFS (short interframe spacing) after the frame is received. The Padding field, if present, may be at least two octets in length and may be set to all 1s. The FCS field may be used by a STA to validate a received frame and to interpret certain fields from the MAC headers of a frame.

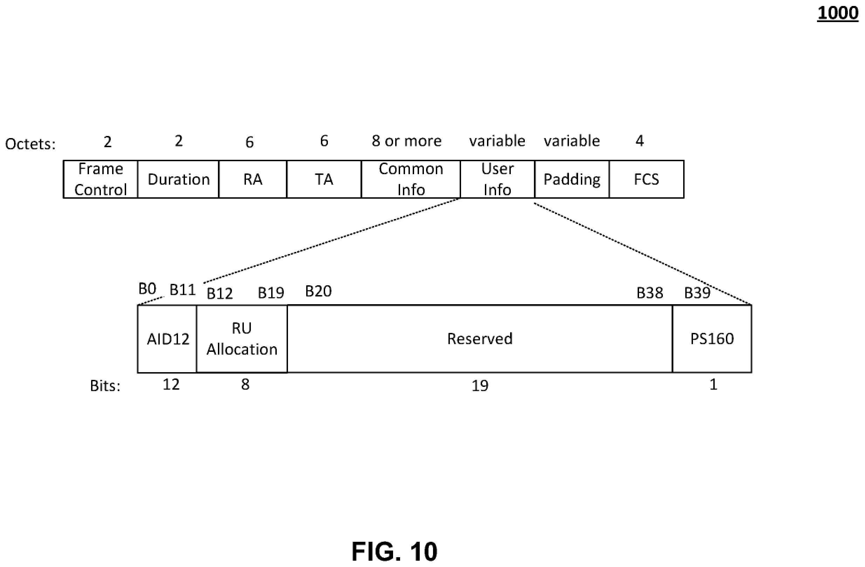

FIG. 10 shows an example multi-user request to send (MU-RTS) a trigger frame. MU-RTS trigger frame 1000 may be used by an AP to solicit simultaneous CTS frames from multiple STAs to send (e.g., transmit) a downlink (DL) MU PPDU to multiple STAs. FIG. 10 shows an example where MU-RTS trigger frame 1000 may comprise a frame control field, a duration field, an RA field, a TA field, a common info field, one or more user info fields, a padding field, and/or an FCS field. The frame control, TA, RA, padding, and FCS fields may be similar to the corresponding fields of trigger frame 900 described above. The common info field may have a format as shown by common info field 1100 as described herein. The duration field may be set to a time, in microseconds, that may be required to send (e.g., transmit) the DL MU PPDU, plus the time required to send (e.g., transmit) one CTS frame, one ACK frame (if required), and three SIFS periods.

One or more user info fields may correspond, respectively, to the one or more STAs that may be solicited by MU-RTS trigger frame 1000. A user info field may comprise an AID12 subfield, an RU allocation subfield, reserved bits, and/or a PS 160 subfield. The AID12 subfield may comprise an association identifier of the STA to which the user info field may be addressed. The RU allocation subfield may indicate a channel on which the solicited STA may send (e.g., transmit) the CTS frame. This may include, for example, a primary 20 MHz channel, a primary 40 MHz, a primary 80 MHz channel, a primary 160 MHz, an 80+80 MHz channel, or a 320 MHz channel.

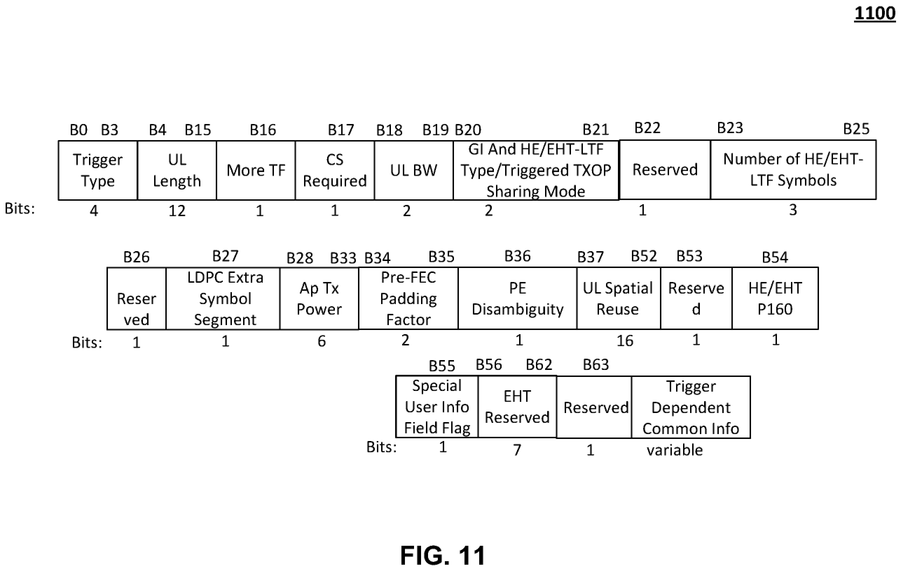

FIG. 11 shows an example Common Info field 1000. Common Info field 1000 may be similar to the Common Info field of trigger frame 900 or an MU-RTS trigger frame. Common Info field 1100, as shown in FIG. 11, may include a Trigger Type subfield, a UL Length subfield, a More TF subfield, a CS required subfield, a UL BW subfield, a GI and HE/EHT-LTF Type/Triggered TXS Mode subfield, a first Reserved subfield, a Number of HE/EHT-LTF Symbols subfield, a second Reserved subfield, an LDPC Extra Symbol Segment subfield, an AP Tx Power subfield, a Pre-FEC Padding Factor subfield, a PE Disambiguity subfield, an UL Spatial Reuse subfield, a third Reserved subfield, a HE/EHT P160 subfield, a Special User Info Field Flag subfield, an EHT Reserved subfield, a fourth Reserved subfield, and a Trigger Dependent Common Info subfield. The Trigger Type subfield, UL Length subfield, More TF subfield, CS required subfield, UL BW subfield, GI and HE-LTF Type/Triggered TXS Mode subfield, first Reserved subfield, Number of HE/EHT-LTF Symbols subfield, second Reserved subfield, LDPC Extra Symbol Segment subfield, AP Tx Power subfield, Pre-FEC Padding Factor subfield, PE Disambiguity subfield, UL Spatial Reuse subfield, third Reserved subfield, HE/EHT P160 subfield, Special User Info Field Flag subfield, EHT Reserved subfield, fourth Reserved subfield, and Trigger Dependent Common Info subfield may have the same content and interpretation as corresponding subfields of an EHT variant Common Info field defined in the IEEE 802.11be draft amendment ("IEEE P802.11be/D3.1, March 2023").

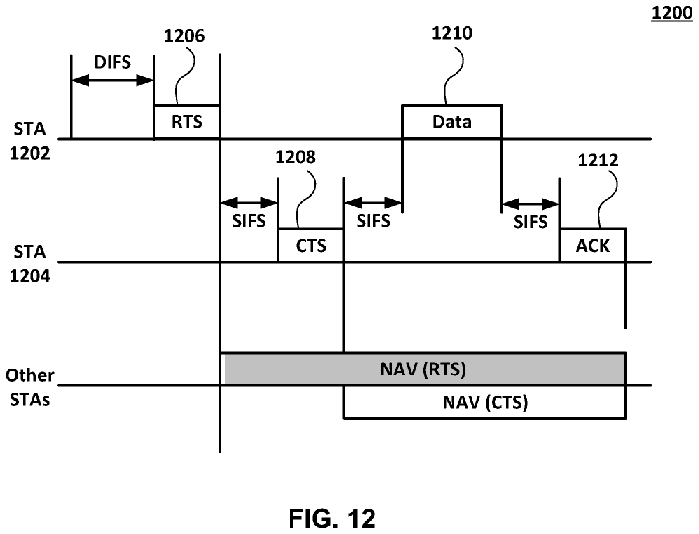

FIG. 12 shows an example of a Request-to-Send (RTS)/Clear-to-Send (CTS) procedure. A Request-to-Send (RTS)/Clear-to-Send (CTS) procedure 1200 may be an example according to the RTS/CTS procedure as defined in section 10.3.2.9 of the IEEE 802.11 standard draft "IEEE P802.11-REVme^{™}/D3.0, April 2023." The Request-to-Send (RTS)/Clear-to-Send (CTS) procedure 1200 may include STAs 1202 and 1204. Other STAs of the same BSS may also be within communication range of STAs 1202 and 1204.

STA 1202 may send (e.g., transmit) an RTS frame 1206 to STA 1204. STA 1202 may send (e.g., transmit) RTS frame 1206, for example, to protect, from hidden STA(s), the sending (e.g., transmission) of a data frame 1210 that STA 1202 may intend to transmit. RTS frame 1206 may include a Duration/ID field. The Duration/ID field may be set to a time, in microseconds, required to send (e.g., transmit) data frame 1210, plus one CTS frame, plus one ACK frame (if required), plus three SIFS (Short Interframe Spacing) periods.

STA 1204 may respond to RTS frame 1206, for example, by sending (e.g., transmitting) a CTS frame 1208 to STA 1202. CTS frame 1208 may be sent (e.g., transmitted) one SIFS period after RTS frame 1206. STA 1204 may respond to RTS frame 1206, for example, if RTS frame 1206 is addressed to STA 1204 and after, or in response to, considering the NAV, unless the NAV was set by a frame originating from STA 1202. STA 1204 may respond to the RTS frame 1206, for example, if RTS frame 1206 is addressed to STA 1204 and if the NAV indicates idle. The NAV may indicate idle, for example, if the NAV count is 0 or if the NAV count is non-zero but a non-bandwidth signaling TA obtained from a TA field of RTS frame 1206 matches a saved TXOP holder address for a non-S1G STA. The NAV may indicate idle if both the NAV and RID (response indication deferral) counters are 0 or if either the NAV or RID counter is non-zero but the TA field of RTS frame 1206 matches the saved TXOP holder address for an S1G STA.

STA 1204 may set an RA field of CTS frame 1208 to a non-bandwidth signaling TA obtained from the TA field of RTS frame 1206. STA 1204 may set a Duration field of CTS frame 1208 based on the Duration/ID field of RTS frame 1206, namely as equal to the value of the Duration/ID field of RTS frame 1206, adjusted by subtracting the time required to send (e.g., transmit) CTS frame 1208 and one SIFS period.

STA 1202 may wait one SIFS period before sending (e.g., transmitting) data frame 1210, after, or in response to, receiving CTS frame 1208. STA 1204 may send (e.g., transmit) an ACK frame 1212 in response to data frame 1210. STA 1204 may send (e.g., transmit) ACK frame 1212 one SIFS after receiving data frame 1210.

As described herein in Request-to-Send (RTS)/Clear-to-Send (CTS) procedure 1200, other STAs within communication range of STAs 1202 and 1204, and belonging to the same BSS, may set their NAVs according to RTS frame 1206 and/or CTS frame 1208. A STA receiving RTS frame 1206 may set its NAV, for example, based on the Duration/ID field of RTS frame 1206. Another STA that may receive CTS frame 1208 may set its NAV based on the Duration field of CTS frame 1208. The other STAs, as such, may not access the channel using EDCA until the end of sending (e.g., transmission) of ACK frame 1212.

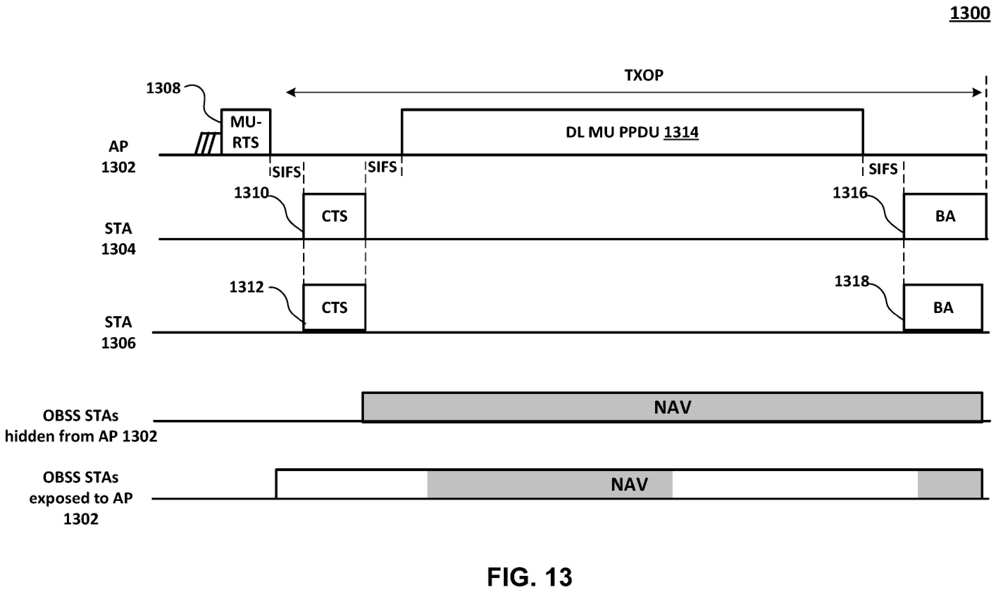

FIG. 13 shows an example of a multi-user Request-to-Send (MU-RTS)/Clear-to-Send (CTS) procedure. Request-to-Send (MU-RTS)/Clear-to-Send (CTS) procedure 1300 is an example according to the MU-RTS/CTS procedure as defined in section 26.2.6 of the IEEE 802.11 standard draft. Request-to-Send (MU-RTS)/Clear-to-Send (CTS) procedure 1300 may include an AP 1302 and STAs 1304 and 1306. STAs 1304 and 1306 may be associated with AP 1302. Request-to-Send (MU-RTS)/Clear-to-Send (CTS) procedure 1300 also shows STAs of an overlapping basic service set (OBSS) relative to the BSS of AP 1302 (OBSS STAs). The OBSS STAs, as described herein in FIG. 13, may be hidden from AP 1302 (outside of the communication range of AP 1302) or exposed to AP 1302 (within the communication range of AP 1302).

In Request-to-Send (MU-RTS)/Clear-to-Send (CTS) procedure 1300, AP 1302 may wish to send (e.g., transmit) a downlink (DL) multi-user (MU) PPDU 1314 to STAs 1304 and 1306. DL MU PPDU 1314 may comprise data for each of STAs 1304 and 1306. DL MU PPDU 1314 may occupy a plurality of channels (e.g., 20 MHz channels). Each channel of the plurality of channels may carry the data for a respective STA (e.g., STA 1304, STA 1306) served by DL MU PPDU 1314.

AP 1302 may use a MU-RTS/CTS procedure to initiate a TXOP and to protect a TXOP frame exchange sequence, for example, to protect the sending (e.g., transmission) of DL MU PPDU 1314, to STAs 1304 and 1306, from interference by OBSS STAs hidden from AP 1302. AP 1302 may initiate the TXOP by sending (e.g., transmitting) an MU-RTS trigger frame 1308 that may solicit simultaneous CTS frame transmissions from STAs 1304 and 1306.

MU-RTS trigger frame 1308 may have a format as shown by MU-RTS trigger frame 1000. MU-RTS trigger frame 1308 may comprise, as such, a frame control field, a duration field, an RA field, a TA field, a common info field, one or more user info fields, a padding field, and/or an FCS field. The duration field may be set to a time, in microseconds, required to send (e.g., transmit) DL MU PPDU 1314, plus a time required to send (e.g., transmit) one CTS frame, one ACK frame (if required), and three SIFS periods.

One or more user info fields may correspond respectively to one or more STAs solicited by an MU-RTS trigger frame. In the Request-to-Send (MU-RTS)/Clear-to-Send (CTS) procedure 1300, MU-RTS trigger frame 1308 may comprise a user info field for each of STAs 1304 and 1306 that may indicate a CTS frame may be solicited from each of STAs 1304 and 1306. A user info field may comprise an AID12 subfield, an RU allocation subfield, reserved bits, and/or a PS 160 subfield. The AID12 subfield may comprise an association identifier of the STA to which the user info field may be addressed. The RU allocation subfield may indicate a channel on which the solicited STA may send (e.g., transmit) the CTS frame. This may include, for example, a primary 20 MHz channel, a primary 40 MHz, a primary 80 MHz channel, a primary 160 MHz, an 80+80 MHz channel, or a 320 MHz channel.

AP 1302 may send (e.g., transmit) MU-RTS trigger frame 1308 in a PPDU that may occupy one or more channels (e.g., 20 MHz channels). AP 1302 may request at least one non-AP STA to send (e.g., transmit) a CTS frame that occupies that channel, for example, for each channel occupied by the PPDU that carries MU-RTS trigger frame 1308. AP 1302 may not request that a non-AP STA send (e.g., transmit) a CTS frame that occupies a channel, for example, that is not occupied by the PPDU carrying MU-RTS trigger frame 1308.

AP 1302 may wait for a CTSTimeout interval after sending MU-TRS trigger frame 1308. AP 1302 may wait for a CTSTimeout interval of aSIFSTime + aSlotTime + aRxPHYStartDelay that begins, for example, after, or in response to, sending (e.g., transmitting) MU-RTS trigger frame 1308, if a MAC layer of AP 1302 receives a PHYTXEND.confirm primitive for sent (e.g., transmitted) MU-RTS trigger frame 1308. AP 1302 may conclude that the sending (e.g., transmission) of MU-RTS trigger frame 1308 has failed, for example, if the MAC layer does not receive a PHY-RXEARLYSIG.indication or a PHY-RXSTART.indication primitive before the end of the CTSTimeout interval. AP 1302 may invoke a backoff procedure, for example, if MU-RTS trigger frame 1308 initiated a TXOP. The MAC layer may wait for the corresponding PHY-RXEND.indication primitive to determine, for example, if a sending (e.g., transmission) of MU-RTS trigger frame 1308 was successful (e.g., if the MAC layer receives a PHY-RXEARLYSIG.indication or a PHY-RXSTART.indication primitive) before the end of the CTSTimeout interval. The receipt of a CTS frame from any non-AP STA addressed by MU-RTS trigger frame 1308 before the PHY-RXEND.indication primitive may be interpreted as a successful sending (e.g., transmission) of MU-RTS trigger frame 1308, permitting the frame exchange sequence to continue. The receipt of any other type of frame may be interpreted as a failure of the sending (e.g., transmission) of MU-RTS trigger frame 1308. AP 1302 may process the received frame and, if MU-RTS trigger frame 1308 initiated a TXOP, AP 1302 may invoke its backoff procedure at the PHY-RXEND.indication primitive.

In Request-to-Send (MU-RTS)/Clear-to-Send (CTS) procedure 1300, on receiving MU-RTS trigger frame 1308, STAs 1304 and 1306 may respond by sending (e.g., transmitting), respectively, CTS frames 1310 and 1312 to AP 1302. STAs 1304 and 1306 may begin the sending (e.g., transmission) of CTS frames 1310 and 1312, for example, at the SIFS time boundary, after, or in response to, an end of a received PPDU comprising MU-RTS trigger frame 1308. STA 1304 (or STA 1306) may respond to MU-RTS trigger frame 1308 with a CTS frame, for example, if the following conditions are met: MU-RTS trigger frame 1308 comprises a user info field addressed to the STA (the AID12 subfield of the user info field is equal to the 12 LSBs of the AID of the STA) and MU-RTS trigger frame 1308 may have been sent by an AP with which the STA is associated; and the UL MU CS condition may indicate that the medium is idle as described in section 26.5.2.5 (UL MU CS mechanism) of the IEEE 802.11 standard ("IEEE P802.11-REVme^{™}/D3.0, April 2023"). Otherwise, STA 1304 (or STA 1306) does not send (e.g., transmit) a CTS frame to AP 1302, for example, if one of the conditions is not met.

STAs 1304 and 1306 may set, for example, an RA field of CTS frames 1310 and 1312 to a TA obtained from a TA field of MU-RTS trigger frame 1308. STAs 1304 and 1306 may set a duration field of respectively CTS frames 1310 and 1312, for example, based on the duration field of MU-RTS trigger frame 1308. This may be as equal to the value of the duration field of MU-RTS trigger frame 1308, adjusted by subtracting the time required to send (e.g., transmit) respectively CTS frames 1310 and 1312 and one SIFS period.

OBSS STAs exposed to AP 1302 may receive MU-RTS trigger frame 1308 due to being within the communication range of AP 1302. On receiving MU-RTS trigger frame 1308, OBSS STAs exposed to AP 1302 may set their respective NAVs, for example, based on the duration field of MU-RTS trigger frame 1308. The OBSS STAs exposed to AP 1302, as such, may not access the wireless medium for the duration of the TXOP initiated by AP 1302.

OBSS STAs hidden from AP 1302 may not receive MU-RTS trigger frame 1308 due to being outside the communication range of AP 1302. some of the OBSS STAs hidden from AP 1302 may receive CTS frame 1310 and/or CTS frame 1312 and may set their respective NAVs, for example, based on the duration field of CTS frame 1310 and/or CTS frame 1312. Some of the OBSS STAs hidden, as such, from AP 1302 may also not access the wireless medium for the duration of the TXOP initiated by AP 1302.

AP 1302 may wait one SIFS period before sending (e.g., transmitting) DL MU PPDU 1314, for example, after, or in response to, receiving CTS frame 1310 and/or CTS frame 1312. STAs 1304 and 1306 may respond by sending (e.g., transmitting) respective BlockAck (BA) frames 1316 and 1318 to AP 1302, for example, after, or in response to, receiving DL MU PPDU 1314.

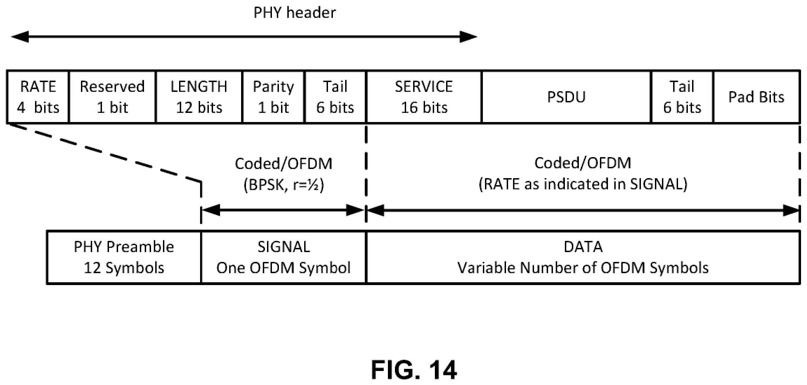

FIG. 14 shows an example non-HT PPDU format. The non-HT PPDU format may include a PHY preamble, a PHY header, a PSDU, tail bits, and/or pad bits. The PHY preamble may include 12 OFDM symbols.

A PHY header may include a SIGNAL field and a SERVICE field. The SIGNAL field may include a RATE field, a reserved bit, a LENGTH field, a parity bit, and tail bits. The tail bits of the SIGNAL field may enable decoding of the RATE and LENGTH fields immediately after, or in response, to the reception of the tail bits. The SIGNAL field may constitute a single OFDM symbol. The SIGNAL field may be sent (e.g., transmitted) using a most robust combination of Binary Phase Shift Keying (BPSK) modulation and a coding rate of R = ½.

A SERVICE field of a PHY header and a PSDU (with 6 zero tail bits and pad bits appended), denoted as DATA field, may be sent (e.g., transmitted) at the data rate described in a RATE field of the PHY header. The DATA field may constitute multiple OFDM symbols. The RATE and LENGTH fields may be required for decoding the DATA field.

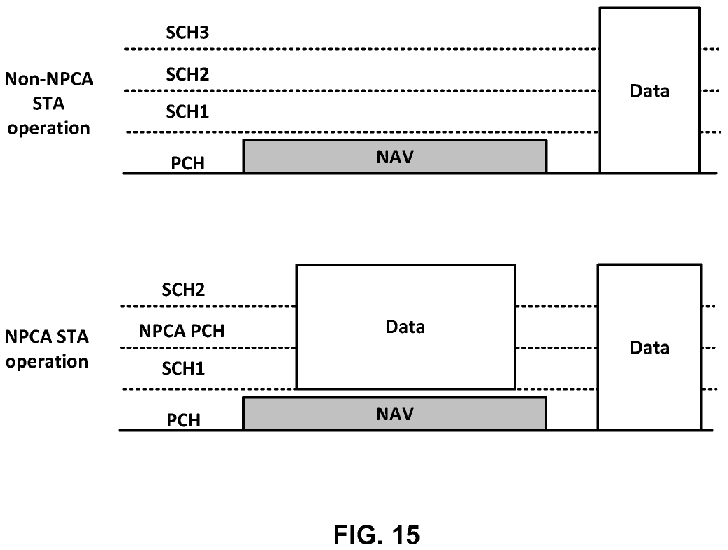

FIG. 15 shows an example of non-primary channel (NPCA) operation. NPCA operation may be contrasted with single primary channel (non-NPCA) operation, for illustration purposes. A STA may be capable of operating over a plurality of channels. According to non-NPCA operation, the plurality of channels may include a primary channel (PCH), a first secondary channel (SCH1), a second secondary channel (SCH2), and a third secondary channel (SCH3). According to NPCA operation, the same channels may include a primary channel (PCH), a first secondary channel (SCH1), an NPCA primary channel (NPCA PCH), and a second secondary channel (SCH2). The positions of the NPCA primary channel may or may not be as described herein in FIG. 15 (e.g., the NPCA primary channel may correspond to SCH1).

A STA may not communicate via any channel of a BSS, in non-NPCA operation, and if the STA has a non-zero NAV for the PCH. The non-zero NAV for the PCH may be due to the STA receiving (e.g., detecting) an inter-BSS PPDU on the PCH. The STA may wait, instead, for example, for the NAV for the PCH to reach zero before contending for the PCH to send (e.g., transmit) via the PCH. In non-NPCA operation, a virtual carrier sense (CS) function (e.g., NAV) may be associated with only the PCH. Secondary channels may have only a physical CS function (e.g., energy detection) associated with them, which may be performed only if contending for sending (e.g., transmission) on the PCH. The STA, as such and as described herein in FIG. 15, may only send (e.g., transmit) on a channel that may include the PCH (e.g., PCH, PCH+SCH1, PCH+SCH1+SCH2, PCH+SCH1+SCH2+SCH3) and only if the NAV associated with the PCH is zero (and the physical CS function may indicate "channel idle" for all channels being used).

A STA may switch to an NPCA PCH, in NPCA operation, if the STA receives (e.g., detects) an inter-BSS PPDU on the PCH. The STA may set a NAV for the PCH based on the inter-BSS PPDU (e.g., based on a duration field a frame carried in the inter-BSS PPDU, a TXOP duration field of the inter-BSS PPDU, or a length field of the inter-BSS PPDU) and may switch to the NPCA PCH for a duration based on the NAV set for the PCH. The STA may communicate via the NPCA PCH or a channel comprising the NPCA PCH, for example, after, or in response to, switching to the NPCA PCH.

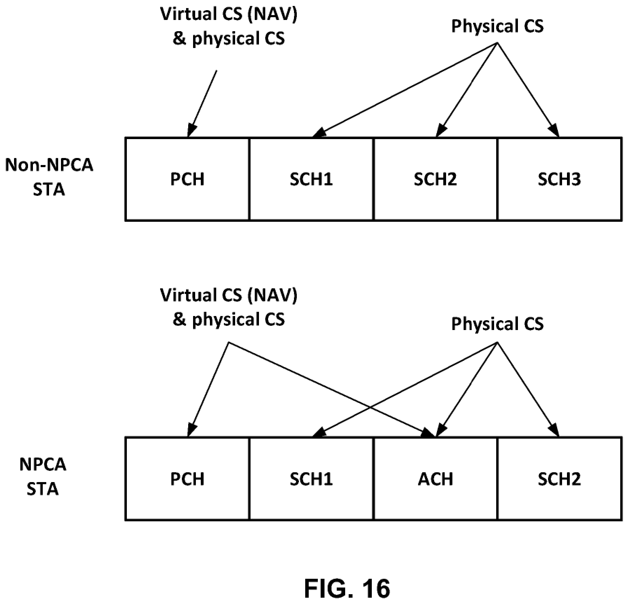

FIG. 16 shows virtual and physical carrier sense (CS) functions associated with primary and secondary channels for NPCA operation and non-NPCA operation. A virtual CS function (e.g., NAV), in NPCA operation, may be associated with multiple channels (e.g., PCH and NPCA PCH). The STA may send (e.g., transmit), as such, on channels that do not include the PCH but may include the NPCA PCH (e.g., NPCA PCH, NPCA PCH+SCH1, NPCA PCH+SCH2) and if the NAV associated with the NPCA PCH is zero (and the physical CS may indicate "channel idle" for all channels being used). The STA may also send (e.g., transmit) on channels that do not include the PCH but may include the NPCA PCH (e.g., NPCA PCH, NPCA PCH+SCH1, NPCA PCH+SCH2), for example, if the STA detects that the NPCA PCH is idle using physical CS for at least a medium synchronization duration.

An NPCA STA may perform physical and/or virtual CS functions (herein referred to as CS or CCA) on multiple channels (e.g., PCH and NPCA PCH). The NPCA STA may use the NPCA PCH for sending (e.g., transmission) if the NPCA PCH is idle (zero NAV and CCA may indicate "channel idle"), for example, if the PCH is busy (non-zero NAV or CCA may indicate "channel busy").

An NPCA STA may support performing CS in parallel on multiple channels. The NPCA STA may may support performing CS in parallel, on multiple channels, including the PCH and the NPCA PCH. Such an NPCA STA may be referred to herein as a concurrent CCA NPCA STA. Because of its concurrent CCA capability, a concurrent CCA NPCA STA is capable of medium synchronization simultaneously on multiple channels (e.g., PCH and NPCA PCH). Medium synchronization on a channel (e.g., PCH or NPCA PCH) may be performed by detecting a frame that may include NAV information or by listening to the channel for at least a medium synchronization duration and finding the channel idle throughout the medium synchronization duration. An NPCA STA may may support performing CS on a single channel at a time. Such a STA may be referred to as a non-concurrent CCA NPCA STA. The NPCA STA may perform CS on the PCH by default. The NPCA STA may perform CS on the NPCA PCH after, or in response to, switching from the PCH to the NPCA PCH. In contrast to a concurrent CCA NPCA STA, a non-concurrent CCA NPCA STA may only synchronize to the NPCA PCH after the PCH is found busy. Hence, it may need to listen to the channel for at least a medium synchronization duration (if it does not receive any frame that may include NAV information) before it is able to transmit.

A NPCA STA may indicate that it may support NPCA operation. The NPCA STA may set an NPCA May supported field of a UHR MAC Capabilities Information field of a UHR Capabilities element to 1 to indicate may support of NPCA operation. The UHR Capabilities element may be provided in an Association Request frame, a Reassociation Request frame, or a Probe Request frame by a non-AP NPCA STA. The UHR Capabilities element may be provided in an Association Response frame, a Reassociation Response frame, a Probe Response frame, or a Beacon frame by an NPCA AP.

An NPCA AP may enable, or disable, NPCA operation in a BSS. The NPCA AP may enable NPCA operation for the BSS by setting an NPCA Operation Information Present field to 1. The NPCA AP may set the NPCA Operation Information Present field to 0 to indicate, for example, that NPCA operation is disabled. The NPCA Operation Information Present field may be a field of a UHR Operation Parameters field of a UHR Operation element. The UHR Operation element may be provided in an Association Response frame, a Reassociation Response frame, a Probe Response frame, or a Beacon frame by the NPCA AP. An NPCA AP that has an operating bandwidth less than 80 MHz (or less than 160 MHz) may not enable NPCA operation.

An NPCA STA that has enabled NPCA operation may announce NPCA Operation Information in frames that the NPCA STA transmits. The NPCA STA may include an NPCA Operation Information field in the UHR Operation element. The NPCA Operation Information field may include an NPCA Primary Channel field, an NPCA Minimum Duration Threshold field, an NPCA Switching Delay field, and an NPCA Switch Back Delay field. The NPCA Primary Channel field may indicate a channel number of a channel within the BSS bandwidth that may correspond to the NPCA PCH (the channel to which the NPCA AP and its associated NPCA non-AP STAs switch to perform NPCA operation). The NPCA Minimum Duration Threshold field may indicate a minimum duration of inter-BSS activity (inter-BSS PPDU or inter-BSS TXOP) that may be required to have been indicated on the primary channel of the BSS as a necessary condition to permit an NPCA STA to switch to the NPCA primary channel to perform NPCA operation. The NPCA Switching Delay field may indicate the time needed by the NPCA STA to switch from the BSS primary channel to the NPCA primary channel (e.g., in units of 4 µsec). The NPCA Switch Back Delay field may indicate the time needed by the NPCA STA to switch from the NPCA primary channel to the BSS primary channel (e.g., in units of 4 µsec ).

A non-AP NPCA STA may not switch to an NPCA primary channel for NPCA operation if the value of the most recently received NPCA Operation Information Present field from its associated AP is equal to 0. An NPCA AP may not switch to the NPCA primary channel for NPCA operation if the value of its most recently sent (e.g., transmitted) NPCA Operation Information Present field is equal to 0.

An NPCA STA may switch to an NPCA primary channel for NPCA operation if the value of the most recently received or sent (e.g., transmitted) NPCA Operation Information Present subfield corresponding to the BSS of which the NPCA STA is a member if equal to 1 and any of conditions a), b), or c) are met:
1) The STA received a PPDU and/or received a PHY-RXSTART.indication primitive for an HE/EHT/UHR PPDU on the BSS primary channel and all (or one or more) of the following conditions are true:
   a. The PPDU is classified by the STA as an inter-BSS PPDU following the procedure of Intra-BSS and inter-BSS PPDU classification.
   b. The duration of the PPDU (e.g., determined using one or more parameters (e.g., TXOP_DURATION) of the RXVECTOR associated with the PPDU), or the duration of the PPDU plus the value of the RXVECTOR parameter TXOP_DURATION of the PPDU, is greater than the value indicated in the most recently received or sent (e.g., transmitted) NPCA Minimum Duration Threshold field corresponding to the BSS of which the STA is a member.
   c. The 20/40/80/160 MHz channel occupied by the PPDU is identified by the STA, based on the Bandwidth field in the PHY preamble of the PPDU and the channel allocations in the corresponding band, and the channel occupied by the PPDU does not overlap with the NPCA primary channel.
2) The STA received a PPDU containing a Control frame and/or a PPDU containing an initial response frame of a Control frame exchange on the BSS primary channel and all of the following conditions apply:
   a. The received PPDU(s) are classified by the STA as inter-BSS PPDU(s) following the procedure of Intra-BSS and inter-BSS PPDU classification.
   b. The TXOP duration, determined from the Duration field of the received frame(s), is greater than the value indicated in the most recently received or sent (e.g., transmitted) NPCA Minimum Duration Threshold field corresponding to the BSS of which the STA is a member.
   c. The 20/40/80/160 MHz channel occupied by the received PPDU(s), identified by the STA based on the channel allocations in the corresponding band and the PPDU bandwidth that is signaled in the received PPDU(s) or obtained from the RXVECTOR parameter CH_BANDWIDTH_IN_NON_HT of the received PPDU(s), does not overlap with the NPCA primary channel.
      i. If the Control frame is an RTS frame in a non-HT (duplicate) PPDU, then it includes a bandwidth signaling TA and the signaled PPDU bandwidth is 20 MHz, 40 MHz, 80 MHz, or 160 MHz.
      ii. Identification of the channel occupied by a received CTS frame in a non-HT (duplicate) PPDU is determined by examining the RTS frame or the MU-RTS frame that elicited the CTS response.

If an NPCA STA switches to the NPCA primary channel for NPCA operation, the following rules may apply:
1) If the STA switches from the BSS primary channel to the NPCA primary channel based on an inter-BSS HE/EHT/UHR PPDU reception on the BSS primary channel, the STA shall initiate the switch at a switch time called NPCA HE switch time and it shall be ready to send (e.g., transmit) and receive frames (subject to its capabilities and operating mode) on the NPCA primary channel no later than the value of its most recently indicated NPCA switching delay after the NPCA HE switch time.
2) If the STA switches from the BSS primary channel to the NPCA primary channel based on an inter-BSS Control frame exchange reception on the primary channel, the STA shall initiate the switch at the NPCA NHT switch time and shall be ready to send (e.g., transmit) and receive frames addressed to it (subject to its capabilities and operating mode) on the NPCA primary channel no later than the value of its most recently indicated NPCA switching delay after the NPCA NHT switch time.
3) The STA shall use the same EDCA parameter set, MU EDCA parameter set, and EPCS EDCA parameter set values for operation on the NPCA primary channel as the STA may use on the BSS primary channel.
4) After the STA becomes ready to send (e.g., transmit) on the NPCA primary channel, the STA may initiate a TXOP on the NPCA primary channel by following the rules defined in 10.23.2.2 (EDCA backoff procedure) and 10.23.2.4 (Obtaining an EDCA TXOP) of the IEEE 802.11 standard with the following exceptions:
   a. Each time that the STA switches to the NPCA primary channel, the STA shall initialize CW_NPCA[AC] to a value to be determined and randomly choose a new initial value between 0 and CW_NPCA[AC] for the backoff counter (BO_NPCA[AC]).
   b. QSRC_NPCA[AC] shall be set to 0.
   c. If the STA is a non-AP STA and the associated AP has disabled the use of untriggered UL transmissions on the NPCA primary channel for that STA, The STA shall not initiate a TXOP on the NPCA primary channel.
      i. MU EDCA parameters mechanism and or some other mechanism may be used to disable untriggered UL transmissions on the NPCA primary channel.
      ii. The baseline EDCA procedure may be followed on the BSS primary channel. The values of CW_NPCA[AC] and BO_NPCA[AC] may be discarded by the NPCA STA if it switches back to the BSS primary channel.
5) The STA shall not initiate a sending (e.g., transmission) on the NPCA primary channel to another STA until the NPCA switching delay time of the other STA has elapsed since the NPCA HE switch time (if switching due to condition 1) above) or NPCA NHT switch time (if switching due to condition 2) above).
6) The STA shall begin all frame exchanges on the NPCA primary channel with an NPCA initial Control frame using non-HT PPDU or non-HT duplicate PPDU format using a rate of 6 Mb/s, 12 Mb/s, or 24 Mb/s.
7) An NPCA AP that sends (e.g., transmits) a Trigger frame on the NPCA primary channel shall indicate RU index values that use the NPCA primary channel as the reference primary channel. The Trigger frame shall include an explicit indication that it is being sent (e.g., transmitted) on the NPCA primary channel.
8) The 20 MHz channels occupied by PPDUs sent (e.g., transmitted) by the STA shall meet all of the following conditions:
   a. include at least the NPCA primary channel,
   b. all be within the BSS bandwidth,
   c. not include any of the channels occupied by the inter-BSS traffic that caused the STA to switch from the BSS primary channel to the NPCA primary channel,
   d. not include channels that are indicated as punctured in the Disabled Subchannel Bitmap field in the EHT Operation element, and
   e. a frame that solicits a response other than TB PPDUs may puncture 20 MHz subchannels not indicated as punctured in the Disabled Subchannel Bitmap field of the EHT Operation element.

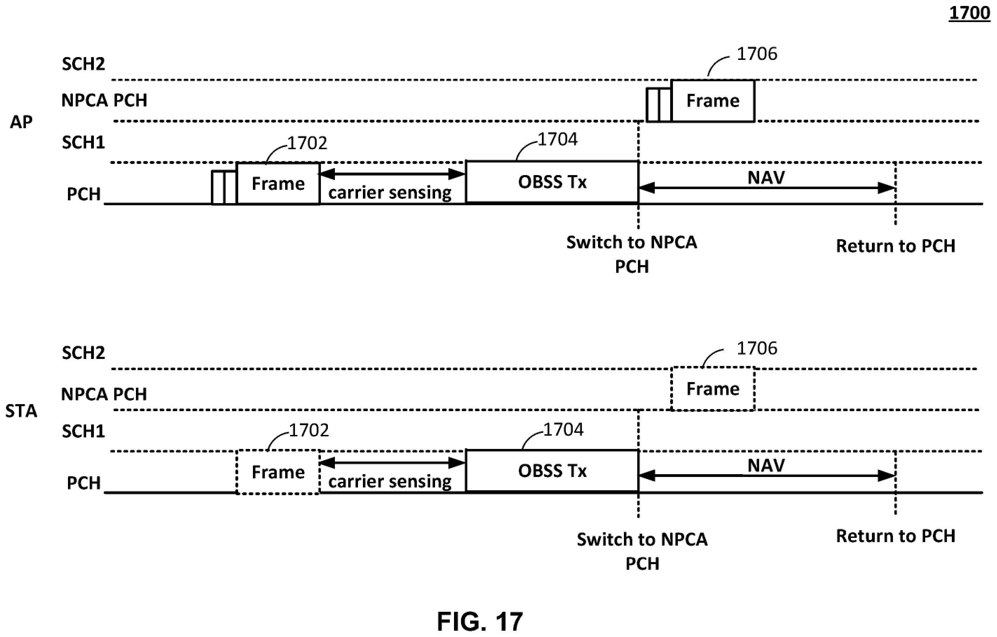

FIG. 17 shows an example of NPCA operation. As described herein in FIG. 17, the system discussed an NPCA operation 1700 may include an AP and a STA associated with the AP. The AP and the STA may both may support NPCA operation and may operate over a plurality of channels, including a primary channel (PCH), an NPCA primary channel (NPCA PCH), a first secondary channel (SCH1), and a second secondary channel (SCH2).

NPCA operation 1700 may begin with an AP sending (e.g., transmitting) a frame 1702 on the PCH. Frame 1702 may indicate a medium synchronization duration for the NPCA PCH. The medium synchronization duration of a channel may indicate a minimum duration that a STA must listen to the channel before the STA may send (e.g., transmit) on the channel, for example, if the STA does not receive via the channel before the end of the medium synchronization duration a frame that may indicate NAV information. Frame 1702 may be a management frame, for example, such as a beacon frame.

Subsequently, sending (e.g., transmission) of a frame 1704 from an OBSS may begin with a PCH, if the AP and STA operate on the PCH. The AP and the STA may detect frame 1704 on the PCH. the AP and STA may be configured to set a NAV associated with the PCH, for example, based on receiving frame 1704 on the PCH. Frame 1704 may indicate a sending (e.g., transmission), of one or more frames including frame 1704, on the PCH. A duration of the sending (e.g., transmission) on the PCH may be provided by a duration field of frame 1704, a TXOP duration field of an inter-BSS PPDU comprising frame 1704, or a length field of the inter-BSS PPDU. The AP and STA may set their NAVs for the PCH based on the duration of the OBSS transmission on the PCH (hereinafter, OBSS NAV duration or OBSS TXOP duration).

An AP and a STA may be configured to switch to an NPCA PCH for an OBSS NAV duration on receiving an inter-BSS PPDU and obtaining the OBSS NAV duration. The AP and STA may be configured to finish sending (e.g., transmitting) on the NPCA PCH before an end of the OBSS NAV duration and to return to the PCH by the end of the OBSS NAV duration.

An AP and/or STA may start a "MediumSyncDelay" timer for medium synchronization duration of an NPCA PCH (e.g., as indicated herein in frame 1702), for example, after, or in response to, switching to the NPCA PCH, for NPCA operation. The AP may be a concurrent CCA STA capable of concurrent CS on both the PCH and the NPCA PCH, for NPCA operation 1700. The AP may access the NPCA PCH, without waiting for expiration of the "MediumSyncDelay" timer, to send (e.g., transmit) a frame 1706 on the NPCA PCH, for example, provided that the NPCA PCH is idle. The STA may be a non-concurrent CCA STA. The STA may not be aware of whether a sending (e.g., transmission) is ongoing on the NPCA PCH on switching to the NPCA PCH. The STA may thus be configured to sense the NPCA PCH until the "MediumSyncDelay" timer expires before attempting to access the NPCA PCH. The STA may acquire, however, medium synchronization on the NPCA PCH before expiration of the "MediumSyncDelay" timer if the STA receives a frame indicating NAV information on the NPCA PCH. The STA may acquire, for example, medium synchronization on the NPCA PCH on receiving frame 1706 from the AP. The STA may reset the "MediumSyncDelay" timer to zero and may proceed to access the NPCA PCH, after performing a random backoff, to send (e.g., transmit) a frame (not shown in FIG. 17) on the NPCA PCH.

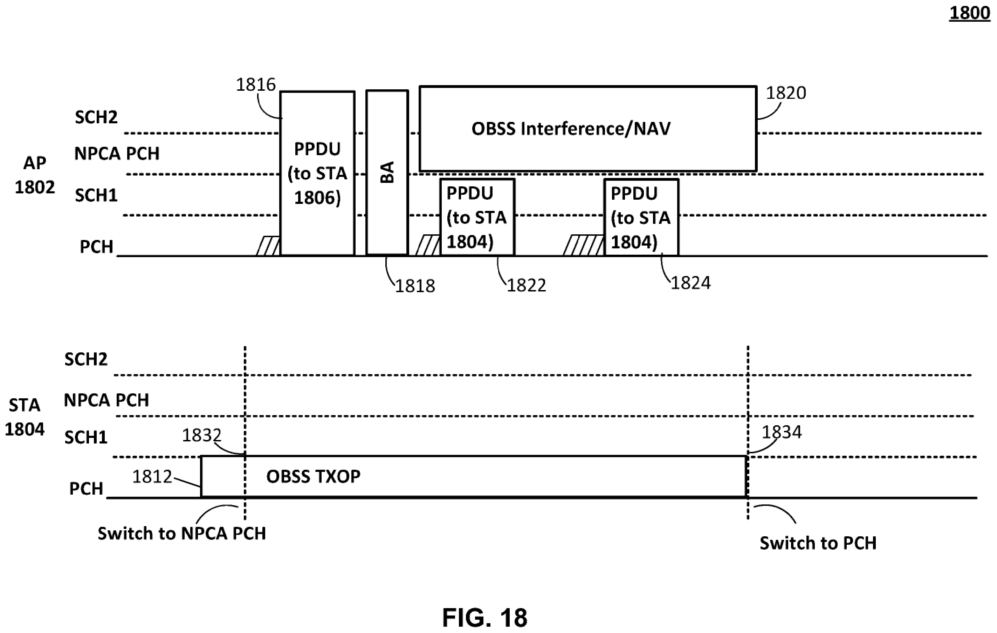

FIG. 18 shows an example of an issue that may arise in NPCA operation. The system discussed in the issue of 1800 may include an AP 1802 and a STA 1804. STA 1804 may be associated with AP 1802. AP 1802 and STA 1804 may both support NPCA operation. AP 1802 and STA 1804 may be configured to switch from a PCH to an NPCA PCH based on determining that a PPDU being received on the PCH comprises an inter-BSS PPDU.

The issue of 1800 may begin with AP 1802 and STA 1804 operating on a PCH of a BSS comprising AP 1802 and STA 1804. The PCH may correspond to a default channel for the BSS and which AP 1802 may use to send (e.g., transmit) management frames (e.g., beacon frames). STA 1804 may detect sending (e.g., transmission) of a frame from an OBSS, for example, if AP 1802 and STA 1804 operate on the PCH. STA 1804 may detect (e.g., at a time 1812) a frame (not shown) being sent (e.g., transmitted), for example, from an OBSS on a channel including the PCH.

STA 1804 may be configured to set a NAV associated with a PCH based on receiving the OBSS frame on the PCH. A duration of the sending (e.g., transmission) on the PCH may be provided by a duration field of the frame, a TXOP field of an inter-BSS PPDU including the frame, or a length field of the inter-BSS PPDU. STA 1804 may set its NAV for the PCH based on the duration of the OBSS transmission on the PCH (e.g., an OBSS TXOP duration).

STA 1804 may be configured to switch to the NPCA PCH (e.g., at a time 1832) for the OBSS TXOP duration, for example, on receiving an inter-BSS PPDU and obtaining an OBSS NAV duration. STA 1804 may be configured to finish sending (e.g., transmitting) on the NPCA PCH before an end of the OBSS TXOP duration and to return to the PCH by the end of the OBSS TXOP duration (e.g., at a time 1834).

AP 1802 may not detect sending (e.g., transmission) of a frame from an OBSS that triggered STA 1804 to switch to the NPCA PCH. AP 1802 may not detect the frame being sent (e.g., transmitted), for example, from the OBSS on the channel including the PCH (e.g., due to channel conditions or AP 1802 being hidden from the OBSS STA). AP 1802 may be out of range of the OBSS transmission, for example, so may not detect the frame being sent (e.g., transmitted) from the OBSS on the channel including the PCH. AP 1802, may thus, remain on the PCH through time 1834 and may not switch from the PCH to the NPCA PCH if STA 1804 switches from the PCH to the NPCA PCH.

AP 1802 may send (e.g., transmit) a PPDU 1816, for example, to another STA in its BSS (e.g., a STA 1806, not shown). AP 1802 may send (e.g., transmit) PPDU 1816 on a channel including the PCH. As shown, AP 1802 may send (e.g., transmit) PPDU 1816, for example, on a channel including the PCH, SCH1, NPCA PCH, and SCH 2 (e.g., as disclosed herein in FIG. 15).

STA 1806 (not shown) may receive PPDU 1816, for example, and may transmit a BA 1818 in response. STA 1806 may send (e.g., transmit) BA 1818, for example, on a channel including the PCH, SCH1, NPCA PCH, and SCH2. AP 1802 may receive BA 1818 from STA 1806.

AP 1802 may send (e.g., transmit) a PPDU 1822 to STA 1804. AP 1802 may send (e.g., transmit) PPDU 1822 on a channel including the PCH and SCH1. AP 1802 may send (e.g., transmit) PPDU 1822, to STA 1804, for example, if OBSS interference 1820 is occurring in AP 1802 (e.g., for the NPCA PCH and/or SCH2), and if STA 1804 is on the NPCA PCH.

STA 1804 may switch to the NPCA PCH (e.g., at time 1832, prior to sending (e.g., transmission) by AP 1802 of PPDU 1822) and may not receive PPDU 1822 because PPDU 1822 may be sent (e.g., transmitted) on a channel including the PCH and SCH1, for example, and not on the NPCA PCH. STA 1804 may not send (e.g., transmit) a BA in response to PPDU 1822 because STA 1804 may not receive PPDU 1822.

AP 1802 may retry sending (e.g., transmitting) data included in PPDU 1822, and may send (e.g., transmit) another PPDU 1824 to STA 1804. AP 1802 may send (e.g., transmit) PPDU 1824 on a channel including the PCH and SCH1, and not the NPCA PCH. STA 1804 may not receive PPDU 1824 and may not send (e.g., transmit) a BA in response, if STA 1804 remains on the NPCA PCH. One or more described aspects may significantly reduce communication efficiency. STA 1804 may not receive PPDUs 1822 and 1824, for example, which may impact data sending (e.g., transmission) efficiency (e.g., STA 1804 may be delayed in receiving the data included in PPDUs 1822 and 1824). Further, AP 1802 may waste processing/transmission resources with unnecessary retries, for example, by sending (e.g., transmitting) PPDU 1824.

The present disclosure addresses the above-described problem of existing technologies. A station (STA) may determine that a first physical layer (PHY) protocol data unit (PPDU) received, or being received, via a primary channel (PCH) may be an inter-basic service set (inter-BSS) PPDU. The STA may switch from the PCH to a non-primary channel access (NPCA) PCH based on the determining. The STA may determine that a second PPDU received, or being received, via the NPCA PCH may be sent (e.g., transmitted), for example, by an access point (AP), with which the STA is associated, on a channel comprising the PCH, after, or in response to, switching to the NPCA PCH. The STA may switch from the NPCA PCH to the PCH, for example, based on the determining that the second PPDU may be sent (e.g., transmitted) by the AP, with which the STA is associated, on the channel comprising the PCH. The STA may receive, from the AP, a frame on the PCH.

An access point (AP) may determine that a first physical layer (PHY) protocol data unit (PPDU) received, or being received, via a primary channel (PCH) is an inter-basic service set (inter-BSS) PPDU. The AP may switch from the PCH to a non-primary channel access (NPCA) PCH based on the determining. The AP may determine that one or more second PPDUs received, or being received, via the NPCA PCH are sent (e.g., transmitted) by one or more NPCA stations (STAs), associated with the AP, on a channel comprising the PCH, for example, after, or in response to, switching to the NPCA PCH. Based on the determination that the one or more second PPDUs are sent (e.g., transmitted) by the one or more NPCA STAs, on the channel comprising the PCH, the AP may switch from the NPCA PCH to the PCH. The AP may receive, from a first STA of the one or more STAs and if a duration indicated in the first PPDU, a frame on the PCH. Communication efficiency may be improved by switching between NPCA PCH and PCH, thereby improving data sending (e.g., transmission) efficiency and reducing retries and overhead.

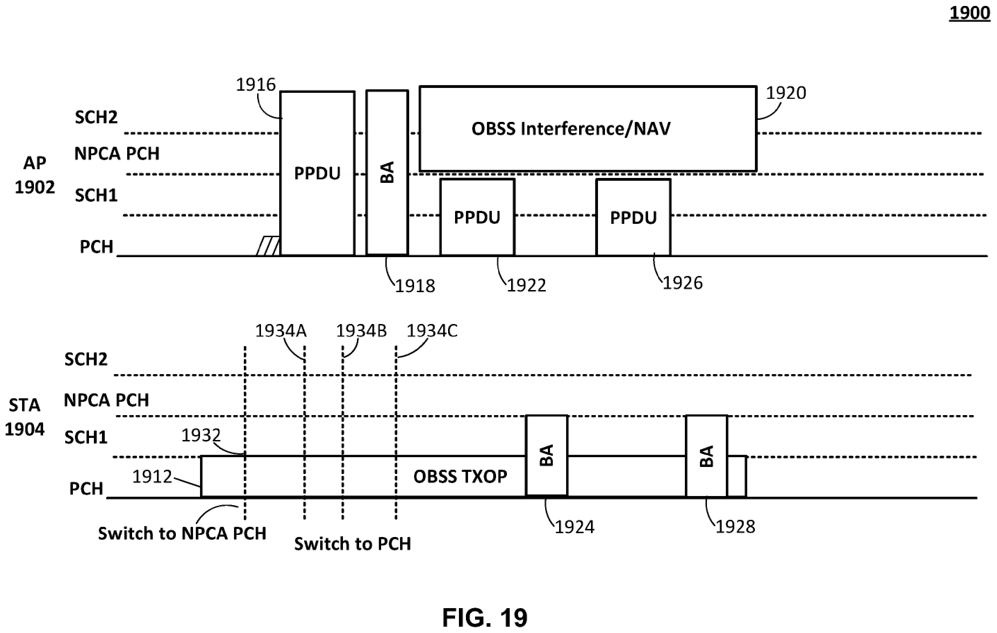

FIG. 19 shows an example of NPCA operation. NPCA operation 1900 is provided for the purpose of illustration only and is not limiting. NPCA operation 1900 may include an AP 1902 and a STA 1904. In NPCA operation 1900, both AP 1902 and STA 1904 may may support NPCA operation. As such, AP 1902 may comprise an NPCA AP. Similarly, STA 1904 may comprise an NPCA non-AP STA.

AP 1902 and STA 1904 may be configured to switch from the PCH to the NPCA PCH based on determining that a PPDU received, or being received, on the PCH comprises an inter-BSS PPDU. Further, as described herein, AP 1902 and STA 1904 may be configured to switch from the PCH to the NPCA PCH based on additional conditions (e.g., the bandwidth size of the inter-BSS PPDU, a duration indicated in the inter-BSS PPDU, such as a PPDU length or TXOP duration, or other suitable conditions). AP 1902 and STA 1904 may use these conditions in addition to, or in place of, inter-BSS PPDU detection, in determining whether to switch from the PCH to the NPCA PCH. AP 1902 and STA 1904 may be configured to switch from the PCH to the NPCA PCH, for example, based on a duration, indicated in the inter-BSS PPDU, that is greater than a threshold (e.g., an NPCA Minimum Duration Threshold, as disclosed herein in FIG. 15). AP 1902 and STA 1904 may use any suitable condition(s) for switching operation from the PCH to the NPCA PCH (e.g., in addition to, or in place of, inter-BSS PPDU detection).

AP 1902 and/or STA 1904 may comprise a multi-link device (MLD). In NPCA operation 1900, AP 1902 and STA 1904 may belong to the same BSS. STA 1904 may be associated, for example, with AP 1902.

NPCA operation 1900 may begin with AP 1902 and STA 1904 operating on a PCH of a BSS comprising AP 1902 and STA 1904. As described herein, the PCH may correspond to a default channel for the BSS and which the AP of the BSS (e.g., AP 1902) may use to send (e.g., transmit) management frames such as beacon frames. STA 1904 may detect sending (e.g., transmission) of a frame from an OBSS, for example, if AP 1902 and STA 1904 operate on the PCH. STA 1904 may detect (e.g., at a time 1912) a frame (not shown), for example, being sent (e.g., transmitted) from an OBSS on a channel including the PCH. STA 1904 may determine that a PPDU received, or being received, via the PCH is an inter-BSS PPDU.

STA 1904 may be configured to set a NAV associated with a PCH based on receiving a OBSS frame on the PCH. A duration of the sending (e.g., transmission) on the PCH may be provided by a duration field of the frame. A TXOP field of an inter-BSS PPDU may include the frame, or a length field of the inter-BSS PPDU. STA 1904 may set its NAV for the PCH, for example, based on the duration of the OBSS transmission on the PCH (e.g., an OBSS TXOP duration). STA 1904 may be configured to switch to a NPCA PCH (e.g., at a time 1932) for a OBSS TXOP duration after, or in response to, receiving an inter-BSS PPDU and obtaining the OBSS NAV duration.

AP 1902 may not detect a sending (e.g., transmission) of a frame from an OBSS that triggered STA 1904 to switch to the NPCA PCH. AP 1902 may not detect the frame being sent (e.g., transmitted), for example, from the OBSS on a channel including a PCH (e.g., due to channel conditions or AP 1902 being hidden from the OBSS STA). AP 1902 may be out of range of the OBSS transmission, for example, so it may not detect the frame being sent (e.g., transmitted) from the OBSS on the channel including the PCH. Thus, AP 1902 may remain on the PCH through time 1932 and may not switch from the PCH to the NPCA PCH if STA 1904 switches from the PCH to the NPCA PCH.

AP 1902 may send (e.g., transmit) a PPDU 1916 to another STA in its BSS (e.g., a STA 1906, not shown). PPDU 1916 may be an HT PPDU, or later. PPDU 1916 may, for example, be a high throughput (HT) PPDU conforming to the IEEE 802.11n standard amendment, a very high throughput (VHT) PPDU conforming to the 802.11ac standard amendment, a high efficiency (HE) PPDU conforming to the 802.11ax standard amendment, an extremely high throughput (EHT) PPDU conforming to the 802.11be standard amendment, or an ultra-high reliability (UHR) PPDU conforming to the forthcoming 802.11bn standard amendment. AP 1902 may send (e.g., transmit) PPDU 1916 on a channel including the PCH. AP 1902 may send (e.g., transmit) PPDU 1916 on a, for example, channel including the PCH, SCH1, NPCA PCH, and SCH 2 (e.g., as disclosed herein in FIG. 15).

STA 1906 (not shown) may receive PPDU 1916, and may send (e.g., transmit) a BA 1918 in response. STA 1906 may send (e.g., transmit) BA 1918, for example, on a channel including the PCH, SCH1, NPCA PCH, and SCH2. AP 1902 may receive BA 1918 from STA 1906.

STA 1904 may also receive PPDU 1916. AP 1902 may send (e.g., transmit) PPDU 1916 on a channel including the NPCA PCH (e.g., along with the PCH, SCH1, and SCH2). As disclosed herein, STA 1904 may switch from the PCH to the NPCA PCH (e.g., at time 1932). STA 1904 may still receive PPDU 1916 via the NPCA PCH, even though STA 1904 may have switched from the PCH to the NPCA PCH, because AP 1902 may send (e.g., transmit) PPDU 1916 on the channel including the NPCA PCH.

STA 1904 may determine that PPDU 1916 is not addressed to STA 1904. STA 1904 may determine that PPDU 1916 may not be addressed to STA 1904, for example, based on determining that an identifier (e.g., a station identifier (STA-ID)) included in PPDU 1916 does not match a corresponding identifier for STA 1904 (e.g., a STA-ID included in PPDU 1916 does not match a STA-ID associated with STA 1904 (e.g., an association identifier (AID) of STA 1904)). STA 1904 may determine the STA-ID in PPDU 1916 by decoding a STA-ID field of PPDU 1916. A SIG field (e.g., U-SIG, HE-SIG, EHT-SIG, UHR-SIG, etc.) may comprise the STA-ID field. STA 1904 may determine that PPDU 1916, for example, is not addressed to STA 1904 based on determining that an address (e.g., receiver address (RA, address 1) or send (e.g., transmit) address (TA, address 2)) of a MAC header of a frame carried in PPDU 1916 does not match a corresponding MAC address for STA 1904. STA 1904 may determine that PPDU 1916, for example, is addressed to STA 1904 based on determining that one of an RA and TA, of the frame carried in PPDU 1916, matches the MAC address for STA 1904.

STA 1904 may determine that PPDU 1916 may have been sent (e.g., transmitted) by an AP with which STA 1904 is associated (e.g., AP 1902) and may determine that PPDU may have been sent (e.g., transmitted) on a channel including the PCH (e.g., in addition to the NPCA PCH). STA 1904 may determine that PPDU 1916 may have been sent (e.g., transmitted) by an AP by decoding an uplink (UL)/downlink (DL) field of PPDU 1916. As one example, the UL/DL field may indicate that PPDU 1916 is not addressed to an AP (e.g., the UL/DL field may be set to 0 to indicate that PPDU 1916 is addressed to a STA other than an AP STA).

STA 1904 may further determine that PPDU 1916 may have been sent (e.g., transmitted) by an AP associated with STA 1904 (e.g., AP 1902) by determining a BSS of the device sending (e.g., transmitting) PPDU 1916. STA 1904 may decode a BSS color field of the PPDU 1916, for example, to determine the BSS of the device sending (e.g., transmitting) PPDU 1916. The BSS color field may be located in a preamble of PPDU 1916. The location of the BSS color field in the preamble of PPDU 1916 may vary based on the PPDU type. The BSS color field may be located in a U-SIG field of PPDU 1916 (e.g., as described herein in FIG. 7), for example, if PPDU 1916 is an EHT PPDU (e.g., as described herein in FIG. 5) or a UHR PPDU (e.g., as described herein in FIG. 6). The BSS color field may be located in a corresponding signal field of the preamble of PPDU 1916 (e.g., an HT-SIG field, a VHT-SIG field, or an HE-SIG field, respectively), for example, if PPDU 1916 is an HT PPDU, a VHT PPDU, or an HE PPDU (e.g., as described above in FIGS. 3-4). STA 1904 may compare the BSS color in the BSS color field with the BSS color of the BSS of which STA 1904 is a member, and may determine that a first BSS color in the BSS color field matches a second BSS color of a BSS of which the STA is a member. STA 1904 may determine that PPDU 1916 may have been sent (e.g., transmitted) by an AP associated with STA 1904, for example, based on determining that an address (e.g., receiver address (RA, address 1) or send (e.g., transmit) address (TA, address 2)) of a MAC header of a frame carried in PPDU 1916 matches a corresponding MAC address or BSSID for AP 1902. STA 1904 may determine that PPDU 1916 may have been sent (e.g., transmitted) by AP 1902, for example, based on determining that an RA and/or TA, of the frame carried in PPDU 1916, does not match an MAC address (or a BSSID) for AP 1902.

STA 1904 may further determine that PPDU 1916 may have been sent (e.g., transmitted) on a channel including the PCH. STA 1904 may determine that PPDU 1916 may have been sent (e.g., transmitted), by AP 1902 on the channel comprising the PCH, for example, based on PPDU 1916. STA 1904 may determine a bandwidth for PPDU 1916 in order to determine that PPDU 1916 may have been sent (e.g., transmitted) on a channel comprising the PCH. STA 1904 may determine, for example, a bandwidth size and a bandwidth location for PPDU 1916.

STA 1904 may determine a bandwidth for PPDU 1916 by decoding a preamble of PPDU 1916. STA 1904 may decode, for example, a bandwidth (BW) field of the preamble of PPDU 1916. The location of the BW field in the preamble of PPDU 1916 may vary based on the PPDU type. The BW field may be located in a U-SIG field of PPDU 1916 (e.g., as described above in FIG. 7), for example, if PPDU 1916 is an EHT PPDU (e.g., as described above in FIG. 5) or a UHR PPDU (e.g., as described above in FIG. 6). The BW field may be located in a corresponding signal field of the preamble of PPDU 1916 (e.g., an HT-SIG field, a VHT-SIG field, or an HE-SIG field, respectively), for example, if PPDU 1916 is an HT PPDU, a VHT PPDU, or an HE PPDU (e.g., as described above in FIGS. 3-4).

STA 1904 may determine a bandwidth size for PPDU 1916 based on a BW field. As disclosed herein and depending on the PPDU format, a PPDU may be sent (e.g., transmitted), for example, over a physical channel having a bandwidth of 20 MHz, 40 MHz, 80 MHz, 160 MHz, or 320 MHz. The BW field may indicate the physical channel bandwidth for the PPDU (e.g., whether PPDU 1916 occupies a 20 MHz channel, a 40 MHz channel, an 80 MHz, a 160 MHz channel, or a 320 MHz channel). Further, STA 1904 may use the BW field to determine the bandwidth location for PPDU 1916 (e.g., the channel occupied by PPDU 1916). STA 1904 may determine, for example, whether PPDU 1916 occupies the PCH based on the BW field.

STA 1904 may switch from a NPCA PCH to a PCH, for example STA 1904 may switch back from the NPCA PCH to the PCH. STA 1904 may switch from the NPCA PCH to the PCH, for example, based on determining that PPDU 1916 is sent (e.g., transmitted) by the AP with which STA 1904 is associated (e.g., AP 1902) on a channel comprising the PCH. STA 1904 may switch from the NPCA PCH to the PCH, for example, based on determining that PPDU 1916 is not addressed to STA 1904 and determining that PPDU 1916 is sent (e.g., transmitted) by the AP with which STA 1904 is associated (e.g., AP 1902) on a channel comprising the PCH.

STA 1904 may switch from a NPCA PCH to a PCH upon determining that PPDU 1916 may have been sent (e.g., transmitted) by an AP that STA 1904 may be associated (e.g., AP 1902) with and on a channel including the PCH. STA 1904 may switch, for example, from the NPCA PCH to the PCH at a time 1934A. PPDU 1916 may comprise, or be, an HT PPDU, a VHT PPDU, an HE PPDU, an EHT PPDU, or a UHR PPDU. STA 1904 may switch from the NPCA PCH to the PCH at a time 1934A, for example, based on decoding only a part (e.g., preamble or one or more of MPDUs) of PPDU 1916.

STA 1904 may switch from a NPCA PCH to a PCH at a time determined based on a duration indicated in PPDU 1916. PPDU 1916 may indicate a duration sufficiently long, for example, to cover sending (e.g., transmission) of PPDU 1916. STA 1904 may switch from the NPCA PCH to the PCH prior to the end of the duration indicated in PPDU 1916, for example, at a time 1934B, related to (e.g., at, prior to, or right after) the end of sending (e.g., transmission) of PPDU 1916. STA 1904 may determine the duration indicated in PPDU 1916 based on a length field and a rate field indicated in PPDU 1916 (e.g., indicated in a preamble of PPDU 1916). The duration indicated in PPDU 1916, for example, may be a length of PPDU 1916.

STA 1904 may switch from a NPCA PCH to a PCH at a time determined based on a TXOP. STA 1904 may switch from the NPCA PCH to the PCH at a time determined, for example, based on a TXOP obtained by the AP sending (e.g., transmitting) PPDU 1916 (e.g., AP 1902). AP 1902 may have obtained a TXOP sufficiently long, for example, to cover sending (e.g., transmission) of PPDU 1916 and sending (e.g., transmission) of a response (e.g., BA 1918). STA 1904 may switch from the NPCA PCH to the PCH prior to the end of the TXOP obtained by AP 1902, for example, at a time 1934C, a time related to (e.g., at, prior to, or right after) the end of the sending (e.g., transmission) of BA 1918. The TXOP duration may be indicated in a TXOP field of PPDU 1916. The TXOP duration may, for example, be indicated in a duration field of a frame carried in PPDU 1916.

AP 1902 may send (e.g., transmit) a PPDU 1922 to STA 1904. AP 1902 may send (e.g., transmit) the PPDU 1922 after a switch. AP 1902 may send (e.g., transmit) PPDU 1922 on a channel including the PCH and SCH1. AP 1902 may send (e.g., transmit) PPDU 1922, to STA 1904, for example, if (or because) OBSS interference 1920 is occurring in AP 1902 (e.g., for the NPCA PCH and/or SCH2, as described herein in FIG. 19), and if STA 1904 is on the NPCA PCH.

STA 1904 may receive PPDU 1922. STA 1904 may have switched from the NPCA PCH back to the PCH (e.g., at one of times 1934A, 1934B, or 1934C), for example, prior to AP 1902 sending (e.g., transmitting) PPDU 1922. STA 1904 may therefore receive PPDU 1922 on the PCH. STA 1904 may send (e.g., transmit) BA 1924, after, or in response to receiving PPDU 1922. STA 1904 may send (e.g., transmit) BA 1924 on a channel including the PCH (e.g., a channel including the PCH and SCH1).

AP 1902 may further send (e.g., transmit) a PPDU 1926 to STA 1904. AP 1902 may send (e.g., transmit) PPDU 1926 on a channel that may include the PCH and SCH1. AP 1902 may send (e.g., transmit) PPDU 1926, to STA 1904, for example, if (or because) OBSS interference 1920 is occurring in AP 1902 (e.g., for the NPCA PCH and/or SCH2 and as shown in FIG. 19), and if STA 1904 is on the NPCA PCH.

STA 1904 may receive PPDU 1926. STA 1904 may have switched from a NPCA PCH back to a PCH (e.g., at one of times 1934A, 1934B, or 1934C), for example, prior to AP 1902 sending (e.g., transmitting) PPDU 1926. STA 1904 may therefore receive PPDU 1926 on the PCH. STA 1904 may send (e.g., transmit) BA 1928 in response to receiving PPDU 1926. STA 1904 may send (e.g., transmit) BA 1928 on a channel including the PCH (e.g., a channel including the PCH and SCH1). Methods, apparatuses, and systems described herein may improve communication efficiency by improving switching between the NPCA PCH and PCH, thereby improving data sending (e.g., transmission) efficiency and reducing retries and overhead.

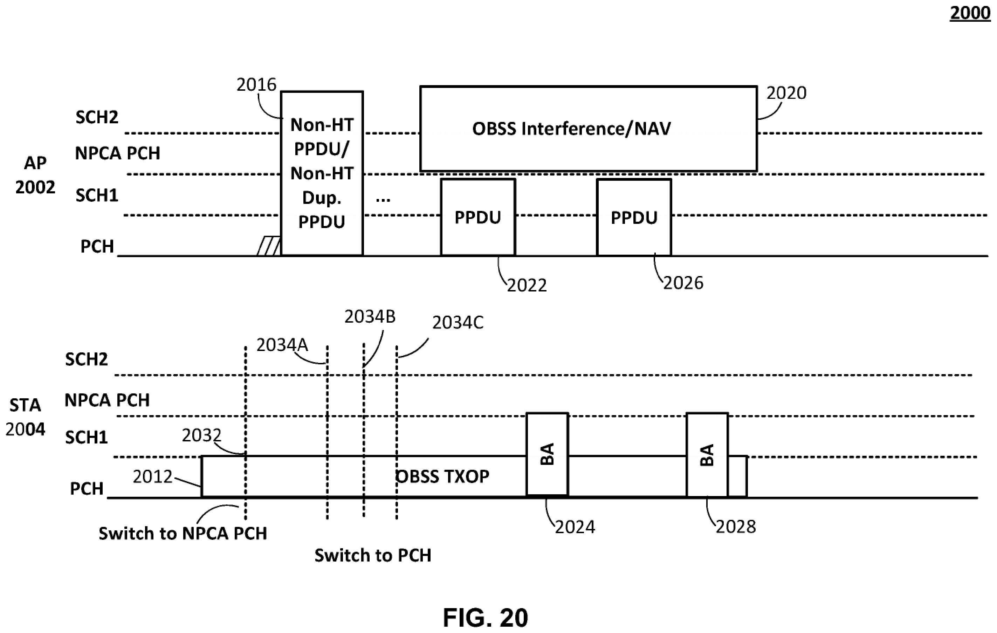

FIG. 20 shows an example of NPCA operation. NPCA operation 2000 is provided for the purpose of illustration only and is not limiting. NPCA operation 2000 may include an AP 2002 and a STA 2004. AP 2002 and STA 2004 are described herein as AP 1902 and STA 1904 for NPCA operation 1900 shown in FIG. 19.

NPCA operation 2000 may begin with AP 2002 and STA 2004 operating on a PCH of a BSS comprising AP 2002 and STA 2004. As described herein, the PCH may correspond to the default channel for the BSS and which the AP of the BSS (e.g., AP 2002) may use to send (e.g., transmit) management frames such as beacon frames. STA 2004 may detect sending (e.g., transmission) of a frame from an OBSS, for example, if AP 2002 and STA 2004 operate on the PCH. STA 2004 may detect (e.g., at a time 2012), for example, a frame (not shown) being sent (e.g., transmitted) from an OBSS on a channel including the PCH. STA 2004 may determine that a PPDU received, or being received, via the PCH is an inter-BSS PPDU.

STA 2004 may be configured to set a NAV associated with a PCH based on receiving an OBSS frame on the PCH. A duration of the sending (e.g., transmission) on the PCH may be provided by a duration field of the frame, a TXOP field of an inter-BSS PPDU including the frame, or a length field of the inter-BSS PPDU. STA 2004 may set its NAV for the PCH based on the duration of the OBSS transmission on the PCH (e.g., an OBSS TXOP duration). STA 2004 may be configured to switch to an NPCA PCH (e.g., at a time 2032) for the OBSS TXOP duration, for example, in accordance with NPCA operation and based on receiving an inter-BSS PPDU and obtaining the OBSS NAV duration.

AP 2002 may not detect a sending (e.g., transmission) of a frame from an OBSS that triggered STA 2004 to switch to an NPCA PCH. AP 2002 may not detect the frame being sent (e.g., transmitted) from the OBSS on the channel including the PCH, for example, due to channel conditions or AP 2002 being hidden from the OBSS STA. AP 2002 may be out of range of the OBSS transmission, for example, so may not detect the frame being sent (e.g., transmitted) from the OBSS on the channel including the PCH. Thus, AP 2002 may remain on the PCH through time 2032 and may not switch from the PCH to the NPCA PCH if STA 2004 switches from the PCH to the NPCA PCH.

AP 2002 may send (e.g., transmit) a PPDU 2016 to another STA in its BSS (e.g., a STA 2006, not shown). PPDU 2016 may be a non-HT PPDU (e.g., a 20MHz PPDU) or a non-HT duplicate PPDU (e.g., a 20MHz non-HT PPDU that may be duplicated across a larger bandwidth, such as 40 MHz, 80 MHz, 160 MHz, or 320 MHz). PPDU 2016 may be an example of the non-HT duplicate PPDU (e.g., a 20MHz non-HT PPDU that may be duplicated across 80MHz bandwidth) as described herein in FIG. 14. PPDU 2016 may carry an RTS frame. AP 2002 may send (e.g., transmit) PPDU 2016 on a channel (e.g., an 80MHz channel) that may include the PCH (e.g., a 20MHz primary channel). AP 2002 may send (e.g., transmit) PPDU 2016, for example, using a non-HT duplicate PPDU on a channel including the PCH, SCH1, NPCA PCH, and SCH 2 (e.g., as disclosed herein in FIG. 15). STA 2006 (not shown) may receive PPDU 2016 and may send (e.g., transmit) a response frame (e.g., a CTS or an ICR, or another suitable frame) in response to PPDU 2016 (not shown). STA 2006 (not shown) may further exchange one or more DL or UL frames (e.g., DL data or UL BA frames) with AP 2002 after, or in response to, sending (e.g., transmitting) the response frame.

STA 2004 may also receive PPDU 2016. AP 2002 may send (e.g., transmit) PPDU 2016, for example, on a channel including a NPCA PCH (e.g., along with PCH, SCH1, and SCH2). As disclosed herein, STA 2004 may switch from a PCH to the NPCA PCH (e.g., at time 2032). STA 2004 may still receive PPDU 2016 via the NPCA PCH (e.g., a 20MHz PPDU (carrying an RTS frame), sent via the NPCA PCH, of PPDU 2016), even though STA 2004 may have switched from the PCH to the NPCA PCH, because AP 2002 may send (e.g., transmit) PPDU 2016 on the channel including the NPCA PCH.

STA 2004 may determine that PPDU 2016 may not be addressed to STA 2004. STA 2004 may determine, for example, that an identifier included in PPDU 2016 may not match a corresponding identifier for STA 2004. STA 2004 may determine that PPDU 2016 is not addressed to STA 2004, for example, based on determining that an address (e.g., receiver address (RA, address 1) or send (e.g., transmit) address (TA, address 2)) of a MAC header of a frame carried in PPDU 2016 does not match a corresponding MAC address for STA 2004. STA 2004 may determine that PPDU 2016 may be addressed to STA 2004, for example, based on determining that one of an RA and/or TA, of the frame carried in PPDU 2016, matches the MAC address for STA 2004.

STA 2004 may determine that PPDU 2016 may have been sent (e.g., transmitted) by an AP with which STA 2004 is associated (e.g., AP 2002) and may determine that PPDU may have been sent (e.g., transmitted) on a channel including the PCH (e.g., in addition to the NPCA PCH). STA 2004 may determine that PPDU 2016 may have been sent (e.g., transmitted) by an AP associated with STA 2004 by decoding a medium access control (MAC) address field in a MAC header of a frame carried by PPDU 2016. As described herein in FIG. 8, above, a MAC header may, for example, include address fields (e.g., up to four address fields). As disclosed herein, the address fields may be used to indicate the basic service set identifier (BSSID), source address (SA), destination address (DA), sending (e.g., transmitting) address (TA), and/or receiving address (RA) associated with the frame. STA 2004 may decode the address field(s) of the MAC header of the frame carried by PPDU 2016 and may determine that PPDU 2016 may have been sent (e.g., transmitted) by AP 2002. STA 2004 may determine, for example, that one of RA and TA indicated in the MAC header of the frame carried by PPDU 2016 matches a BSSID or a MAC address of AP 2002.

STA 2004 may further determine that PPDU 2016 may have been sent (e.g., transmitted) on a channel that may include a PCH. STA 2004 may determine that PPDU 2016 may have been sent (e.g., transmitted) on the channel comprising the PCH, for example, by AP 2002 and based on PPDU 2016. STA 2004 may determine a bandwidth for PPDU 2016 in order to determine that PPDU 2016 may have been sent (e.g., transmitted) on a channel comprising the PCH. STA 2004 may determine, for example, a bandwidth size and a bandwidth location for PPDU 2016.

STA 2004 may determine a bandwidth for PPDU 2016 by decoding a service field of PPDU 2016. A non-HT PPDU may include, for example, a service field (e.g., a 16 bit service field). STA 2004 may decode the service field of PPDU 2016 to determine the bandwidth for PPDU 2016 (e.g., the channel bandwidth for PPDU 2016 and the channel occupied by PPDU 2016). STA 2004 may determine, for example, whether PPDU 2016 occupies a PCH based on decoding the service field of PPDU 2016.

STA 2004 may switch from a NPCA PCH to a PCH (e.g., STA 2004 may switch back from the NPCA PCH to the PCH). STA 2004 may switch from the NPCA PCH to the PCH, for example, based on determining that PPDU 2016 may have been sent (e.g., transmitted) by an AP with which STA 2004 is associated (e.g., AP 2002) on a channel comprising the PCH. STA 2004 may switch from the NPCA PCH to the PCH, for example, based on determining that PPDU 2016 is not addressed to STA 2004. The determination of STA 2004 to switch from the NPCA PCH to the PCH based on determining that PPDU 2016 is not addressed to STA 2004, may also be based on determining that PPDU 2016 may have been sent (e.g., transmitted) by an AP with which STA 2004 is associated (e.g., AP 2002) on a channel comprising the PCH. The determination may instead be only based on determining that PPDU 2016 may have been sent (e.g., transmitted) by the AP with which STA 2004 is associated (e.g., AP 2002) on a channel comprising the PCH.

STA 2004 may switch from a NPCA PCH to a PCH upon determining that PPDU 2016 may have been sent (e.g., transmitted) by an AP with which STA 2004 is associated (e.g., AP 2002) on a channel including the PCH. STA 2004 may switch from the NPCA PCH to the PCH, for example, at a time 2034A. PPDU 2016 may be or may comprise a non-HT PPDU. STA 2004 may switch from the NPCA PCH to the PCH at a time 2034A based on decoding only a part (e.g., a preamble, one or more MPDUs, a middle portion of a MAC header of a frame) of PPDU 2016. STA 2004 may switch from the NPCA PCH to the PCH, for example, after, or in response to, a first frame check sequence (FCS), before, or if a padding field of, a MAC header, or before a final FCS, of a frame carried by PPDU 2016.

STA 2004 may switch from a NPCA PCH to a PCH at a time determined based on a duration indicated in PPDU 2016. PPDU 2016 may indicate a duration, for example, sufficiently long to cover sending (e.g., transmission) of PPDU 2016. STA 2004 may switch from the NPCA PCH to the PCH prior to the end of the duration indicated in PPDU 2016 (e.g., at a time 2034B, at (or prior to or right after) the end of sending (e.g., transmission) of PPDU 2016). STA 2004 may determine the duration indicated in PPDU 2016 based on a length field and a rate field indicated in PPDU 2016 (e.g., indicated in a preamble of PPDU 2016). The duration indicated in PPDU 2016 may be a length of PPDU 2016.

STA 2004 may switch from a NPCA PCH to a PCH at a time determined based on a TXOP obtained by the AP sending (e.g., transmitting) PPDU 2016 (e.g., AP 2002). AP 2002 may have obtained a TXOP, for example, sufficiently long to cover sending (e.g., transmission) of PPDU 2016 and sending (e.g., transmission) of a response. STA 2004 may switch from the NPCA PCH to the PCH prior to the end of the TXOP obtained by AP 2002, for example, at a time 2034C related to (e.g., at, prior to, or right after) the end of sending (e.g., transmission) of a last frame (e.g., acknowledgement, BA, or the last data/management frame) sent for the TXOP. The TXOP duration may be indicated in a duration field of a MAC protocol data unit (MPDU) comprised in the first PPDU.

AP 2002 may send (e.g., transmit) a PPDU 2022 to STA 2004. AP 2002 may send (e.g., transmit) a PPDU 2022 to STA 2004, for example, after a switch. AP 2002 may send (e.g., transmit) PPDU 2022 on a channel including the PCH and SCH1. AP 2002 may send (e.g., transmit) PPDU 2022, to STA 2004, for example, if (or because) OBSS interference 2020 is occurring in AP 2002 (e.g., for the NPCA PCH and/or SCH2, as shown in FIG. 19), and if STA 2004 is on the NPCA PCH.

STA 2004 may receive PPDU 2022. STA 2004 may have switched, for example, from a NPCA PCH back to a PCH (e.g., at one of times 2034A, 2034B, or 2034C), prior to AP 2002 sending (e.g., transmitting) PPDU 2022. STA 2004 may therefore receive PPDU 2022 on the PCH. STA 2004 may send (e.g., transmit) BA 2024 in response to receiving PPDU 2022. STA 2004 may send (e.g., transmit) BA 2024 on a channel including the PCH (e.g., a channel including the PCH and SCH1).

AP 2002 may further send (e.g., transmit) a PPDU 2026 to STA 2004. AP 2002 may send (e.g., transmit) PPDU 2026 on a channel including the PCH and SCH1. AP 2002 may send (e.g., transmit) PPDU 2026, to STA 2004, for example, if (or because) OBSS interference 2020 is occurring in AP 2002 (e.g., for the NPCA PCH and/or SCH2, as described herein in FIG. 19), and if STA 2004 is on the NPCA PCH.

STA 2004 may receive PPDU 2026. STA 2004 may have switched, for example, from the NPCA PCH back to the PCH (e.g., at one of times 2034A or 2034B), prior to AP 2002 sending (e.g., transmitting) PPDU 2026. STA 2004 may therefore receive PPDU 2026 on the PCH. STA 2004 may send (e.g., transmit) BA 2028 in response to receiving PPDU 2026. STA 2004 may send (e.g., transmit) BA 2028 on a channel including the PCH (e.g., a channel including the PCH and SCH1). Methods, apparatuses, and systems described herein may improve communication efficiency by improving switching between the NPCA PCH and PCH, thereby improving data sending (e.g., transmission) efficiency and reducing retries and overhead.

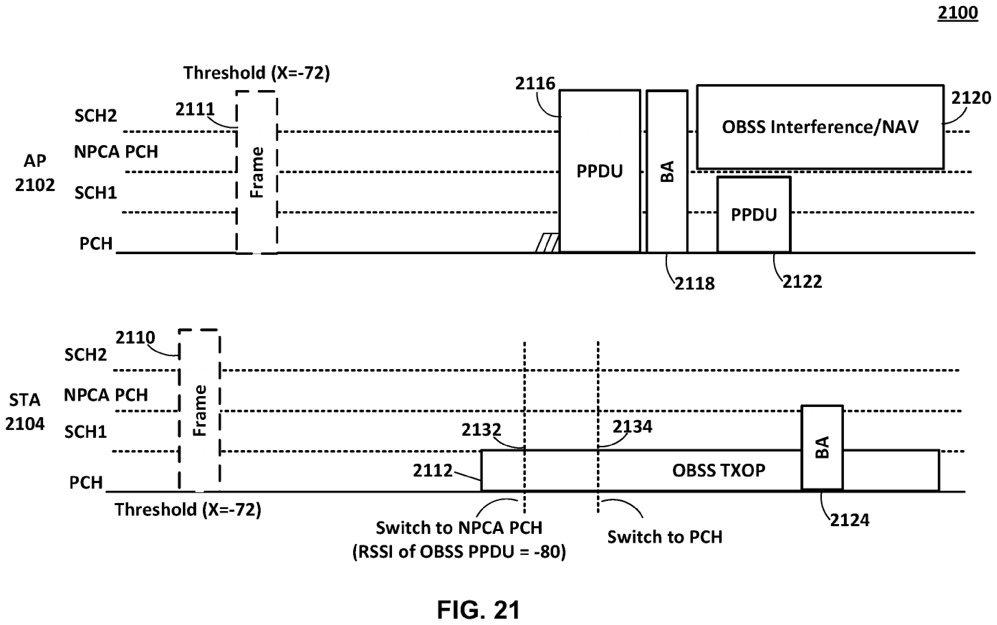

FIG. 21 shows an example of NPCA operation. NPCA operation 2100 is provided for the purpose of illustration only and is not limiting. NPCA operation 2100 may include an AP 2102 and a STA 2104. In example NPCA operation 2100, both AP 2102 and STA 2104 may support NPCA operation. AP 2102 may comprise an NPCA AP. Similarly, STA 2104 may comprise an NPCA non-AP STA. In accordance with NPCA operation, AP 2102 and STA 2104 may be configured to switch from the PCH to the NPCA PCH based on determining that a PPDU received, or being received, on the PCH comprises an inter-BSS PPDU.

Further, as described herein, AP 2102 and STA 2104 may be configured to switch from a PCH to a NPCA PCH based on additional conditions (e.g., the bandwidth size of the inter-BSS PPDU, a duration indicated in the inter-BSS PPDU, such as a PPDU length or TXOP duration, or other suitable conditions). AP 2102 and STA 2104 may use these conditions in addition to, or in place of, inter-BSS PPDU detection, in determining whether to switch from the PCH to the NPCA PCH. AP 2102 and STA 2104 may be configured to switch, for example, from the PCH to the NPCA PCH based on a duration, indicated in the inter-BSS PPDU, that may be greater than a threshold (e.g., an NPCA Minimum Duration Threshold, as disclosed herein in FIG. 15). This is merely an example, and AP 2102 and STA 2104 may use any suitable condition(s) for switching operation from the PCH to the NPCA PCH (e.g., in addition to, or in place of, inter-BSS PPDU detection).

AP 2102 and/or STA 2104 may comprise a multi-link device (MLD). In example NPCA operation 2100, AP 2102 and STA 2104 belong to the same BSS. STA 2104 may be associated with AP 2102.

NPCA operation 2100 begins with AP 2102 and STA 2104 operating on a PCH of a BSS comprising AP 2102 and STA 2104. As described herein, the PCH may correspond to the default channel for the BSS and which the AP of the BSS (e.g., AP 2102) may use to send (e.g., transmit) management frames such as beacon frames.

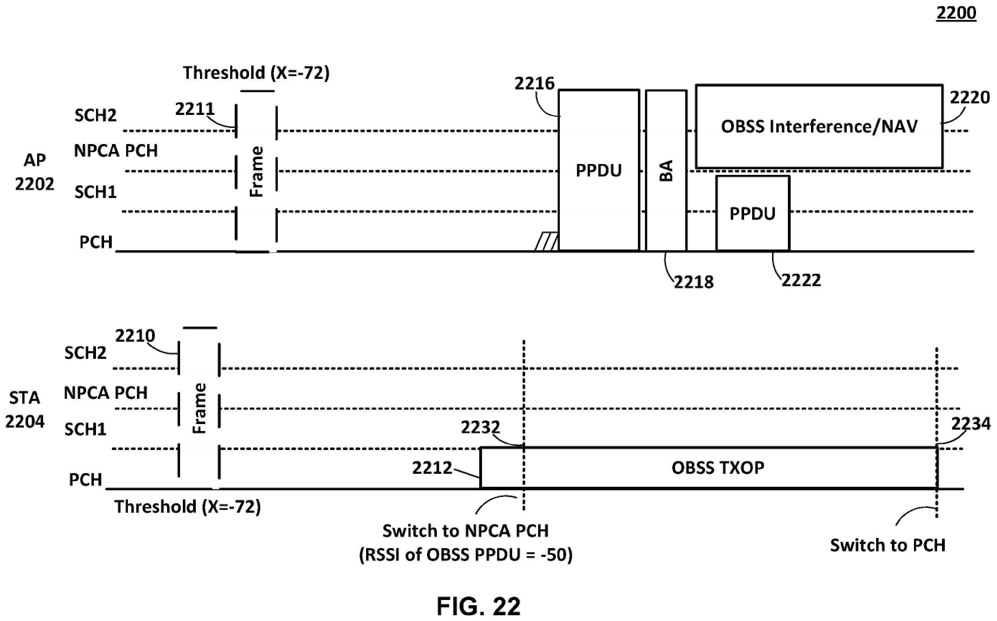

As disclosed herein in examples 1900 and 2000 and shown in FIGS. 19-20, STA 2104 may switch back from a NPCA PCH to a PCH after, or in response to, receiving a transmission, from AP 2102, on the PCH. As described herein in FIGS. 21 and 22, STA 2104 may use a threshold (e.g., a received signal strength indicator (RSSI) threshold), for an OBSS transmission, to determine whether to switch back from the NPCA PCH to the PCH (e.g., after, or in response to, receiving a sending (e.g., transmission) on the PCH if operating on the NPCA PCH, as disclosed herein for examples 1900 and 2000 shown in FIGS. 19-20). The signal strength of the OBSS transmission may indicate potential interference on the PCH, and may inform, for example, whether STA 2104 should switch back to the PCH (e.g., whether the OBSS transmission is likely to interfere with concurrent transmissions to, or from, STA 2104 on the PCH). This threshold may be pre-determined. The threshold may be negotiated between APs (e.g., between AP 2102 and one or more other APs), as part of a multi-AP coordination.

A threshold may be exchanged (or negotiated) between AP 2102 and STA 2104. AP 2102 and STA 2104 may exchange, for example, one or more frames to indicate the threshold. STA 2104 may send (e.g., transmit) a frame 2110 to AP 2102. Frame 2110 may indicate a threshold (e.g., an RSSI threshold) for switching from a NPCA PCH to a PCH. The threshold may be -72 dBm. AP 2102 may send (e.g., transmit) a frame 2111 indicating the threshold. AP 2102 may send (e.g., transmit) frame 2111 in response to receiving frame 2110 (e.g., indicating a same threshold or a different threshold from frame 2110), or may send (e.g., transmit) frame 2111 without receiving frame 2110. AP 2102 may send (e.g., transmit) a proposed threshold to STA 2104, for example, and STA 2104 may respond. AP 2102 may send (e.g., transmit) a proposed threshold to STA 2104, for example, without a response from STA 2104.

STA 2104 may detect a sending (e.g., transmission) of a frame from an OBSS if AP 2102 and STA 2104 operate on a PCH. STA 2104 may detect (e.g., at a time 2112) a frame (not shown) being sent (e.g., transmitted), for example, from an OBSS on a channel including the PCH. STA 2104 may determine that a PPDU received, or being received, via the PCH is an inter-BSS PPDU.

STA 2104 may be configured to set a NAV associated with a PCH based on receiving an OBSS frame on the PCH. A duration of a sending (e.g., transmission) on a PCH may be provided by a duration field of the frame, a TXOP field of an inter-BSS PPDU including the frame, or a length field of the inter-BSS PPDU. STA 2104 may set its NAV for the PCH based on the duration of the OBSS transmission on the PCH (e.g., an OBSS TXOP duration).

STA 2104 may be configured to switch to a NPCA PCH (e.g., at a time 2132) for a OBSS TXOP duration, in accordance with NPCA operation, based on receiving an inter-BSS PPDU and obtaining the OBSS NAV duration. Further, STA 2104 may measure a signal strength (e.g., an RSSI) for the OBSS transmission. As disclosed herein, STA 2104 may use a measured signal strength to determine whether to switch back from the NPCA PCH to the PCH, after, or in response to, receiving a sending (e.g., transmission) from AP 2102 on the PCH. The RSSI of the OBSS transmission may be -80 dBm.

AP 2102 may not detect a sending (e.g., transmission) of a frame from a OBSS that triggered STA 2104 to switch to the NPCA PCH. AP 2102 may not detect the frame being sent (e.g., transmitted) from the OBSS on the channel including the PCH, for example, due to channel conditions or AP 2102 being hidden from the OBSS STA. AP 2102 may be out of range of the OBSS transmission, for example, so may not detect the frame being sent (e.g., transmitted) from the OBSS on the channel including the PCH. Thus, AP 2102 may remain on the PCH through time 2132 and does not switch from the PCH to the NPCA PCH if STA 2104 switches from the PCH to the NPCA PCH.

AP 2102 may send (e.g., transmit) a PPDU 2116 to another STA in its BSS (e.g., a STA 2106, not shown). AP 2102 may send (e.g., transmit) PPDU 2116 on a channel including the PCH. AP 2102 may send (e.g., transmit) PPDU 2116, for example, on a channel including the PCH, SCH1, NPCA PCH, and SCH 2 (e.g., as disclosed herein in FIG. 15).

STA 2106 (not shown) may receive PPDU 2116, and may send (e.g., transmit) a BA 2118 after, or in response. STA 2106 may send (e.g., transmit) BA 2118 on a channel, for example, including the PCH, SCH1, NPCA PCH, and SCH2. AP 2102 may receive BA 2118 from STA 2106.

STA 2104 may also receive PPDU 2116. AP 2102 may send (e.g., transmit) PPDU 2116 on a channel, for example, including the NPCA PCH (e.g., along with the PCH, SCH1, and SCH2). As disclosed herein, STA 2104 may switch from the PCH to the NPCA PCH (e.g., at time 2132). STA 2104 may still receive PPDU 2116 via the NPCA PCH, even though STA 2104 may have switched from the PCH to the NPCA PCH, because AP 2102 may send (e.g., transmit) PPDU 2116 on the channel including the NPCA PCH.

STA 2104 may determine that PPDU 2116 may not be addressed to STA 2104. As disclosed herein in examples 1900 and 2000 shown in FIGS. 19-20, STA 2104 may determine, for example, that an identifier (e.g., a STA-ID or MAC address) included in PPDU 2116 does not match a corresponding identifier for STA 2104.

STA 2104 may determine that PPDU 2116 may have been sent (e.g., transmitted) by an AP with which STA 2104 is associated (e.g., AP 2102) and may determine that PPDU may have been sent (e.g., transmitted) on a channel including the PCH (e.g., in addition to the NPCA PCH). This is discussed herein, in examples 1900 and 2000 shown in FIGS. 19-20.

Further, STA 2104 may determine that a signal strength (e.g., the RSSI) of a OBSS transmission is less than a threshold, for example, the OBSS transmission that triggered STA 2104 to switch from the PCH to the NPCA PCH. The RSSI of the OBSS transmission, for example, as shown, is -80 and the threshold is -72. STA 2104 may switch from the NPCA PCH to the PCH (e.g., STA 2104 may switch back from the NPCA PCH to the PCH). STA 2104 may switch from the NPCA PCH to the PCH, for example, based on determining that PPDU 2116 is sent (e.g., transmitted) by the AP with which STA 2104 is associated (e.g., AP 2102) on a channel comprising the PCH, and based on determining that the signal strength of the OBSS transmission is lower than a threshold. STA 2104 may switch from the NPCA PCH to the PCH, for example, based on determining that PPDU 2116 is not addressed to STA 2104 (e.g., in addition to, or instead of, based on the condition(s) described above).

STA 2104 may switch from a NPCA PCH to a PCH upon determining that PPDU 2116 may have been sent (e.g., transmitted) by the AP with which STA 2104 may be associated (e.g., AP 2102) on a channel including the PCH and that the signal strength of the OBSS transmission is lower than a threshold. STA 2104 may switch, for example, from the NPCA PCH to the PCH at a time 2134. As disclosed herein, PPDU 2116 may comprise, and/or be, for example, an HT PPDU, a VHT PPDU, an HE PPDU, an EHT PPDU, a UHR PPDU, or a non-HT PPDU. STA 2104 may switch from the NPCA PCH to the PCH at a time 2134, for example, based on decoding only a part (e.g., preamble or one or more of MPDUs) of PPDU 2116.

STA 2104 may switch from a NPCA PCH to a PCH at a time determined based on a duration indicated in PPDU 2116. PPDU 2116 may indicate a duration, for example, sufficiently long to cover sending (e.g., transmission) of PPDU 2116. STA 2104 may switch from the NPCA PCH to the PCH prior to the end of the duration indicated in PPDU 2116 (e.g., at (or prior to or right after) the end of sending (e.g., transmission) of PPDU 2116 (e.g., similar to time 1934B as described herein in FIG. 19). STA 2104 may determine the duration indicated in PPDU 2116 based on a length field and a rate field indicated in PPDU 2116 (e.g., indicated in a preamble of PPDU 2116). The duration indicated in PPDU 2116 may be a length of PPDU 2116.

STA 2104 may switch from a NPCA PCH to a PCH at a time determined based on a TXOP obtained by the AP sending (e.g., transmitting) PPDU 2116 (e.g., AP 2102). AP 2102 may have obtained, for example, a TXOP sufficiently long to cover sending (e.g., transmission) of PPDU 2116 and sending (e.g., transmission) of a response (e.g., BA 2118). STA 2104 may switch from the NPCA PCH to the PCH prior to the end of the TXOP obtained by AP 2102. This switch may occur at a time related to the end of sending, for example, at, prior to, or right after the end of sending (e.g., transmission) of BA 2118, similar to time 1934C as described herein in FIG. 19. The TXOP duration may be indicated in a TXOP field of PPDU 2116. The TXOP duration may be indicated in a duration field of a frame carried in PPDU 2116.

AP 2102 may send (e.g., transmit) a PPDU 2122 to STA 2104. AP 2102 may send (e.g., transmit) a PPDU 2122 to STA 2104 after, or in response to, a switching. AP 2102 may send (e.g., transmit) PPDU 2122 on a channel including the PCH and SCH1. AP 2102 may send (e.g., transmit) PPDU 2122, to STA 2104, for example, if (or because) OBSS interference 2120 is occurring in AP 2102 (e.g., for the NPCA PCH and/or SCH2, as described herein in FIG. 21), and if STA 2104 is on the NPCA PCH.

STA 2104 may receive PPDU 2122. STA 2104 may have switched, for example, from a NPCA PCH back to a PCH (e.g., at one of times 2134A, 2134B, or 2134C), prior to AP 2102 sending (e.g., transmitting) PPDU 2122. STA 2104 may therefore receive PPDU 2122 on the PCH. STA 2104 may send (e.g., transmit) BA 2124 in response to receiving PPDU 2122. STA 2104 may send (e.g., transmit) BA 2124 on a channel including the PCH (e.g., a channel including the PCH and SCH1). Methods, apparatuses, and systems described herein may improve communication efficiency by improving switching between the NPCA PCH and PCH, thereby improving data sending (e.g., transmission) efficiency and reducing retries and overhead.

FIG. 22 shows an example of NPCA operation. NPCA operation 2200 is provided for the purpose of illustration only and is not limiting. As described herein in FIG. 22, NPCA operation 2200 may include an AP 2202 and a STA 2204. AP 2202 and STA 2204 are described for NPCA operation 2100 as AP 2102 and STA 2104 shown in FIG. 21, above.

Example NPCA operation 2200 may begin with AP 2202 and STA 2204 operating on a PCH of a BSS comprising AP 2202 and STA 2204. As described herein, a PCH may correspond to the default channel for the BSS and which the AP of the BSS (e.g., AP 2202) may use to send (e.g., transmit) management frames such as beacon frames.

STA 2204 may use a threshold (e.g., an RSSI threshold), for an OBSS transmission, to determine whether to switch back from a NPCA PCH to a PCH, for example, after, or in response to, receiving a sending (e.g., transmission) on the PCH if operating on the NPCA PCH. The signal strength of the OBSS transmission may indicate potential interference on the PCH, and may inform whether STA 2204 should switch back to the PCH, for example, whether the OBSS transmission is likely to interfere with concurrent transmissions to, or from, STA 2204 on the PCH.

A threshold may be pre-determined. The threshold may be negotiated between APs (e.g., between AP 2202 and one or more other APs), as part of a multi-AP coordination, or may be exchanged (or negotiated) between AP 2202 and STA 2204 (e.g., using one or more of frames 2210 and 2211). Frames 2210 and 2211 are further described herein for NPCA operation 2100 as frames 2110 and 2111 shown in FIG. 21. The threshold may be, for example, - 72 dBm.

STA 2204 may detect a sending (e.g., transmission) of a frame from an OBSS if AP 2202 and STA 2204 operate on a PCH. STA 2204 may detect (e.g., at a time 2212), for example, a frame (not shown) being sent (e.g., transmitted) from an OBSS on a channel including the PCH. STA 2204 may determine that a PPDU received, or being received, via the PCH is an inter-BSS PPDU.

STA 2204 may be configured to set a NAV associated with a PCH based on receiving a OBSS frame on the PCH. A duration of the sending (e.g., transmission) on the PCH may be provided by a duration field of the frame, a TXOP field of an inter-BSS PPDU including the frame, or a length field of the inter-BSS PPDU. STA 2204 may set its NAV for the PCH based on the duration of the OBSS transmission on the PCH (e.g., an OBSS TXOP duration).

STA 2204 may be configured to switch to a NPCA PCH (e.g., at a time 2232) for a OBSS TXOP duration, in accordance with NPCA operation, after, or in response to, receiving an inter-BSS PPDU and obtaining a OBSS NAV duration. Further, STA 2204 may measure a signal strength (e.g., an RSSI) for the OBSS transmission. As disclosed herein, STA 2204 may use this measured signal strength to determine whether to switch back from the NPCA PCH to the PCH, for example, after, or in response to, receiving a sending (e.g., transmission) from AP 2202 on the PCH. The RSSI of the OBSS transmission is -50dBm.

AP 2202 may not detect a sending (e.g., transmission) of a frame from a OBSS that triggered STA 2204 to switch to a NPCA PCH. AP 2202 may not detect, for example, the frame being sent (e.g., transmitted) from the OBSS on the channel including the PCH (e.g., due to channel conditions or AP 1902 being hidden from the OBSS STA). AP 2202 may be out of range of the OBSS transmission, for example, so may not detect the frame being sent (e.g., transmitted) from the OBSS on the channel including the PCH. Thus, AP 2202 may remain on the PCH through time 2232 and may not switch from the PCH to the NPCA PCH if STA 2204 does not switch from the PCH to the NPCA PCH.

AP 2202 may send (e.g., transmit) a PPDU 2216 to another STA in its BSS (e.g., a STA 2206, not shown). AP 2202 may send (e.g., transmit) PPDU 2216 on a channel including a PCH. AP 2202 may send (e.g., transmit) PPDU 2216, for example, on a channel including the PCH, SCH1, NPCA PCH, and SCH 2 (e.g., as disclosed herein in FIG. 15).

STA 2206 (not shown) may receive PPDU 2216, and may send (e.g., transmit) a BA 2218 in response. STA 2206 may send (e.g., transmit) BA 2218, for example, on a channel including the PCH, SCH1, NPCA PCH, and SCH2. AP 2202 may receive BA 2218 from STA 2206.

STA 2204 may also receive PPDU 2216. AP 2202 may send (e.g., transmit) PPDU 2216, for example, on a channel including a NPCA PCH (e.g., along with a PCH, SCH1, and SCH2). STA 2204 may switch from the PCH to the NPCA PCH (e.g., at time 2232). STA 2204 may still receive PPDU 2216 via the NPCA PCH, even though STA 2204 may have switched from the PCH to the NPCA PCH, because AP 2202 may send (e.g., transmit) PPDU 2216 on the channel including the NPCA PCH.

STA 2204 may determine that PPDU 2216 may not be addressed to STA 2204. STA 2204 may determine that an identifier (e.g., a STA-ID or MAC address) included in PPDU 2216 does not match a corresponding identifier for STA 2204 as disclosed herein in examples 1900 and 2000 shown in FIGS. 19-20.

STA 2204 may determine that PPDU 2216 may have been sent (e.g., transmitted) by an AP with which STA 2204 is associated (e.g., AP 2202) and may determine that PPDU may have been sent (e.g., transmitted) on a channel including a PCH (e.g., in addition to the NPCA PCH). This is discussed further herein in examples 1900 and 2000 shown in FIGS. 19-20.

Further, STA 2204 may determine a signal strength (e.g., a RSSI) of a OBSS transmission, for example, the OBSS transmission that triggered STA 2204 to switch from the PCH to the NPCA PCH. **In** example NPCA operation 2200, STA 2204 may determine that the RSSI of the OBSS transmission of (-50) is greater than the threshold (-72). Thus, STA 2204 does not switch from the NPCA PCH to the PCH.

AP 2202 may send (e.g., transmit) a PPDU 2222 to STA 2204. AP 2202 may send (e.g., transmit) a PPDU 2222 to STA 2204, for example, after, or in response to, a determination of signal strength. AP 2202 may send (e.g., transmit) PPDU 2222 on a channel including the PCH and SCH1. AP 2202 may send (e.g., transmit) PPDU 2222, to STA 2204, for example, if (or because) OBSS interference 2220 is occurring in AP 2202 (e.g., for the NPCA PCH and/or SCH2, as shown in FIG. 21), and if STA 2204 is on the NPCA PCH.

STA 2204 may not receive PPDU 2222, because STA 2204 may remain on a NPCA PCH, for example, STA 2204 did not switch back to a PCH after, or in response to, receiving PPDU 2216 because the signal strength of the OBSS transmission was greater than the threshold. STA 2204 may finally switch from the NPCA PCH back to the PCH at the end of the OBSS TXOP, at a time 2234. Methods, apparatuses, and systems described herein may improve communication efficiency by improving switching between the NPCA PCH and PCH, thereby improving data sending (e.g., transmission) efficiency and reducing retries and overhead.

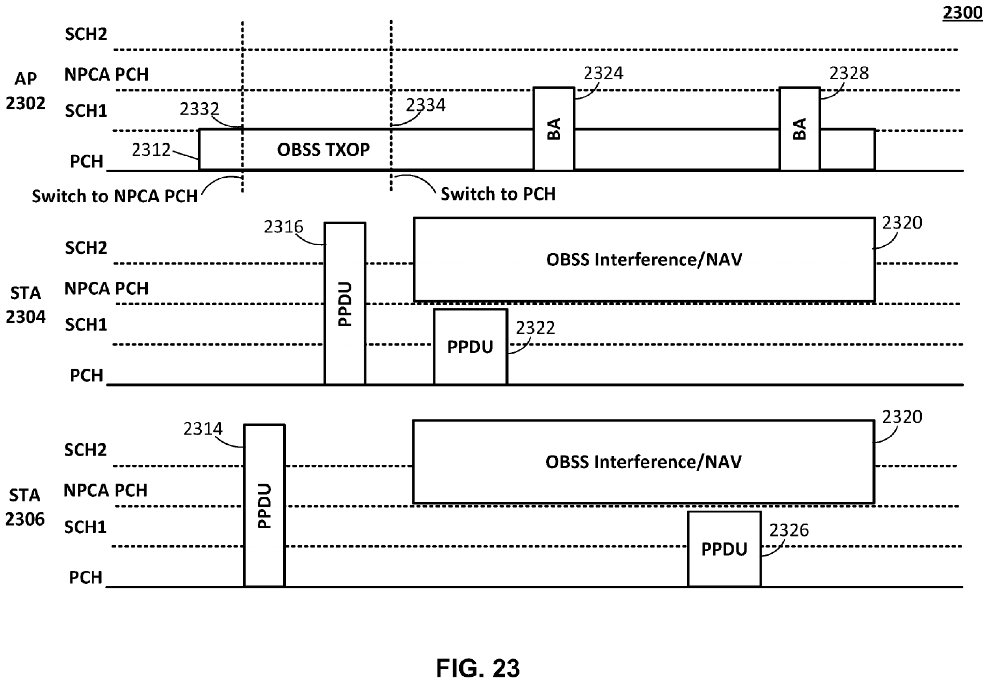

FIG. 23 shows an example of NPCA operation. NPCA operation 2300 is provided for the purpose of illustration only and is not limiting. NPCA operation 2300 may include an AP 2302, a STA 2304, and a STA 2306. In NPCA operation 2300, AP 1902, STA 1904, and STA 1906 may all support NPCA operation. As such, AP 2302 may comprise an NPCA AP. Similarly, STA 2304 and STA 2306 may comprise NPCA non-AP STAs. In accordance with NPCA operation, AP 2302 and STAs 2304 and 2306 may be configured to switch from the PCH to the NPCA PCH based on determining that a PPDU received, or being received, on the PCH comprises an inter-BSS PPDU.

Further, AP 2302 and STA 2304 may be configured to switch from a PCH to a NPCA PCH based on additional conditions (e.g., the bandwidth size of the inter-BSS PPDU, a duration indicated in the inter-BSS PPDU, such as a PPDU length or TXOP duration, or other suitable conditions). AP 2302 and STA 2304 may use these conditions in addition to, or in place of, inter-BSS PPDU detection, in determining whether to switch from the PCH to the NPCA PCH. AP 2302 and STA 2304 may be configured to switch, for example, from the PCH to the NPCA PCH based on a duration, indicated in the inter-BSS PPDU, that may be greater than a threshold (e.g., an NPCA Minimum Duration Threshold, as disclosed herein in FIG. 15). This is merely an example, and AP 2302 and STA 2304 may use any suitable condition(s) for switching operation from the PCH to the NPCA PCH (e.g., in addition to, or in place of, inter-BSS PPDU detection).

AP 2302 and/or STAs 2304 and 2306 may comprise a multi-link device (MLD). In example NPCA operation 2300, AP 2302 and STAs 2304 and 2306 belong to the same BSS. STAs 2304 and 2306 may be associated with AP 2302.

Example NPCA operation 2300 may begin with AP 2302, STA 2304, and STA 2306 operating on a PCH of a BSS comprising AP 2302, STA 2304, and STA 2306. As described herein, the PCH may correspond to the default channel for the BSS and which the AP of the BSS (e.g., AP 2302) may use to send (e.g., transmit) management frames such as beacon frames. AP 2302 may detect sending (e.g., transmission) of a frame from an OBSS if AP 2302 and STAs 2304 and 2306 operate on the PCH. AP 2302 may detect (e.g., at a time 2312) a frame (not shown) being sent (e.g., transmitted), for example, from an OBSS on a channel including the PCH. AP 2302 may determine that a PPDU received, or being received, via the PCH is an inter-BSS PPDU.

AP 2302 may be configured to set a NAV associated with a PCH based on receiving a OBSS frame on the PCH. A duration of the sending (e.g., transmission) on the PCH may be provided by a duration field of the frame, a TXOP field of an inter-BSS PPDU including the frame, or a length field of the inter-BSS PPDU. AP 2302 may set its NAV for the PCH based on the duration of the OBSS transmission on the PCH (e.g., an OBSS TXOP duration). In accordance with NPCA operation, AP 2302 may be configured to switch to the NPCA PCH (e.g., at a time 2332) for the OBSS TXOP duration, for example, after, or in response to, receiving an inter-BSS PPDU and obtaining the OBSS NAV duration, .

STA 2304 and STA 2306 both may not detect a sending (e.g., transmission) of a frame from a OBSS that triggered AP 2302 to switch to a NPCA PCH. STA 2304 and STA 2306 may not detect the frame being sent (e.g., transmitted) from the OBSS on the channel including the PCH, for example, due to channel conditions or STA 2304 and/or STA 2306 being hidden from the OBSS STA. STA 2304 and STA 2306 may be out of range of the OBSS transmission, for example, so may not detect the frame being sent (e.g., transmitted) from the OBSS on the channel including the PCH. Thus, STA 2304 and STA 2306 may remain on the PCH through time 2332 and may not switch from the PCH to the NPCA PCH if AP 2302 switches from the PCH to the NPCA PCH.

STA 2306 may send (e.g., transmit) a PPDU 2314 to AP 2302. STA 2306 may send (e.g., transmit) PPDU 2314 on a channel including the PCH. STA 2306 may send (e.g., transmit) PPDU 2314 on a channel, for example, including the PCH, SCH1, NPCA PCH, and SCH 2 (e.g., as disclosed herein in FIG. 15). AP 2302 may receive PPDU 2314. As shown, STA 2306 may send (e.g., transmit) PPDU 2314, for example, on a channel including a NPCA PCH (e.g., along with a PCH, SCH1, and SCH2). As disclosed herein, AP 2302 may switch from the PCH to the NPCA PCH (e.g., at time 2332). AP 2302 may still receive PPDU 2314 via the NPCA PCH, even though AP 2302 may have switched from the PCH to the NPCA PCH, because STA 2306 may send (e.g., transmit) PPDU 2314 on the channel including the NPCA PCH.

AP 2302 may determine that PPDU 2314 is not addressed to AP 2302. AP 2302 may determine, for example, that an identifier (e.g., a STA-ID or MAC address) included in PPDU 2314 does not match a corresponding identifier for AP 2302. As one example, PPDU 2314 may be a peer-to-peer communication from STA 2306 to another non-AP STA.

AP 2302 may determine that PPDU 2314 may have been sent (e.g., transmitted) by a STA with which AP 2302 is associated (e.g., STA 2306) and may determine that PPDU 2314 may have been sent (e.g., transmitted) on a channel including the PCH (e.g., in addition to the NPCA PCH).This is discussed further herein in examples 1900 and 2000 of FIGS. 19-20. AP 2302 may determine that PPDU 2314 may have been sent (e.g., transmitted) by a non-AP STA by decoding a UL/DL field of PPDU 2314, for example, if PPDU 2314 is an EHT(/HE/UHR) PPDU. The UL/DL field may indicate that PPDU 2314 is addressed to an AP, for example, the UL/DL field may be set to 1 to indicate that PPDU 2314 is addressed to an AP STA. AP 2302 may further determine that PPDU 2314 may have been sent (e.g., transmitted) by a STA associated with AP 2302, on a channel including the PCH, using the techniques described above for NPCA operation 1900 and 2000 shown in FIGS. 19 and 20.

AP 2302 may further determine whether all STAs associated with AP 2302 have sent (e.g., transmitted) a PPDU on a channel including a PCH, for example, if AP 2302 has been operating on the NPCA PCH. All STAs associated with AP 2302 may be NPCA non-AP STAs that enable an NPCA operation/mode, as described herein. AP 2302 may not have yet received a PPDU from STA 2304 on a channel including the PCH. Therefore AP 2302 may not switch from the NPCA PCH to the PCH after, or in response to, receiving PPDU 2314.

STA 2304 may send (e.g., transmit) a PPDU 2316 to AP 2302. STA 2304 may send (e.g., transmit) PPDU 2316 on a channel including a PCH. STA 2304 may send (e.g., transmit) PPDU 2316, for example, on a channel including the PCH, SCH1, NPCA PCH, and SCH 2 (e.g., as disclosed herein in FIG. 15).

AP 2302 may receive PPDU 2316. STA 2304 may send (e.g., transmit) PPDU 2316, for example, on a channel including a NPCA PCH (e.g., along with the PCH, SCH1, and SCH2). As disclosed herein, AP 2302 may switch from a PCH to the NPCA PCH (e.g., at time 2332). AP 2302 may still receive PPDU 2316 via the NPCA PCH, even though AP 2302 may have switched from the PCH to the NPCA PCH, because STA 2304 may send (e.g., transmit) PPDU 2316 on the channel including the NPCA PCH.

AP 2302 may determine that PPDU 2316 is not addressed to AP 2302. As disclosed herein in examples 1900 and 2000 shown in FIGS. 19-20, AP 2302 may determine, for example, that an identifier (e.g., a STA-ID or MAC address) included in PPDU 2316 does not match a corresponding identifier for AP 2302. PPDU 2316 may be a peer-to-peer communication, for example, from STA 2304 to another non-AP STA.

AP 2302 may determine that PPDU 2316 may have been sent (e.g., transmitted) by a STA with which AP 2302 is associated (e.g., STA 2304) and may determine that PPDU 2316 may have been sent (e.g., transmitted) on a channel including a PCH (e.g., in addition to a NPCA PCH). This is discussed further, above, in examples 1900 and 2000 shown in FIGS. 19-20. AP 2302 may determine that PPDU 2316 may have been sent (e.g., transmitted) by a non-AP STA by decoding a UL/DL field of PPDU 2316, for example, if PPDU 2316 is an EHT(/HE/UHR) PPDU. The UL/DL field may indicate that PPDU 2316 may be addressed to an AP, for example, the UL/DL field may be set to 1 to indicate that PPDU 2316 is addressed to an AP STA. AP 2302 may further determine that PPDU 2316 may have been sent (e.g., transmitted) by a STA associated with AP 2302, on a channel including the PCH, for example, using techniques described herein for NPCA operation 1900 and 2000 shown in FIGS. 19 and 20.

AP 2302 may further determine whether all STAs associated with AP 2302 may have sent (e.g., transmitted) a PPDU on a channel including the PCH, for example, if AP 2302 has been operating on the NPCA PCH). AP 2302 may receive PPDU 2314 from STA 2306, on a channel including the PCH, and AP 2302 may receive PPDU 2316 from STA 2304, on a channel including the PCH. Presuming STA 2304 and STA 2306 are the only STAs associated with AP 2302 (e.g., as shown) and presuming that STA 2304 and STA 2306 enable the NPCA mode/operation, AP 2302 may switch to/from the NPCA PCH to the PCH.

AP 2302 may switch from the NPCA PCH to the PCH after, or in response to, determining that all STAs associated with AP 2302 have sent (e.g., transmitted) a PPDU on a channel including the PCH. AP 2302 may switch, for example, from the NPCA PCH to the PCH at a time 2334.

AP 2302 may switch from a NPCA PCH to a PCH at a time determined based on a duration indicated in PPDU 2316. PPDU 2316 may indicate, for example, a duration sufficiently long to cover sending (e.g., transmission) of PPDU 2316. AP 2302 may switch from the NPCA PCH to the PCH prior to the end of the duration indicated in PPDU 2316, for example, prior to the end of sending (e.g., transmission) of PPDU 2316, at a time similar to time 1934B shown in FIG. 19. AP 2302 may determine the duration indicated in PPDU 2316 based on a length field and a rate field indicated in PPDU 2316 (e.g., indicated in a preamble of PPDU 2316).

AP 2302 may switch from a NPCA PCH to a PCH at a time determined based on a TXOP obtained by AP 2302. AP 2302 may have obtained, for example, a TXOP sufficiently long to cover sending (e.g., transmission) of a PPDU and sending (e.g., transmission) of a response by the recipient. AP 2302 may switch from the NPCA PCH to the PCH prior to the end of the TXOP obtained by AP 2302 (e.g., at a time similar to time 1934C shown in FIG. 19).

STA 2304 may send (e.g., transmit) a PPDU 2322 to AP 2302. STA 2304 may send (e.g., transmit) a PPDU 2322 to AP 2302, after, or in response, to the switch. STA 2304 may send (e.g., transmit) PPDU 2322 on a channel including the PCH and SCH1. STA 2304 may send (e.g., transmit) PPDU 2322, to AP 2302, for example, if (or because) OBSS interference 2320 is occurring in STA 2304 (e.g., for the NPCA PCH and/or SCH2, as shown in FIG. 23), and if AP 2302 is on the NPCA PCH.

AP 2302 may receive PPDU 2322. AP 2302 may have switched, for example, from a NPCA PCH back to a PCH (e.g., at time 2334), prior to STA 2304 sending (e.g., transmitting) PPDU 2322. AP 2302 may therefore receive PPDU 2322 on the PCH. AP 2302 may send (e.g., transmit) BA 2324 in response to receiving PPDU 2322. AP 2302 may send (e.g., transmit) BA 2324 on a channel including the PCH.

STA 2306 may then send (e.g., transmit) a PPDU 2326 to AP 2302. STA 2306 may send (e.g., transmit) PPDU 2326 on a channel including the PCH and SCH1. STA 2306 may send (e.g., transmit) PPDU 2326, to AP 2302, for example, if (or because) OBSS interference 2320 is occurring in STA 2306 (e.g., for the NPCA PCH and/or SCH2, as shown in FIG. 23), and if AP 2302 is on the NPCA PCH.

AP 2302 may receive PPDU 2326. AP 2302 may have switched, for example, from a NPCA PCH back to a PCH (e.g., at time 2334), prior to STA 2306 sending (e.g., transmitting) PPDU 2326. AP 2302 may therefore receive PPDU 2326 on the PCH. AP 2302 may send (e.g., transmit) BA 2328 after, or in response to, receiving PPDU 2326. AP 2302 may send (e.g., transmit) BA 2328 on a channel including the PCH.

Methods, apparatuses, and systems described herein may improve communication efficiency by improving switching between the NPCA PCH and PCH, thereby improving data sending (e.g., transmission) efficiency and reducing retries and overhead. As would be understood by a person of skill in the art based on the teachings herein, the methods, apparatuses, and systems described herein may be readily extended to implementations including more than one STA. As would be understood by a person of skill in the art based on the teachings herein, the methods, apparatuses, and systems described herein may be readily extended to implementations including more than one AP. As would be understood by a person of skill in the art based on the teachings herein, the methods, apparatuses, and systems described herein may be readily extended to scenarios in which any of the APs or any of the STAs may comprise a MLD, comprising at least one affiliated AP or affiliated STA.

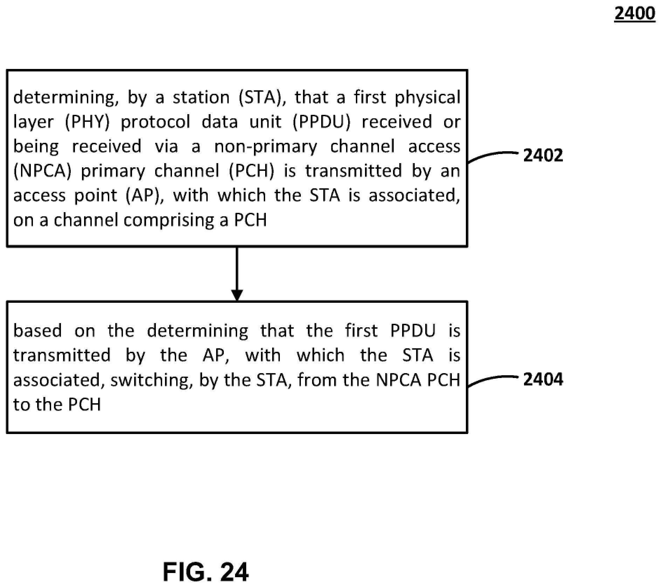

FIG. 24 shows an example for a STA to switch channels. Specifically, FIG. 24 shows an example for a STA to switch from a PCH to an NPCA PCH. STA PCH to NPCA PCH switch method 2400 may be performed by any suitable STA, for example, STA 1904, STA 2104, STA 2304, or STA 2306, shown in FIGS. 19-23. STA PCH to NPCA PCH switch method 2400 may include steps 2402 and 2404.

Step 2402 may include determining, by a station (STA), that a first physical layer (PHY) protocol data unit (PPDU) received, or being received, via a non-primary channel access (NPCA) primary channel (PCH) may have been sent (e.g., transmitted) by an access point (AP), with which the STA is associated, on a channel comprising a PCH. The AP may be any suitable AP, for example, AP 1902, AP 2102, or AP 2302, shown in FIGS. 19-23.

Step 2404 may include switching, by the STA, from the NPCA PCH to the PCH. Determining to switch, by the STA, from the NPCA PCH to the PCH, for example, may be based on the determining that the first PPDU is sent (e.g., transmitted) by the AP, with which the STA is associated, switching, by the STA, from the NPCA PCH to the PCH.

STA PCH to NPCA PCH switch method 2400 may further comprise switching, by the STA, from the PCH to the NPCA PCH. Determining whether to switch, for example, may be based on the determining that the second PPDU received, or being received, via the PCH is the inter-BSS PPDU.

Determining that the first PPDU received, or being received, via the NPCA PCH may have been sent (e.g., transmitted) by the AP, with which the STA is associated, on the channel comprising the PCH, may be after, or in response to, the switching, by the STA, from the PCH to the NPCA PCH. Switching, by a STA, from a NPCA PCH to a PCH may be further based on a second PPDU.

Switching, by a STA, from a NPCA PCH to a PCH may be further based on a received signal strength indicator (RSSI) of a second PPDU. Switching, by a STA, from a NPCA PCH to a PCH may be further based on the RSSI of a second PPDU being less than a threshold value. The threshold value may be pre-determined. STA PCH to NPCA PCH switch method 2400 may further comprise receiving the threshold value from the AP. STA PCH to NPCA PCH switch method 2400 may further comprise sending (e.g., transmitting) the threshold value to the AP. STA PCH to NPCA PCH switch method 2400 may further comprise receiving, by the STA from the AP, a frame on the PCH, after, or in response to, the switching, by the STA, from the NPCA PCH to the PCH.

STA PCH to NPCA PCH switch method 2400 may further comprise determining that a first PPDU may have been sent (e.g., transmitted) by an AP on the channel comprising a PCH, based on the first PPDU. Determining that a first PPDU may have been sent (e.g., transmitted) by an AP on the channel comprising a PCH, based on the first PPDU, may comprise determining a bandwidth for the first PPDU. Determining the bandwidth for the first PPDU may comprise determining a bandwidth size and a bandwidth location for the first PPDU. Determining the bandwidth for the first PPDU may comprise decoding a preamble of the first PPDU.

Decoding a preamble of a first PPDU may comprise decoding a universal signal (U-SIG) field of the first PPDU. Decoding the preamble of the first PPDU may comprise decoding a high-throughput signal (HT-SIG) field, a very high throughput (VHT-SIG) field, or a high efficiency signal (HE-SIG) field, of the first PPDU. Decoding the preamble of the first PPDU may comprise decoding a bandwidth (BW) field of the preamble of the first PPDU. Determining the bandwidth for the first PPDU may comprise decoding a service field of the first PPDU.

STA PCH to NPCA PCH switch method 2400 may further comprise determining that a STA may be associated with an AP, based on a first PPDU. Determining that the STA may be associated with the AP, based on the first PPDU, may comprise determining that the first PPDU may have been sent (e.g., transmitted) by the AP. Determining that the first PPDU may have been sent (e.g., transmitted) by the AP may comprise decoding an uplink (UL)/downlink (DL) field of the first PPDU, and the UL/DL field may indicate that the first PPDU is not addressed to an AP. Determining that the STA is associated with the AP, based on the first PPDU, may comprise determining a basic service set (BSS) of the AP based on the first PPDU. Determining the BSS of the AP, based on the first PPDU, may comprise decoding a BSS color field of the first PPDU.

Determining that a STA may be associated with an AP, based on a first PPDU, may comprise determining that a first BSS color in the BSS color field matches a second BSS color of a BSS of which the STA is a member. Determining that the STA is associated with the AP, based on the first PPDU, may comprise decoding a medium access control (MAC) address field in a MAC header of a frame carried by the first PPDU. The STA may switch, from the NPCA PCH to the PCH, upon determining that the first PPDU may have been sent (e.g., transmitted) by the AP, with which the STA is associated, on the channel comprising the PCH. The STA may switch from the NPCA PCH to the PCH, at a time determined based on a duration indicated in the first PPDU. The time may occur prior to an end of a time period calculated based on the duration.

STA PCH to NPCA PCH switch method 2400 may further include determining a duration based on a length field and a rate field of a preamble of a first PPDU. A STA may switch, from a NPCA PCH to a PCH, at a time determined based on a TXOP obtained by the AP. The time may occur prior to an end of a time period calculated based on the TXOP. The TXOP may be indicated in a TXOP field of the first PPDU or a duration field of a medium access control (MAC) protocol data unit (MPDU) comprised in the first PPDU. The PCH may comprise a primary 20 MHz channel, a primary 40 MHz channel, a primary 80 MHz channel, or a primary 160 MHz channel. The STA may be an NPCA STA. The NPCA STA may support NPCA operation.

STA PCH to NPCA PCH switch method 2400 may further include determining, by a STA, that a first PPDU is not addressed to the STA. The STA may determine that the first PPDU may not be addressed to the STA based on a station identifier (STA-ID) field of the first PPDU. The STA may determine that the first PPDU may not be addressed to the STA based on an address field in a MAC header of a frame carried by the first PPDU.

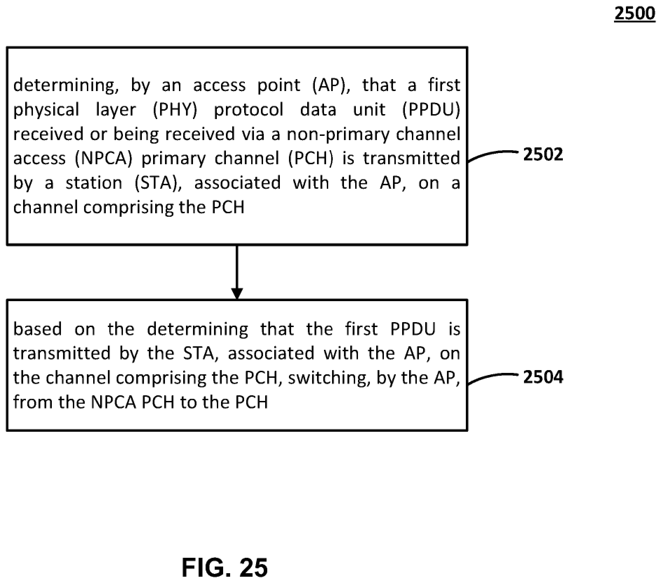

FIG. 25 shows an example for an AP to switch channels. Specifically, FIG. 25 shows an example for an AP to switch from a PCH to an NPCA PCH. AP PCH to NPCA PCH switch method 2500 may be performed by any suitable AP, for example, AP 1902, AP 2102, or AP 2302, shown in FIGS. 19-23. AP PCH to NPCA PCH switch method 2500 may include steps 2502 and 2504.

Step 2502 may include determining, by an access point (AP), that a first physical layer (PHY) protocol data unit (PPDU) received, or being received, via a non-primary channel access (NPCA) primary channel (PCH) may have been sent (e.g., transmitted) by a station (STA), associated with the AP, on a channel comprising the PCH. The STA may be any suitable STA, for example, STA 1904, STA 2104, STA 2304, or STA 2306, shown in FIGS. 19-23.

Step 2504 may include switching, by the AP, from the NPCA PCH to the PCH. Whether to switch, by the AP, from the NPCA PCH to the PCH may be based on the determining that the first PPDU is sent (e.g., transmitted) by the STA, associated with the AP, on the channel comprising the PCH.

AP PCH to NPCA PCH switch method 2500 may further comprise determining, by the AP and based on a plurality of PPDUs, that a plurality of STAs associated with the AP are sending (e.g., transmitting) a respective PPDU on the channel comprising the PCH, wherein the plurality of PPDUs may comprise the first PPDU and the plurality of STAs may comprise the STA. The plurality of STAs may comprise all STAs associated with the AP. The switching, by the AP, from the NPCA PCH to the PCH may be based on the determining, by the AP, that the plurality of STAs associated with the AP are sending (e.g., transmitting) the respective PPDUs on the channel comprising the PCH. The plurality of STAs may be NPCA STAs. The NPCA STAs may support NPCA operation.

AP PCH to NPCA PCH switch method 2500 may further comprise determining, by the AP, that a second PPDU received, or being received, via the PCH may be an inter-basic service set (inter-BSS) PPDU. AP PCH to NPCA PCH switch method 2500 may further comprise switching, by the AP, from the PCH to the NPCA PCH, based on the determining that the second PPDU received, or being received, via the PCH is the inter-BSS PPDU. The determining that the first PPDU received, or being received, via the NPCA PCH may have been sent (e.g., transmitted) by the STA, which is associated with the AP, on the channel comprising the PCH, may be after, or in response to, the switching, by the AP, from the PCH to the NPCA PCH.

Switching, by the AP, from the NPCA PCH to the PCH may be further based on the second PPDU. The switching, by the AP, from the NPCA PCH to the PCH may be further based on a received signal strength indicator (RSSI) of the second PPDU. The switching, by the AP, from the NPCA PCH to the PCH may be further based on the RSSI of the second PPDU being less than a threshold value. The threshold value may be pre-determined.

AP PCH to NPCA PCH switch method 2500 may further comprise receiving the threshold value from the STA. AP PCH to NPCA PCH switch method 2500 may further comprise sending (e.g., transmitting) the threshold value to the STA. An AP may send (e.g., transmit) the threshold value to another AP as part of a multi-AP coordination procedure. The AP may receive the threshold value from another AP as part of a multi-AP coordination procedure.

AP PCH to NPCA PCH switch method 2500 may further comprise receiving, by an AP from a STA and if a duration indicated in a first PPDU, a frame on the PCH, after, or in response to, the switching, by the AP, from the NPCA PCH to the PCH. AP PCH to NPCA PCH switch method 2500 may further comprise determining that the first PPDU may have been sent (e.g., transmitted) by the STA on the channel comprising the PCH, based on the first PPDU. The determining that the first PPDU may have been sent (e.g., transmitted) by the STA on the channel comprising the PCH, based on the first PPDU, may comprise determining a bandwidth for the first PPDU. The determining the bandwidth for the first PPDU may comprise determining a bandwidth size and a bandwidth location for the first PPDU. The determining the bandwidth for the first PPDU may comprise decoding a preamble of the first PPDU.

Decoding a preamble of a first PPDU may comprise decoding a universal signal (U-SIG) field of the first PPDU. Decoding the preamble of the first PPDU may comprise decoding a high-throughput signal (HT-SIG) field, a very high throughput (VHT-SIG) field, or a high efficiency signal (HE-SIG) field, of the first PPDU. Decoding the preamble of the first PPDU may comprise decoding a bandwidth (BW) field of the preamble of the first PPDU. Determining the bandwidth for the first PPDU may comprise decoding a service field of the first PPDU.

AP PCH to NPCA PCH switch method 2500 may further comprise determining that a STA may be associated with an AP, based on a first PPDU. The determining that the STA may be associated with the AP, based on the first PPDU, may comprise determining that the first PPDU may have been sent (e.g., transmitted) by the STA. The determining that the first PPDU may have been sent (e.g., transmitted) by the STA may comprise decoding an uplink (UL)/downlink (DL) field of the first PPDU, and the UL/DL field may indicate that the first PPDU is addressed to an AP. The determining that the STA is associated with the AP, based on the first PPDU, may comprise determining a basic service set (BSS) of the STA based on the first PPDU. The determining the BSS of the STA, based on the first PPDU, may comprise decoding a BSS color field of the first PPDU. The determining that the STA may be associated with the AP, based on the first PPDU, may comprise determining that a first BSS color in the BSS color field matches a second BSS color of a BSS of which the AP is a member. Determining that the STA is associated with the AP, based on the first PPDU, may comprise decoding a medium access control (MAC) address field in a MAC header of a frame carried by the first PPDU.

An AP may switch, from a NPCA PCH to a PCH, after, or in response to, determining that a first PPDU may have been sent (e.g., transmitted) by a STA, with which the AP is associated, on o channel comprising the PCH. The AP may switch, from the NPCA PCH to the PCH, at a time determined based on a duration indicated in the first PPDU. The time may occur prior to an end of a time period calculated based on the duration.

AP PCH to NPCA PCH switch method 2500 may further comprise determining a duration based on a length field and a rate field of a preamble of the first PPDU. The AP may switch, from the NPCA PCH to the PCH, at a time determined based on a TXOP obtained by the AP. The time may occur prior to an end of a time period calculated based on the TXOP. The TXOP may be indicated in a TXOP field of the first PPDU or a duration field of a medium access control (MAC) protocol data unit (MPDU) comprised in the first PPDU. The PCH may comprise a primary 20 MHz channel, a primary 40 MHz channel, a primary 80 MHz channel, or a primary 160 MHz channel. The STA may be an NPCA STA. The NPCA STA may support NPCA operation.

AP PCH to NPCA PCH switch method 2500 may further comprise determining, by an AP, that a first PPDU may not be addressed to the AP. The AP may determine that the first PPDU may not be addressed to the AP based on a station identifier (STA-ID) field of the first PPDU. The AP may determine that the first PPDU may not be addressed to the AP based on an address field in a MAC header of a frame carried by the first PPDU.

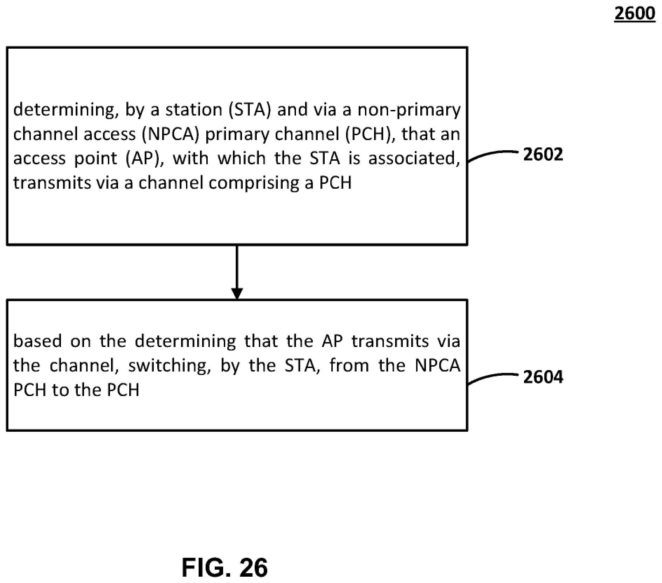

FIG. 26 shows an example for a station to switch channels. Specifically, FIG. 26 shows an example for a STA to switch from a NPCA PCH to a PCH. NPCA PCH to PCH switching method 2600 may be performed by any suitable STA, for example, STA 1904, STA 2104, STA 2304, or STA 2306, shown in FIGS. 19-23. NPCA PCH to PCH switching method 2600 may include steps 2602 and 2604.

Step 2602 may include determining, by a station (STA) and via a non-primary channel access (NPCA) primary channel (PCH), that an access point (AP), with which the STA may be associated, may send (e.g., transmit) via a channel comprising a PCH. The AP may be any suitable AP, for example, AP 1902, AP 2102, or AP 2302, shown in FIGS. 19-23.

Step 2604 may further include switching, by the STA, from the NPCA PCH to the PCH. Switching, by the STA, from the NPCA PCH to the PCH may be based on the determining that the AP may send (e.g., transmit) via the channel. The determining, by the STA, that the AP may send (e.g., transmit) via the channel comprising the PCH may further comprise receiving, by the STA from the AP, at least a portion of a first physical layer (PHY) protocol data unit (PPDU) via the channel comprising the PCH.

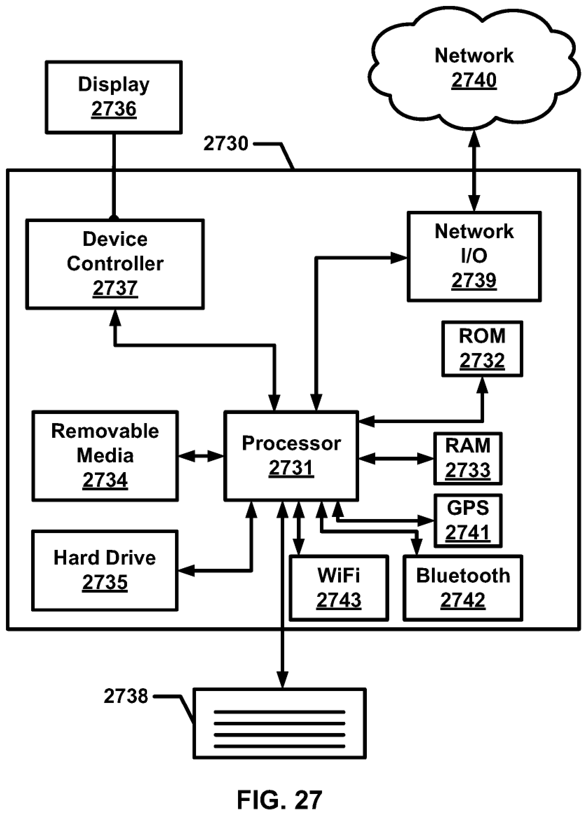

FIG. 27 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 210, 1202, 1204, 1304, 1306, 1804, 1806, 1904, 1906, 2104, 2106, 2304, 2306), an AP (e.g., 104-1, 104-2, 260, 1302, 1802, 1902, 2102, 2302), communication devices (e.g., 210, 260), and/or any computing and/or communication device described herein. The computing device 2730 may comprise one or more processors 2731, which may execute instructions stored in the random-access memory (RAM) 2733, the removable media 2734 (such as a Universal Serial Bus (USB) drive, compact disk (CD) or digital versatile disk (DVD), or floppy disk drive), or any other desired storage medium. Instructions may also be stored in an attached (or internal) hard drive 235. The computing device 2730 may also comprise a security processor (not shown), which may execute instructions of one or more computer programs to monitor the processes executing on the processor 2731 and any process that requests access to any hardware and/or software components of the computing device 2730 (e.g., ROM 2732, RAM 2733, the removable media 2734, the hard drive 2735, the device controller 2737, a network interface 2739, a GPS 2741, a Bluetooth interface 2742, a WiFi interface 2743, etc.). The computing device 2730 may comprise one or more output devices, such as the display 2736 (e.g., a screen, a display device, a monitor, a television, etc.), and may comprise one or more output device controllers 2737, such as a video processor. There may also be one or more user input devices 2738, such as a remote control, keyboard, mouse, touch screen, microphone, etc. The computing device 2730 may also comprise one or more network interfaces, such as a network interface 2739, which may be a wired interface, a wireless interface, or a combination of the two. The network interface 2739 may provide an interface for the computing device 2730 to communicate with a network 2740 (e.g., a RAN, or any other network). The network interface 2739 may comprise a modem (e.g., a cable modem), and the external network 2740 may comprise communication links, an external network, an in-home network, a provider's wireless, coaxial, fiber, or hybrid fiber/coaxial distribution system (e.g., a DOCSIS network), or any other desired network. Additionally, the computing device 2730 may comprise a location-detecting device, such as a global positioning system (GPS) microprocessor 2741, which may be configured to receive and process global positioning signals and determine, with possible assistance from an external server and antenna, a geographic position of the computing device 2730.

The example in FIG. 27 may be a hardware configuration, although the components shown may be implemented as software as well. Modifications may be made to add, remove, combine, divide, etc. components of the computing device 2730 as desired. Additionally, the components may be implemented using basic computing devices and components, and the same components (e.g., processor 2731, ROM storage 2732, display 2736, etc.) may be used to implement any of the other computing devices and components described herein. For example, the various components described herein may be implemented using computing devices having components such as a processor executing computer-executable instructions stored on a computer-readable medium, as shown in FIG. 27. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1.A method comprising: determining, by a station (STA), that a first physical layer (PHY) protocol data unit (PPDU) received or being received via a primary channel (PCH) is an inter-basic service set (inter-BSS) PPDU.

Clause 2. The method of clause 1, further comprising, based on the determining, switching, by the station, from the PCH to a non-primary channel access (NPCA) PCH.

Clause 3. The method of any one of clauses 1-2, further comprising, after switching to the NPCA PCH, determining, by the station, that a second PPDU received or being received via the NPCA PCH is sent by an access point (AP), with which the station is associated, on a channel comprising the PCH.

Clause 4. The method of any one of clauses 1-3, further comprising, based on the determining that the second PPDU is sent by the access point, with which the station is associated, on the channel comprising the PCH, switching, by the station, from the NPCA PCH to the PCH.

Clause 5. The method of any one of clauses 1-4, further comprising, receiving, by the station from the access point, a frame on the PCH.

Clause 6. A method comprising: determining, by a station (STA), that a first physical layer (PHY) protocol data unit (PPDU) received or being received via a non-primary channel access (NPCA) primary channel (PCH) is sent by an access point (AP), with which the station is associated, on a channel comprising a PCH.

Clause 7. The method of clause 6, further comprising, based on the determining that the first PPDU is sent by the access point, with which the station is associated, switching, by the station, from the NPCA PCH to the PCH.

Clause 8. The method of any one of clauses 6-7, further comprising determining, by the station, that a second PPDU received or being received via the PCH is an inter-basic service set (inter-BSS) PPDU.

Clause 9. The method of clause 8, further comprising switching, by the station, from the PCH to the NPCA PCH, based on the determining that the second PPDU received or being received via the PCH is the inter-BSS PPDU.

Clause 10.The method of clause 8, wherein the determining that the first PPDU received or being received via the NPCA PCH is sent by the access point, with which the station is associated, on the channel comprising the PCH, is after the switching, by the station, from the PCH to the NPCA PCH.

Clause 11. The method of any one of clauses 8-10, wherein the switching, by the station, from the NPCA PCH to the PCH is further based on the second PPDU.

Clause 12.The method of clause 11, wherein the switching, by the station, from the NPCA PCH to the PCH is further based on a received signal strength indicator (RSSI) of the second PPDU.

Clause 13.The method of clause 12, wherein the switching, by the station, from the NPCA PCH to the PCH is further based on the RSSI of the second PPDU being less than a threshold value.

Clause 14The method of clause 13, wherein the threshold value is pre-determined.

Clause 15.The method of any one of clauses 13-14, further comprising receiving the threshold value from the access point.

Clause 16.The method of any one of clauses 13-15, further comprising sending the threshold value to the access point.

Clause 17.The method of any one of clauses 6-16, further comprising receiving, by the station from the access point, a frame on the PCH, after the switching, by the station, from the NPCA PCH to the PCH.

Clause 18.The method of any one of clauses 6-17, further comprising determining that the first PPDU is sent by the access point on the channel comprising the PCH, based on the first PPDU.

Clause 19.The method of clause 18 wherein the determining that the first PPDU is sent by the access point on the channel comprising the PCH, based on the first PPDU, comprises determining a bandwidth for the first PPDU.

Clause 20.The method of clause 19, wherein the determining the bandwidth for the first PPDU comprises determining a bandwidth size and a bandwidth location for the first PPDU.

Clause 21The method of any one of clauses 19-20, wherein the determining the bandwidth for the first PPDU comprises decoding a preamble of the first PPDU.

Clause 22.The method of clause 21, wherein the decoding the preamble of the first PPDU comprises decoding a universal signal (U-SIG) field of the first PPDU.

Clause 23. The method of any one of clauses 21-22, wherein the decoding the preamble of the first PPDU comprises decoding a high-throughput signal (HT-SIG) field, a very high throughput (VHT-SIG) field, or a high efficiency signal (HE-SIG) field, of the first PPDU.

Clause 24. The method of any one of clauses 21-23, wherein the decoding the preamble of the first PPDU comprises decoding a bandwidth (BW) field of the preamble of the first PPDU.

Clause 25. The method of any one of clauses 19-20, wherein the determining the bandwidth for the first PPDU comprises decoding a service field of the first PPDU.

Clause 26. The method of any one of clauses 6-25, further comprising determining that the station is associated with the access point, based on the first PPDU.

Clause 27. The method of clause 26, wherein the determining that the station is associated with the access point, based on the first PPDU, comprises determining that the first PPDU is sent by the access point.

Clause 28. The method of clause 27, wherein the determining that the first PPDU is sent by the access point comprises decoding an uplink (UL)/downlink (DL) field of the first PPDU, and wherein the UL/DL field indicates that the first PPDU is not addressed to an access point.

Clause 29. The method of any one of clauses 26-28, wherein the determining that the station is associated with the access point, based on the first PPDU, comprises determining a basic service set (BSS) of the access point based on the first PPDU.

Clause 30. The method of clause 29, wherein the determining the BSS of the access point, based on the first PPDU, comprises decoding a BSS color field of the first PPDU.

Clause 31. The method of clause 30, wherein the determining that the station is associated with the access point, based on the first PPDU, comprises determining that a first BSS color in the BSS color field matches a second BSS color of a BSS of which the station is a member.

Clause 32. The method of any one of clauses 26-27, wherein the determining that the station is associated with the access point, based on the first PPDU, comprises decoding a medium access control (MAC) address field in a MAC header of a frame carried by the first PPDU.

Clause 33. The method of any one of clauses 6-32, wherein the station switches, from the NPCA PCH to the PCH, upon determining that the first PPDU is sent by the access point, with which the station is associated, on the channel comprising the PCH.

Clause 34. The method of any one of clauses 6-33, wherein the station switches, from the NPCA PCH to the PCH, at a time determined based on a duration indicated in the first PPDU.

Clause 35. The method of clause 34, wherein the time occurs prior to an end of a time period calculated based on the duration.

Clause 36. The method of any one of clauses 34-35, further comprising determining the duration based on a length field and a rate field of a preamble of the first PPDU.

Clause 37. The method of any one of clauses 6-36, wherein the station switches, from the NPCA PCH to the PCH, at a time determined based on a transmission opportunity (TXOP) obtained by the access point.

Clause 38. The method of clause 37, wherein the time occurs prior to an end of a time period calculated based on the TXOP.

Clause 39. The method of any one of clauses 37-38, wherein the TXOP is indicated in a TXOP field of the first PPDU or a duration field of a medium access control (MAC) protocol data unit (MPDU) comprised in the first PPDU.

Clause 40. The method of any one of clauses 6-39, wherein the PCH comprises a primary 20 MHz channel, a primary 40 MHz channel, a primary 80 MHz channel, or a primary 160 MHz channel.

Clause 41. The method of any one of clauses 6-40, wherein the station is an NPCA station.

Clause 42. The method of clause 41, wherein the NPCA station supports NPCA operation.

Clause 43. The method of any one of clauses 6-41, further comprising determining, by the station, that the first PPDU is not addressed to the station.

Clause 44. The method of clause 43, wherein the station determines that the first PPDU is not addressed to the station based on a station identifier (STA-ID) field of the first PPDU.

Clause 45. The method of clause 43, wherein the station determines that the first PPDU is not addressed to the station based on an address field in a MAC header of a frame carried by the first PPDU.

Clause 46. A method comprising: determining, by a station (STA) and via a non-primary channel access (NPCA) primary channel (PCH), that an access point (AP), with which the station is associated, transmits via a channel comprising a PCH.Clause 47. The method of clause 46, further comprising, based on the determining that the access point transmits via the channel, switching, by the station, from the NPCA PCH to the PCH.

Clause 48. The method of any one of clauses 46-47, wherein the determining, by the station, that the access point transmits via the channel comprising the PCH further comprises receiving, by the station from the access point, at least a portion of a first physical layer (PHY) protocol data unit (PPDU) via the channel comprising the PCH.

Clause 49. A station comprising one or more processors and memory storing instructions that, when executed by the one or more processors, cause the station to perform the method of any one of clauses 1-48.

Clause 50. A system comprising: a station configured to perform the method of any one of clauses 1-48, and an access point configured to send the first physical layer (PHY) protocol data unit (PPDU).

Clause 51. A computer-readable medium storing instructions that, when executed, cause performance of the method any one of clauses 1-48.

Clause 52. A method comprising: determining, by an access point (AP), that a first physical layer (PHY) protocol data unit (PPDU) received or being received via a primary channel (PCH) is an inter-basic service set (inter-BSS) PPDU.

Clause 53. The method of clause 52, further comprising, based on the determining, switching, by the access point, from the PCH to a non-primary channel access (NPCA) PCH.

Clause 54. The method of any one of clauses 52-53, further comprising, after switching to the NPCA PCH, determining, by the access point, that one or more second PPDUs received or being received via the NPCA PCH are sent by one or more NPCA stations (STAs), associated with the access point, on a channel comprising the PCH.

Clause 55. The method of any one of clauses 52-54, further comprising, based on the determining that the one or more second PPDUs are sent by the one or more NPCA stations, on the channel comprising the PCH, switching, by the access point, from the NPCA PCH to the PCH.

Clause 56. The method of any one of clauses 52-55, further comprising, receiving, by the access point from a first station of the one or more stations and during a duration indicated in the first PPDU, a frame on the PCH.

Clause 57.A method comprising determining, by an access point (AP), that a first physical layer (PHY) protocol data unit (PPDU) received or being received via a non-primary channel access (NPCA) primary channel (PCH) is sent by a station (STA), associated with the access point, on a channel comprising the PCH.

Clause 58. The method of clause 57, further comprising, based on the determining that the first PPDU is sent by the station, associated with the access point, on the channel comprising the PCH, switching, by the access point, from the NPCA PCH to the PCH.

Clause 59. The method of any one of clauses 57-58, further comprising determining, by the access point and based on a plurality of PPDUs, that a plurality of stations associated with the access point are sending a respective PPDU on the channel comprising the PCH, wherein the plurality of PPDUs comprises the first PPDU and the plurality of stations comprises the station.

Clause 60. The method of clause 59, wherein the plurality of stations comprises all stations associated with the access point.

Clause 61. The method of any one of clauses 59-60, wherein the switching, by the access point, from the NPCA PCH to the PCH is based on the determining, by the access point, that the plurality of stations associated with the access point are sending the respective PPDUs on the channel comprising the PCH.

Clause 62. The method of any one of clauses 59-61, wherein the plurality of stations are NPCA stations.

Clause 63. The method of clause 62, wherein the NPCA stations support NPCA operation.

Clause 64. The method of any one of clauses 57-63, further comprising determining, by the access point, that a second PPDU received or being received via the PCH is an inter-basic service set (inter-BSS) PPDU.

Clause 65. The method of clause 64, further comprising switching, by the access point, from the PCH to the NPCA PCH, based on the determining that the second PPDU received or being received via the PCH is the inter-BSS PPDU.

Clause 66. The method of clause 65, wherein the determining that the first PPDU received or being received via the NPCA PCH is sent by the station, which is associated with the access point, on the channel comprising the PCH, is after the switching, by the access point, from the PCH to the NPCA PCH.

Clause 67. The method of any one of clauses 57-66, wherein the switching, by the access point, from the NPCA PCH to the PCH is further based on the second PPDU.

Clause 68. The method of clause 67, wherein the switching, by the access point, from the NPCA PCH to the PCH is further based on a received signal strength indicator (RSSI) of the second PPDU.

Clause 69. The method of clause 68, wherein the switching, by the access point, from the NPCA PCH to the PCH is further based on the RSSI of the second PPDU being less than a threshold value.

Clause 70. The method of clause 69, wherein the threshold value is pre-determined.

Clause 71. The method of any one of clauses 69-70, further comprising receiving the threshold value from the station.

Clause 72. The method of any one of clauses 69-70, further comprising sending the threshold value to the station.

Clause 73. The method of any one of clauses 69-72, wherein the access point transmits the threshold value to another access point as part of a multi- access point coordination procedure.

Clause 74. The method of any one of clauses 69-72, wherein the access point receives the threshold value from another access point as part of a multi- access point coordination procedure.

Clause 75. The method of any one of clauses 57-74, further comprising receiving, by the access point from the station and during a duration indicated in the first PPDU, a frame on the PCH, after the switching, by the access point, from the NPCA PCH to the PCH.

Clause 76. The method of any one of clauses 57-75, further comprising determining that the first PPDU is sent by the station on the channel comprising the PCH, based on the first PPDU.

Clause 77. The method of clause 76 wherein the determining that the first PPDU is sent by the station on the channel comprising the PCH, based on the first PPDU, comprises determining a bandwidth for the first PPDU.

Clause 78. The method of clause 77, wherein the determining the bandwidth for the first PPDU comprises determining a bandwidth size and a bandwidth location for the first PPDU.

Clause 79. The method of any one of clauses 77-78, wherein the determining the bandwidth for the first PPDU comprises decoding a preamble of the first PPDU.

Clause 80. The method of clause 79, wherein the decoding the preamble of the first PPDU comprises decoding a universal signal (U-SIG) field of the first PPDU.

Clause 81. The method of clause 79, wherein the decoding the preamble of the first PPDU comprises decoding a high-throughput signal (HT-SIG) field, a very high throughput (VHT-SIG) field, or a high efficiency signal (HE-SIG) field, of the first PPDU.

Clause 82. The method of any one of clauses 79-81, wherein the decoding the preamble of the first PPDU comprises decoding a bandwidth (BW) field of the preamble of the first PPDU

Clause 83. The method of any one of clauses 77-78, wherein the determining the bandwidth for the first PPDU comprises decoding a service field of the first PPDU.

Clause 84. The method of any one of clauses 57-83, further comprising determining that the station is associated with the access point, based on the first PPDU.

Clause 85. The method of clause 84, wherein the determining that the station is associated with the access point, based on the first PPDU, comprises determining that the first PPDU is sent by the station.

Clause 86. The method of clause 85, wherein the determining that the first PPDU is sent by the station comprises decoding an uplink (UL)/downlink (DL) field of the first PPDU, and wherein the UL/DL field indicates that the first PPDU is addressed to an access point.

Clause 87. The method of any one of clauses 84-85, wherein the determining that the station is associated with the access point, based on the first PPDU, comprises determining a basic service set (BSS) of the station based on the first PPDU.

Clause 88. The method of clause 87, wherein the determining the BSS of the station, based on the first PPDU, comprises decoding a BSS color field of the first PPDU.

Clause 89. The method of clause 88, wherein the determining that the station is associated with the access point, based on the first PPDU , comprises determining that a first BSS color in the BSS color field matches a second BSS color of a BSS of which the access point is a member.

Clause 90. The method of any one of clauses 84-85, wherein the determining that the station is associated with the access point, based on the first PPDU, comprises decoding a medium access control (MAC) address field in a MAC header of a frame carried by the first PPDU.

Clause 91. The method of any one of clauses 57-90, wherein the access point switches, from the NPCA PCH to the PCH, upon determining that the first PPDU is sent by the station, with which the access point is associated, on the channel comprising the PCH.

Clause 92. The method of any one of clauses 57-90, wherein the access point switches, from the NPCA PCH to the PCH, at a time determined based on a duration indicated in the first PPDU.

Clause 93. The method of clause 92, wherein the time occurs prior to an end of a time period calculated based on the duration.

Clause 94. The method of any one of clauses 92-93, further comprising determining the duration based on a length field and a rate field of a preamble of the first PPDU.

Clause 95. The method of any one of clauses 57-93, wherein the access point switches, from the NPCA PCH to the PCH, at a time determined based on a transmission opportunity (TXOP) obtained by the access point.

Clauses 96. The method of clause 94, wherein the time occurs prior to an end of a time period calculated based on the TXOP.

Clause 97. The method of any one of clauses 94-95, wherein the TXOP is indicated in a TXOP field of the first PPDU or a duration field of a medium access control (MAC) protocol data unit (MPDU) comprised in the first PPDU.

Clause 98. The method of any one of clauses 57-97, wherein the PCH comprises a primary 20 MHz channel, a primary 40 MHz channel, a primary 80 MHz channel, or a primary 160 MHz channel.

Clause 99. The method of any one of clauses 57-98, wherein the station is an NPCA station.

Clause 100. The method of clause 99, wherein the NPCA station supports NPCA operation.

Clause 101. The method of any one of clause 57-99, further comprising determining, by the access point, that the first PPDU is not addressed to the access point.

Clause 102. The method of clause 94, wherein the access point determines that the first PPDU is not addressed to the access point based on a station identifier (STA-ID) field of the first PPDU.

Clause 103. The method of clause 94, wherein the access point determines that the first PPDU is not addressed to the access point based on an address field in a MAC header of a frame carried by the first PPDU.

Clause 104. An access point comprising one or more processors and memory storing instructions that, when executed by the one or more processors, cause the access point to perform the method of any one of clauses 52-103.

Clause 105. A system comprising: an access point configured to perform the method of any one of clauses 52-103, and a station configured to send the first physical layer (PHY) protocol data unit (PPDU).

Clause 106. A computer-readable medium storing instructions that, when executed, cause performance of the method any one of clauses 52-103.

Clause 107. A method comprising, switching, by a station, from a non-primary channel access (NPCA) primary channel (PCH) to a PCH based on a determination that a first physical layer (PHY) protocol data unit (PPDU) received, or being received, via the NPCA PCH is sent by an access point associated with the station on a channel comprising the PCH.

Clause 108. The method of clause 107, further comprising, receiving from the access point, a frame on the PCH.

Clause 109. The method of any one of clauses 107-108, further comprising, switching, by the station, from the PCH to the NPCA PCH, based on a determination that a second PPDU received, or being received, via the PCH is an inter-basic service set (inter-BSS PPDU).

Clause 110. The method of any one of clause 107-109, further comprising determining that the station is associated with the access point, based on the first PPDU.

Clause 111. The method of any one of clause 107-110, further comprising, determining that the first PPDU is sent by the access point on the channel comprising the PCH, based on the first PPDU.

Clause 112. The method of any one of clauses 107-111, further comprising: determining that the first PPDU is sent by the access point on the channel comprising the PCH, based on the first PPDU; and wherein: the determination that the first PPDU is sent by the access point comprises determining a bandwidth for the first PPDU; and the determining the bandwidth for the first PPDU comprises determining a bandwidth size and a bandwidth location for the first PPDU.

Clause 113. The method of any one of clauses 107-112, further comprising: determining that the first PPDU is sent by the access point on the channel comprising the PCH, based on the first PPDU; and wherein: the determination that the first PPDU is sent by the access point comprises determining a bandwidth for the first PPDU; and the determining the bandwidth for the first PPDU comprises decoding a preamble of the first PPDU.

Clause 114. A station comprising one or more processors and memory storing instructions that, when executed by the one or more processors, cause the access point to perform the method of any one of clauses 107-113.

Clause 115. A system comprising: a station configured to perform the method of any one of clauses 107-113, and an access point configured to send the first physical layer (PHY) protocol data unit (PPDU).

Clause 116. A computer-readable medium storing instructions that, when executed, cause performance of the method any one of clauses 107-113.

Clause 117. A method comprising, switching, by an access point, from a non-primary channel access (NPCA) primary channel (PCH) to a PCH based on a determination that a first physical layer (PHY) protocol data unit (PPDU) received, or being received, via the non-primary channel access (NPCA) primary channel (PCH) is sent by a station, associated with the access point, on a channel comprising the PCH.

Clause 118. The method of clause 117, further comprising, determining, by the access point and based on a plurality of PPDUs, that a plurality of stations associated with the access point are sending a respective PPDU on the channel comprising the PCH, wherein the plurality of PPDUs comprises the first PPDU and the plurality of stations comprises the station.

Clause 119. The method of any one of clauses 117-118, further comprising determining, by the access point, that a second PPDU received or being received via the PCH is an inter-basic service set (inter-BSS) PPDU.

Clause 120. The method of any one of clauses 117-119, wherein the switching, by the access point, from the NPCA PCH to the PCH is further based on a second PPDU.

Clause 121. The method of any one of clauses 117-120, further comprising receiving, by the access point from the station and during a duration indicated in the first PPDU, a frame on the PCH, after the switching, by the access point, from the NPCA PCH to the PCH.

Clause 122. An access point comprising one or more processors and memory storing instructions that, when executed by the one or more processors, cause the access point to perform the method of any one of clauses 117-121.

Clause 123. A system comprising: an access point configured to perform the method of any one of clauses 117-121, and a station configured to send the first physical layer (PHY) protocol data unit (PPDU).

Clause 124. A computer-readable medium storing instructions that, when executed, cause performance of the method any one of clauses 117-121.

Clause 125. A method comprising, switching, by a station, from a primary channel (PCH) to a non-primary channel access (NPCA) PCH based on a determination that a first physical layer (PHY) protocol data unit (PPDU) received, or being received, via the PCH is an inter-basic service set (inter-BSS) PPDU.

Clause 126. The method of clause 125, further comprising switching, from the NPCA PCH to the PCH based on a determination that a second PPDU received, or being received, via the NPCA PCH is sent by an access point, with which the station is associated, on a channel comprising the PCH.

Clause 127. The method of any one of clauses 125-126, further comprising, receiving, from the access point, a frame on the PCH.

Clause 128. The method of any one of clauses 125-127, further comprising determining, by the station, that the second PPDU received, or being received, via the PCH is an inter-basic service set (inter-BSS) PPDU.

Clause 129. The method of any one of clauses 125-128, wherein the switching, by the station, from the NPCA PCH to the PCH is further based on a received signal strength indicator (RSSI) of the second PPDU being less than a threshold value.

Clause 130. The method of any one of clauses 125-129, further comprising receiving a pre-determined threshold value from the access point; and wherein the switching, by the station, from the NPCA PCH to the PCH is further based on a received signal strength indicator (RSSI) of the second PPDU being less than the pre-determined threshold value.

Clause 131. The method of any one of clauses 125-130, further comprising sending a pre-determined threshold value to the access point; and wherein the switching, by the station, from the NPCA PCH to the PCH is further based on a received signal strength indicator (RSSI) of the second PPDU being less than a threshold value.

Clause 132. The method of any one of clauses 125-131, wherein the switching, by the access point, from the NPCA PCH to the PCH is further based on a received signal strength indicator (RSSI) of the second PPDU.

Clause 133. The method of any one of clauses 125-132, wherein the switching, by the access point, from the NPCA PCH to the PCH is further based on a received signal strength indicator (RSSI) of the second PPDU being less than a threshold value.

Clause 134. The method of any one of clauses 125-133, wherein the determining that the first PPDU is sent by the access point on the channel comprising the PCH, based on the first PPDU, comprises determining a bandwidth for the first PPDU.

Clause 135. The method of any one of clauses 125-134, further comprising determining that the station is associated with the access point, based on the first PPDU.

Clause 136. The method of any one of clauses 125-135, further comprising determining that the first PPDU is sent by the access point on the channel comprising the PCH, based on the first PPDU.

Clause 137. The method of any one of clauses 125-136, further comprising, determining that the first PPDU is sent by the access point on the channel comprising the PCH, based on the first PPDU; and wherein the determination that the first PPDU is sent by the access point comprises determining a bandwidth for the first PPDU and the determining the bandwidth for the first PPDU comprises decoding a preamble of the first PPDU.

Clause 138. A station comprising one or more processors and memory storing instructions that, when executed by the one or more processors, cause the station to perform the method of any one of clauses 125-137.

Clause 139. A system comprising: a station configured to perform the method of any one of clauses 125-137, and an access point configured to send the first physical layer (PHY) protocol data unit (PPDU).

Clause 140. A computer-readable medium storing instructions that, when executed, cause performance of the method any one of clauses 125-137.

A station may determine that a first physical layer (PHY) protocol data unit (PPDU) received or being received via a primary channel (PCH) is an inter-basic service set (inter-BSS) PPDU. The station may switch from the PCH to a non-primary channel access (NPCA) PCH. The station may switch from the PCH to a NPCA PCH, for example, based on the determining. The station may determine that a second PPDU received or being received via the NPCA PCH may be transmitted by an access point (AP), with which the station is associated, on a channel comprising the PCH after switching to the NPCA PCH. The station may switch from the NPCA PCH to the PCH, for example, based on determining that the second PPDU is transmitted by the access point, with which the station is associated, on the channel comprising the PCH. The station may receive from the access point a frame on the PCH. The station may comprise one or more processors and memory, storing instructions that, when executed by the one or more processors, perform the method described herein. A system may comprise the station configured to perform the described method, additional operations, and/or include additional elements; and a computing device configured to send the first PHY PPDU. A computer-readable medium may store instructions that, when executed, cause performance of the described method, additional operations, and/or include additional elements.

A station may determine that a first physical layer (PHY) protocol data unit (PPDU) received or being received via a non-primary channel access (NPCA) primary channel (PCH) may be transmitted by an access point (AP), with which the station is associated, on a channel comprising a PCH. The station may switch from the NPCA PCH to the PCH, for example, based on determining that the first PPDU is transmitted by the access point, with which the station is associated. The station may determine that a second PPDU received or being received via the PCH is an inter-basic service set (inter-BSS) PPDU. The station may switch from the PCH to the NPCA PCH, for example, based on determining that the second PPDU received or being received via the PCH is the inter-BSS PPDU. Determining that the first PPDU received or being received via the NPCA PCH may be transmitted by the access point, with which the station is associated, on the channel comprising the PCH, may be after switching from the PCH to the NPCA PCH. Switching from the NPCA PCH to the PCH, by the station, may be further based on the second PPDU. The station may receive, from the access point, a frame on the PCH, after switching from the NPCA PCH to the PCH. Switching from the NPCA PCH to the PCH, by the station, may be further based on a received signal strength indicator (RSSI) of the second PPDU. Switching from the NPCA PCH to the PCH, by the station, may be further based on the RSSI of the second PPDU being less than a threshold value. The threshold value may be pre-determined. The threshold value may be sent (e.g., transmitted) by the access point and received by the station. The station may send (e.g., transmit) the threshold value to the access point. The station may determine that the first PPDU may be transmitted by the access point on the channel comprising the PCH, for example, based on the first PPDU. Determining that the first PPDU may be transmitted by the access point on the channel comprising the PCH, and based on the first PPDU, may comprise determining a bandwidth for the first PPDU. Determining the bandwidth for the first PPDU may comprise determining a bandwidth size and a bandwidth location for the first PPDU. The station may determine that the bandwidth for the first PPDU comprises decoding a preamble of the first PPDU. Decoding the preamble of the first PPDU may comprise decoding a universal signal (U-SIG) field of the first PPDU. Decoding the preamble of the first PPDU may comprise decoding a high-throughput signal (HT-SIG) field, a very high throughput (VHT-SIG) field, or a high efficiency signal (HE-SIG) field, of the first PPDU. Decoding the preamble of the first PPDU may comprise decoding a bandwidth (BW) field of the preamble of the first PPDU. Determining the bandwidth for the first PPDU may comprise decoding a service field of the first PPDU. The station may determine that the station is associated with the access point, based on the first PPDU. Determining that the station may be associated with the access point, based on the first PPDU, may comprise determining that the first PPDU may be transmitted by the access point. Determining that the first PPDU may be transmitted by the access point may comprise decoding an uplink (UL)/downlink (DL) field of the first PPDU, and wherein the UL/DL field indicates that the first PPDU may not be addressed to an access point. Determining that the station may be associated with the access point, based on the first PPDU, may comprise determining a basic service set (BSS) of the access point based on the first PPDU. Determining the BSS of the access point, based on the first PPDU, may comprise decoding a BSS color field of the first PPDU. Determining that the station may be associated with the access point, based on the first PPDU, may comprise determining that a first BSS color in the BSS color field matches a second BSS color of a BSS of which the STA is a member. Determining that the station may be associated with the access point, based on the first PPDU, may comprise decoding a medium access control (MAC) address field in a MAC header of a frame carried by the first PPDU. The station may switch, from the NPCA PCH to the PCH, upon determining that the first PPDU may be transmitted by the access point, with which the station is associated, on the channel comprising the PCH. The station may switch, from the NPCA PCH to the PCH, at a time determined based on a duration indicated in the first PPDU. The time may occur prior to an end of a time period calculated based on the duration. The station may determine the duration based on a length field and a rate field of a preamble of the first PPDU. The station may switch, from the NPCA PCH to the PCH, at a time determined based on a transmission opportunity (TXOP) obtained by the access point. The time may occur prior to an end of a time period calculated based on the TXOP. The TXOP may be indicated in a TXOP field of the first PPDU or a duration field of a medium access control (MAC) protocol data unit (MPDU) comprised in the first PPDU. The PCH may comprise a primary 20 MHz channel, a primary 40 MHz channel, a primary 80 MHz channel, or a primary 160 MHz channel. The station may be an NPCA station. The NPCA station supports NPCA operation. The station may determine that the first PPDU may not be addressed to the station. The station may determine that the first PPDU may not be addressed to the station based on a station identifier (STA-ID) field of the first PPDU. The station may determine that the first PPDU may not be addressed to the station based on an address field in a MAC header of a frame carried by the first PPDU. The station may comprise one or more processors and memory, storing instructions that, when executed by the one or more processors, perform the method described herein. A system may comprise the station configured to perform the described method, additional operations, and/or include additional elements; and a computing device configured to send the first PHY PPDU. A computer-readable medium may store instructions that, when executed, cause performance of the described method, additional operations, and/or include additional elements.

A station may determine, via a non-primary channel access (NPCA) primary channel (PCH), that an access point (AP), with which the station may be associated, sends (e.g., transmits) data via a channel comprising a PCH. The station may switch from the NPCA PCH to the PCH, for example, based on determining that the access point transmits via the channel. The station determining that the access point transmits via the channel comprising the PCH may comprise receiving, by the station and from the access point, at least a portion of a first physical layer (PHY) protocol data unit (PPDU) via the channel comprising the PCH. The station may comprise one or more processors and memory, storing instructions that, when executed by the one or more processors, perform the method described herein. A system may comprise the station configured to perform the described method, additional operations, and/or include additional elements; and an access point configured to send the data. A computer-readable medium may store instructions that, when executed, cause performance of the described method, additional operations, and/or include additional elements.

An access point (AP) may determine that a first physical layer (PHY) protocol data unit (PPDU) received or being received via a primary channel (PCH) may be an inter-basic service set (inter-BSS) PPDU. The access point may switch from the PCH to a non-primary channel access (NPCA) PCH based on determining that the first PPDU is an inter-BSS PPDU. The access point may determine, after switching to the NPCA PCH, that one or more second PPDUs received or being received via the NPCA PCH may be transmitted by one or more NPCA stations (STAs), associated with the access point, on a channel comprising the PCH. The access point may switch from the NPCA PCH to the PCH, for example, based on determining that the one or more second PPDUs are transmitted by the one or more NPCA STAs, on the channel comprising the PCH. The access point may receive, from a first station of the one or more stations and during a duration indicated in the first PPDU, a frame on the PCH. The access point may comprise one or more processors and memory, storing instructions that, when executed by the one or more processors, perform the method described herein. A system may comprise the access point configured to perform the described method, additional operations, and/or include additional elements; and a computing device configured to send the first PHY PPDU. A computer-readable medium may store instructions that, when executed, cause performance of the described method, additional operations, and/or include additional elements.

An access point may determine that a first physical layer (PHY) protocol data unit (PPDU) received or being received via a non-primary channel access (NPCA) primary channel (PCH) may be transmitted by a station (STA), associated with the access point, on a channel comprising the PCH. The access point may switch from the NPCA PCH to the PCH, for example, based on determining that the first PPDU is transmitted by the station, associated with the access point, on the channel comprising the PCH. The access point may determine, based on a plurality of PPDUs, that a plurality of stations associated with the access point may be sending (e.g., transmitting) a respective PPDU on the channel comprising the PCH. The plurality of PPDUs may comprise the first PPDU and the plurality of stations may comprise the station. Switching, by the access point, from the NPCA PCH to the PCH may be based on determining, by the access point, that the plurality of stations associated with the access point are sending (e.g., transmitting) the respective PPDUs on the channel comprising the PCH. The access point may determine that a second PPDU received or being received via the PCH may be an inter-basic service set (inter-BSS) PPDU. The plurality of stations may comprise all stations associated with the access point. The plurality of stations may be NPCA stations. NPCA stations support NPCA operation. The access point may switch from the PCH to the NPCA PCH, based on determining that the second PPDU received or being received via the PCH is the inter-BSS PPDU. The access point may determine that the first PPDU received or being received via the NPCA PCH may be sent (e.g., transmitted) by the station, which may be associated with the access point, on the channel comprising the PCH, after switching from the PCH to the NPCA PCH. Switching, by the access point, from the NPCA PCH to the PCH may be based on the second PPDU. Switching, by the access point, from the NPCA PCH to the PCH may be based on a received signal strength indicator (RSSI) of the second PPDU. Switching, by the access point, from the NPCA PCH to the PCH may be based on the RSSI of the second PPDU being less than a threshold value. The threshold value may be pre-determined. The access point may receive the threshold value from the station. The access point may transmit the threshold value to the station. The access point may send (e.g., transmit) the threshold value to another access point as part of a multi-access point coordination procedure. The access point may receive the threshold value from another access point as part of a multi-access point coordination procedure. The access point may receive, from the station and during a duration indicated in the first PPDU, a frame on the PCH, after switching from the NPCA PCH to the PCH. The access point may determine that the first PPDU may be sent (e.g., transmitted) by the station on the channel comprising the PCH, based on the first PPDU. Determining that the first PPDU may be sent (e.g., transmitted) by the STA on the channel comprising the PCH, based on the first PPDU, may comprise determining a bandwidth for the first PPDU. Determining the bandwidth for the first PPDU may comprise determining a bandwidth size and a bandwidth location for the first PPDU. Determining the bandwidth for the first PPDU may comprise decoding a preamble of the first PPDU. Decoding the preamble of the first PPDU may comprise decoding a universal signal (U-SIG) field of the first PPDU. Decoding the preamble of the first PPDU may comprise decoding a high-throughput signal (HT-SIG) field, a very high throughput (VHT-SIG) field, or a high efficiency signal (HE-SIG) field, of the first PPDU. Decoding the preamble of the first PPDU may comprise decoding a bandwidth (BW) field of the preamble of the first PPDU. Determining the bandwidth for the first PPDU may comprise decoding a service field of the first PPDU. The access point may determine that the station may be associated with the access point, based on the first PPDU. Determining that the station may be associated with the access point, based on the first PPDU, may comprise determining that the first PPDU may be transmitted by the station. Determining that the first PPDU may be transmitted by the station may comprise decoding an uplink (UL)/downlink (DL) field of the first PPDU. The UL/DL field may indicate that the first PPDU may be addressed to an access point. Determining that the station is associated with the access point, based on the first PPDU, may comprise determining a basic service set (BSS) of the station based on the first PPDU. Determining the BSS of the station, based on the first PPDU, may comprise decoding a BSS color field of the first PPDU. Determining that the station may be associated with the access point, based on the first PPDU, may comprise determining that a first BSS color in the BSS color field matches a second BSS color of a BSS of which the access point may be a member. Determining that the station may be associated with the access point, based on the first PPDU, may comprise decoding a medium access control (MAC) address field in a MAC header of a frame carried by the first PPDU. The access point may switch from the NPCA PCH to the PCH upon determining that the first PPDU may be transmitted by the station, with which the access point may be associated, on the channel comprising the PCH. The access point may switch, from the NPCA PCH to the PCH, at a time determined based on a duration indicated in the first PPDU. The time may occur prior to an end of a time period calculated based on the duration. The access point may determine the duration based on a length field and a rate field of a preamble of the first PPDU. The access point may switch, from the NPCA PCH to the PCH, at a time determined based on a transmission opportunity (TXOP) that may be obtained by the access point. The time may occur prior to an end of a time period calculated based on the TXOP. The TXOP may be indicated in a TXOP field of the first PPDU or a duration field of a medium access control (MAC) protocol data unit (MPDU) comprised in the first PPDU. The PCH may comprise a primary 20 MHz channel, a primary 40 MHz channel, a primary 80 MHz channel, or a primary 160 MHz channel. The station may be an NPCA station. The NPCA station supports NPCA operation. The access point may determine that the first PPDU may not be addressed to the access point. The access point may determine that the first PPDU may not be addressed to the access point based on a station identifier (STA-ID) field of the first PPDU. The access point may determine that the first PPDU may not be addressed to the access point based on an address field in a MAC header of a frame carried by the first PPDU. The access point may comprise one or more processors and memory, storing instructions that, when executed by the one or more processors, perform the method described herein. A system may comprise the access point configured to perform the described method, additional operations, and/or include additional elements; and a computing device configured to send the first PHY PPDU. A computer-readable medium may store instructions that, when executed, cause performance of the described method, additional operations, and/or include additional elements.

A station may switch from a non-primary channel access (NPCA) primary channel (PCH) to a PCH based on a determination that a first physical layer (PHY) protocol data unit (PPDU) received, or being received, via the NPCA PCH is sent (e.g., transmitted) by an access point associated with the station on a channel comprising the PCH. The station may receive from the access point, a frame on the PCH. The station may switch from the PCH to the NPCA PCH, based on a determination that a second PPDU received, or being received, via the PCH is an inter-basic service set (inter-BSS PPDU). The station may determine that the station may be associated with the access point, for example, based on the first PPDU. The station may determine that the first PPDU may be sent (e.g., transmitted) by the access point on the channel comprising the PCH, based on the first PPDU. Determining that the first PPDU may be sent (e.g., transmitted) by the access point on the channel comprising the PCH, based on the first PPDU. The determination that the first PPDU may be sent (e.g., transmitted) by the access point may comprise determining a bandwidth for the first PPDU. Determining the bandwidth for the first PPDU may comprise determining a bandwidth size and a bandwidth location for the first PPDU. The station may determine that the first PPDU may be sent (e.g., transmitted) by the access point on the channel comprising the PCH, for example, based on the first PPDU. Determination that the first PPDU may be sent (e.g., transmitted) by the access point may comprise determining a bandwidth for the first PPDU. Determining the bandwidth for the first PPDU may comprise decoding a preamble of the first PPDU. The station may comprise one or more processors and memory, storing instructions that, when executed by the one or more processors, perform the method described herein. A system may comprise the station configured to perform the described method, additional operations, and/or include additional elements; and a computing device configured to send the first PHY PPDU. A computer-readable medium may store instructions that, when executed, cause performance of the described method, additional operations, and/or include additional elements.

An access point may switch from a non-primary channel access (NPCA) primary channel (PCH) to a PCH based on a determination that a first physical layer (PHY) protocol data unit (PPDU) received, or being received, via the non-primary channel access (NPCA) primary channel (PCH) is sent (e.g., transmitted) by a station, associated with the access point, on a channel comprising the PCH. The access point may determine, based on a plurality of PPDUs, that a plurality of stations associated with the access point may be sending (e.g., transmitting) a respective PPDU on the channel comprising the PCH. The plurality of PPDUs may comprise the first PPDU and the plurality of stations may comprise the station. The access point may determine that a second PPDU received or being received via the PCH may be an inter-basic service set (inter-BSS) PPDU. Switching, by the access point, from the NPCA PCH to the PCH may be further based on a second PPDU. The access point may receive from the station and during a duration indicated in the first PPDU, a frame on the PCH, after the switching, by the access point, from the NPCA PCH to the PCH. The access point may comprise one or more processors and memory, storing instructions that, when executed by the one or more processors, perform the method described herein. A system may comprise the access point configured to perform the described method, additional operations, and/or include additional elements; and a computing device configured to send the first PHY PPDU. A computer-readable medium may store instructions that, when executed, cause performance of the described method, additional operations, and/or include additional elements.

A station may switch from a primary channel (PCH) to a non-primary channel access (NPCA) PCH based on a determination that a first physical layer (PHY) protocol data unit (PPDU) received, or being received, via the PCH may be an inter-basic service set (inter-BSS) PPDU. The station may switch, from the NPCA PCH to the PCH based on a determination that a second PPDU received, or being received, via the NPCA PCH is sent (e.g., transmitted) by an access point, with which the station is associated, on a channel comprising the PCH. The station may receive from the access point, a frame on the PCH. The station may determine that the second PPDU received, or being received, via the PCH may be an inter-basic service set (inter-BSS) PPDU. Switching, by the station, from the NPCA PCH to the PCH may be further based on a received signal strength indicator (RSSI) of the second PPDU being less than a threshold value. The station may receive a pre-determined threshold value from the access point. Switching by the station, from the NPCA PCH to the PCH may be further based on a received signal strength indicator (RSSI) of the second PPDU being less than the pre-determined threshold value. The station may send a pre-determined threshold value to the access point. Switching, by the station, from the NPCA PCH to the PCH may be further based on a received signal strength indicator (RSSI) of the second PPDU being less than a threshold value. Switching, by the access point, from the NPCA PCH to the PCH may be further based on a received signal strength indicator (RSSI) of the second PPDU. Switching, by the access point, from the NPCA PCH to the PCH may be further based on a received signal strength indicator (RSSI) of the second PPDU being less than a threshold value. Determining that the first PPDU may be sent (e.g., transmitted) by the access point on the channel comprising the PCH, based on the first PPDU, may comprise determining a bandwidth for the first PPDU. Determining that the station may be associated with the access point, may be based on the first PPDU. Determining that the first PPDU may be sent (e.g., transmitted) by the access point on the channel comprising the PCH, may be based on the first PPDU. Determining that the first PPDU may be sent (e.g., transmitted) by the access point on the channel comprising the PCH, may be based on the first PPDU. Determination that the first PPDU may be sent (e.g., transmitted) by the access point may comprise determining a bandwidth for the first PPDU. Determining the bandwidth for the first PPDU may comprise decoding a preamble of the first PPDU. The station may comprise one or more processors and memory, storing instructions that, when executed by the one or more processors, perform the method described herein. A system may comprise the station configured to perform the described method, additional operations, and/or include additional elements; and a computing device configured to send the first PHY PPDU. A computer-readable medium may store instructions that, when executed, cause performance of the described method, additional operations, and/or include additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers, and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices, or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
switching, by a station, from a primary channel (PCH) to a non-primary channel access (NPCA) PCH based on a determination that a first physical layer (PHY) protocol data unit (PPDU) received, or being received, via the PCH is an inter-basic service set (inter-BSS) PPDU; and
switching, from the NPCA PCH to the PCH based on a determination that a second PPDU received, or being received, via the NPCA PCH is sent by an access point, with which the station is associated, on a channel comprising the PCH.

2. The method of claim 1, further comprising, receiving from the access point, a frame on the PCH.

3. The method of any one of claims 1-2, further comprising determining, by the station, that the second PPDU received, or being received, via the PCH is an inter-basic service set (inter-BSS) PPDU.

4. The method of any one of claims 1-3, wherein:
the switching, by the station, from the NPCA PCH to the PCH is further based on a received signal strength indicator (RSSI) of the second PPDU being less than a threshold value.

5. The method of any one of claims 1-4, further comprising:
receiving a pre-determined threshold value from the access point; and wherein:
the switching, by the station, from the NPCA PCH to the PCH is further based on a received signal strength indicator (RSSI) of the second PPDU being less than the pre-determined threshold value.

6. The method of any one of claims 1-5, further comprising:
sending a pre-determined threshold value to the access point; and wherein:
the switching, by the station, from the NPCA PCH to the PCH is further based on a received signal strength indicator (RSSI) of the second PPDU being less than a threshold value.

7. The method of any one of claims 1-6, wherein the switching, by the access point, from the NPCA PCH to the PCH is further based on a received signal strength indicator (RSSI) of the second PPDU.

8. The method of any one of claims 1-7, wherein the switching, by the access point, from the NPCA PCH to the PCH is further based on a received signal strength indicator (RSSI) of the second PPDU being less than a threshold value.

9. The method of any one of claims 1-8 wherein the determination that the second PPDU is sent by the access point on the channel comprising the PCH comprises determining a bandwidth for the second PPDU.

10. The method of any one of claims 1-9, further comprising determining, based on the first PHY PPDU, that the station is associated with the access point.

11. The method of any one of claims 1-10, further comprising:
determining, based on the first PHY PPDU, that the first PHY PPDU is sent by the access point on the channel comprising the PCH.

12. The method of any one of claims 1-11, further comprising:
determining, based on the first PHY PPDU, that the first PHY PPDU is sent by the access point on the channel comprising the PCH; and wherein:
the determination that the first PHY PPDU is sent by the access point comprises determining a bandwidth for the first PHY PPDU; and
the determining the bandwidth for the first PHY PPDU comprises decoding a preamble of the first PHY PPDU.

13. A station comprising:
one or more processors; and
memory storing instructions that, when executed by the one or more processors, cause the station to perform the method of any one of claims 1 to 12.

14. A system comprising:
a station configured to perform the method of any one of claims 1 to 12; and
an access point configured to send the first PHY PPDU.

15. A computer-readable medium storing instructions that, when executed, cause performance of the method of any one of claims 1 to 12.
